# EUROPEAN PATENT APPLICATION

(11) **EP 4 625 366 A1**
(43) Date of publication of application: **01.10.2025**
(21) Application number: 23926066.4
(22) Date of filing: 06.12.2023
(51) Int. Cl.: G06V 30/142, G06F 3/0488

(54) **TEXT RECOGNITION METHOD BASED ON TERMINAL DEVICE, AND DEVICE AND STORAGE MEDIUM**

(30) Priority: 06.03.2023 CN 202310252334
(71) Applicant: Honor Device Co., Ltd., Shenzhen, Guangdong 518040 (CN)
(72) Inventor: XU, Chaojin, Shenzhen, Guangdong 518040 (CN); YI, Jie, Shenzhen, Guangdong 518040 (CN); SHAO, Linhao, Shenzhen, Guangdong 518040 (CN); HUANG, Yufei, Shenzhen, Guangdong 518040 (CN); ZHOU, Yuanjia, Shenzhen, Guangdong 518040 (CN)
(74) Representative: Gill Jennings & Every LLP
(86) International application number: PCT/CN2023/136858
(87) International publication number: WO 2024/183372

(57) **Abstract**

Embodiments of this application provide a text recognition method based on a terminal device, a device, and a storage medium. The method includes: displaying a first interface; displaying a second button on the first interface when a first image in a preview stream is a document object; displaying a second interface in response to that the second button on the first interface is triggered, where the second interface displays a third button when a current frame image of the preview stream includes a target text, the second interface does not display the third button when the current frame image of the preview stream does not include the target text, and the third window displays a first button and a fourth button; displaying a third interface in response to that the third button on the second interface is triggered, where the fifth window displays a fifth button and at least one sixth button when the target text in the fourth window includes an entity; and displaying a fourth interface in response to that the first button on the second interface is triggered. **In** this way, a document scanning function and a text extraction function are provided, and the text in the image is promptly recognized.

## Description

This application claims priority to Chinese Patent Application No. 202310252334.7, entitled "TEXT RECOGNITION METHOD BASED ON TERMINAL DEVICE, DEVICE, AND STORAGE MEDIUM" filed with the China National Intellectual Property Administration on March 6, 2023, which is incorporated herein by reference in its entirety.

### TECHNICAL FIELD

This application relates to the field of terminal technologies, and in particular, to a text recognition method based on a terminal device, a device, and a storage medium.

### BACKGROUND

Terminal devices have become important tools in people's life. Terminal devices may be used to collect images and extract text information from images, so that users may obtain the text information.

Therefore, a solution that can promptly and rapidly obtain a text in an image is urgently needed, so as to avoid missing a text in a real-time image.

### SUMMARY

Embodiments of this application provide a text recognition method based on a terminal device, a device, and a storage medium, and are applied to the field of terminal technologies.

According to a first aspect, an embodiment of this application provides a text recognition method based on a terminal device, applied to a terminal device. The method includes:
displaying a first interface, where the first interface includes a first window, the first window displays a preview stream collected by the terminal device, and the first interface includes a first button;
displaying a second button on the first interface when an object category of a first image in the preview stream is a document object;
displaying a second interface in response to that the second button on the first interface is triggered, where the second interface includes a second window and a third window, the second window displays the preview stream collected by the terminal device, an outer frame of a document in a current frame image in the preview stream is highlighted, the second interface displays a third button when the current frame image of the preview stream includes a target text, the second interface does not display the third button when the current frame image of the preview stream does not include the target text, and the third window displays the first button and a fourth button;
displaying a third interface in response to that the third button on the second interface is triggered, where the third interface includes a fourth window and a fifth window, the third interface displays the third button, the fourth window displays a second image in the preview stream, the second image includes the highlighted target text, the fifth window displays a fifth button when the target text in the fourth window does not include an entity, the fifth window displays the fifth button and at least one sixth button when the target text in the fourth window includes an entity, and the sixth button is in a one-to-one correspondence with the entity in the target text in the fourth window; and
displaying a fourth interface in response to that the first button on the second interface is triggered, where the fourth interface displays a third image in the preview stream, an outer frame of a document in the third image on the fourth interface is highlighted, and the fourth interface includes a seventh button, an eighth button, and a ninth button.

In this way, a document scanning function and an image processing function are provided, and a word extraction function is provided.

In a possible implementation, after the displaying a third interface, the method further includes:
displaying the second interface in response to that the third button on the third interface is triggered.

In this way, a "text extraction button" is clicked to return to the interface of the preview stream.

In a possible implementation, after the displaying a fourth interface, the method further includes:
displaying a fifth interface in response to that the ninth button on the fourth interface is triggered, where the fifth interface displays the third image in the preview stream, and the fifth interface includes at least one image processing button.

In this way, an image processing function in document scanning is provided.

In a possible implementation, the method further includes:
displaying the third button on the first interface when the object category of the first image is a text object;
displaying the third interface in response to that the third button on the first interface is triggered, where the third interface includes the fourth window and the fifth window, the third interface displays the third button, the fourth window displays the second image in the preview stream, the second image includes the highlighted target text, the fifth window displays the fifth button when the target text in the fourth window does not include an entity, the fifth window displays the fifth button and at least one sixth button when the target text in the fourth window includes an entity, and the sixth button is in a one-to-one correspondence with the entity in the target text in the fourth window; and
displaying the first interface in response to that the third button on the third interface is triggered.

In this way, a word extraction function is provided. A user does not need to manually select a to-be-recognized text, so as to avoid that the text may instantly disappear and the user may not promptly select the target text and consequently misses the text. For example, in a PPT speech scenario of a conference, a speaker turns a page excessively quickly, and a viewfinder box of a mobile phone may not promptly select a target text. In this case, the text in the image can be promptly recognized. In addition, the user does not need to manually select the target text on the screen. This avoids that conflict with interaction of the camera occurs and consequently text recognition or image photographing is affected. In addition, learning costs of the user are reduced.

In a possible implementation, the method further includes:
displaying a seventh interface in response to that the third button on the first interface is triggered, where the seventh interface includes a seventh window, the seventh window displays the preview stream, the seventh window displays second prompt information, the seventh interface does not display the third button, and the seventh interface includes the first button.

In this way, when the target text in the image is recognized based on the third button, if the terminal device jitters and cannot obtain a normal image and an abnormal case occurs, the user may be prompted.

In a possible implementation, before the displaying the third button on the first interface when the object category of the first image is a text object, the method further includes: starting a super-macro mode and displaying a first icon on the first interface when determining that a distance between a camera of the terminal device and a physical object is less than a first threshold; and
the displaying the third button on the first interface when the object category of the first image is a text object includes: displaying the third button and skipping displaying the first icon on the first interface when the object category of the first image is the text object.

In this way, when the super-macro mode is triggered, the first icon may be first displayed, to prompt the user that the super-macro mode is entered. Then, if it is determined that the object category of the first image is the text object, the first icon is no longer displayed and the third button is displayed, to avoid location conflict between the first icon and the third button.

In a possible implementation, before the displaying the third button on the first interface when the object category of the first image is a text object, the method further includes: starting a super-macro mode when determining that a distance between a camera of the terminal device and a physical object is less than a first threshold; and
the displaying the third button on the first interface when the object category of the first image is a text object includes:
displaying the third button on the first interface at a first moment when the object category of the first image is the text object;
displaying a first icon and skipping displaying the third button on the first interface at a second moment, where the second moment is later than the first moment; and
displaying the third button and skipping displaying the first icon on the first interface at a third moment, where the third moment is later than the second moment.

In this way, when the super-macro mode is triggered, if it is determined that the object category of the first image is the text object, the third button is first displayed, and then the first icon is displayed and the third button is displayed. This avoids location conflict between the first icon and the third button, and prompts the user that the super-macro mode is entered. Then, the third button is displayed and the first icon is not displayed, to prompt the user that the text object is detected.

In a possible implementation, the third interface further includes a seventh button.

In a possible implementation, when a number of entities in the second image is greater than a preset number, a number of sixth buttons is the preset number minus 1, and the fifth window further displays a tenth button.

In a possible implementation, a distribution order of sixth buttons in the fifth window corresponds to a distribution order of the entities in the second image; or a distribution order of sixth buttons in the fifth window is determined in real time based on a user portrait or a user intention.

In a possible implementation, the sixth button corresponds to at least one function, the function has a priority, and the priority of the function is determined in real time based on a user portrait or a user intention; and the method further includes: invoking, in response to that the sixth button is triggered, a function with a highest priority that corresponds to the sixth button.

In this way, when the first button is triggered, the function with the highest priority that corresponds to the sixth button may be directly invoked. In this way, user operations are reduced.

In a possible implementation, an entity displayed in the fourth window on the third interface corresponds to at least one first option, the first option has a priority, and the priority of the first option is determined in real time based on a user portrait or a user intention; and the priority of the first option of the entity is in a one-to-one correspondence with a priority of a function of the sixth button corresponding to the entity; and
the method further includes: displaying, in the fourth window in response to that an entity in the fourth window is triggered, a first service menu corresponding to the entity; where the first service menu includes at least one first option, and first options in the first service menu are sorted according to priorities of the first options.

In this way, when the user triggers the text of the entity in the fourth window, first options ranked based on priorities may be provided for the user.

In a possible implementation, the method further includes:
displaying, in the fourth window in response to that a non-entity in the fourth window is triggered, a second service menu corresponding to the non-entity; where the second service menu includes at least one second option.

In a possible implementation, before the displaying a second button on the first interface when an object category of a first image in the preview stream is a document object, the method further includes: starting the super-macro mode and displaying the first icon on the first interface when a distance between the camera of the terminal device and a physical object is less than the first threshold; and
the displaying a second button on the first interface when an object category of a first image in the preview stream is a document object includes: displaying the second button and skipping displaying the first icon on the first interface when the object category of the first image in the preview stream is the document object.

In this way, when the super-macro mode is triggered, the first icon may be first displayed, to prompt the user that the super-macro mode is entered. Then, if it is determined that the object category of the first image is the document object, the first icon is no longer displayed and the second button is displayed, to avoid location conflict between the first icon and the second button.

In a possible implementation, before the displaying a second button on the first interface when an object category of a first image in the preview stream is a document object, the method further includes: starting the super-macro mode when a distance between the camera of the terminal device and a physical object is less than the first threshold; and
the displaying a second button on the first interface when an object category of a first image in the preview stream is a document object includes:
displaying the second button on the first interface at a first moment when the object category of the first image in the preview stream is the document object;
displaying the first icon and skipping displaying the second button on the first interface at a second moment; where the second moment is later than the first moment; and
displaying the second button and skipping displaying the first icon on the first interface at a third moment; where the third moment is later than the second moment.

In this way, when the super-macro mode is triggered, if it is determined that the object category of the first image is the document object, the second button is first displayed, and then the first icon is displayed and the second button is not displayed. This avoids location conflict between the first icon and the second button, and prompts the user that the super-macro mode is entered. Then, the second button is displayed and the first icon is not displayed, to prompt the user that the a document object is detected.

In a possible implementation, the second image in the preview stream includes a first region and a second region, the first region is a region formed by text blocks of the target text, and the second region is a peripheral region of the first region;
the second image displayed on the third interface includes the first region and does not include the second region; the text block of the target text in the first region of the second image displayed on the third interface is highlighted; and a background color of the text block of the target text in the second image in the preview stream is different from a background color of the text block of the target text in the second image displayed on the third interface.

In this way, a region without the target text may be removed, facilitating the user to view the target text.

In a possible implementation, the second image in the preview stream includes a first region and a second region, the first region is a region formed by text blocks of the target text, and the second region is a peripheral region of the first region;

the second image displayed on the third interface includes the first region and does not include the second region; the text block of the target text in the first region of the second image displayed on the third interface is highlighted; a background color of the text block of the target text in the second image in the preview stream is different from a background color of the text block of the target text in the second image displayed on the third interface; and a direction of the text block of the target text in the second image displayed on the third interface adapts to a direction of a screen of the terminal device.

In this way, a region without the target text may be removed, facilitating the user to view the target text. The direction of the text block adapts to the direction of the screen of the terminal device, so that it is convenient for the user to view the target text.

In a possible implementation, the second image in the preview stream includes at least one third region and a fourth region, and the third region is a region formed by text blocks of the target text; a distance between two third regions in at least one pair of adjacent third regions is greater than a preset distance; and the fourth region is a peripheral region of a region formed by the at least one third region; and
the second image displayed on the third interface includes the at least one third region and does not include the fourth region, and the text block of the target text in the second image displayed on the third interface is highlighted; each distance between adjacent third regions in the second image displayed on the third interface is less than the preset distance; and a background color of the text block of the target text in the second image in the preview stream is different from a background color of the text block of the target text in the second image displayed on the third interface.

In this way, a region without the target text may be removed, facilitating the user to view the target text.

In a possible implementation, the second image in the preview stream includes a fifth region and a sixth region, the fifth region is a region formed by text blocks of the target text and includes a background image, and the sixth region is a peripheral region of the fifth region; and
the second image displayed on the third interface includes the fifth region and does not include the sixth region, and the text block of the target text in the second image displayed on the third interface is highlighted.

In this way, a region without the target text may be removed, and the background image is reserved, so that the user can view the target text and the background of the text block.

In a possible implementation, the second image in the preview stream includes a first region and a second region, the first region is a region formed by text blocks of the target text, and the second region is a peripheral region of the first region; and directions of the text blocks of the target text in the second image in the preview stream include at least two different directions; and
the second image displayed on the third interface includes the first region and does not include the second region; the text block of the target text in the second image displayed on the third interface is highlighted; a background color of the text block of the target text in the second image in the preview stream is different from a background color of the text block of the target text in the second image displayed on the third interface; and directions of the text blocks of the target text in the second image displayed on the third interface include at least two different directions, or directions of the text blocks of the target text in the second image displayed on the third interface are the same.

In this way, a region without the target text may be removed, facilitating the user to view the target text.

In a possible implementation, the second image in the preview stream includes at least one third region and a fourth region, and the third region is a region formed by text blocks of the target text; a distance between two third regions in at least one pair of adjacent third regions is greater than a preset distance; the fourth region is a peripheral region of a region formed by the at least one third region; and directions of the text blocks of the target text in the second image in the preview stream include at least two different directions; and
the second image displayed on the third interface includes the at least one third region and does not include the fourth region, and the text block of the target text in the second image displayed on the third interface is highlighted; each distance between adjacent third regions in the second image displayed on the third interface is less than the preset distance; a background color of the text block of the target text in the second image in the preview stream is different from a background color of the text block of the target text in the second image displayed on the third interface; and directions of the text blocks of the target text in the second image displayed on the third interface are the same.

In this way, a region without the target text may be removed, facilitating the user to view the target text. The direction of the text block adapts to the direction of the screen of the terminal device, so that it is convenient for the user to view the target text.

In a possible implementation, the second image in the preview stream includes a fifth region and a sixth region, the fifth region is a region formed by text blocks of the target text and includes a background image, and the sixth region is a peripheral region of the fifth region; and directions of the text blocks of the target text in the second image in the preview stream include at least two different directions; and
the second image displayed on the third interface includes the fifth region and does not include the sixth region, and the text block of the target text in the second image displayed on the third interface is highlighted; and a background color of the text block of the target text in the second image in the preview stream is different from a background color of the text block of the target text in the second image displayed on the third interface.

In this way, a region without the target text may be removed, and the background image is reserved, so that the user can view the target text and the background of the text block.

In a possible implementation, in response to that a first location in the fourth window is triggered, an image in the fourth window is zoomed in with the first location as a center point at a first ratio at a fourth moment, and the first location is any location in the second image in the fourth window;
in response to that a second location in the fourth window is triggered, an image in the fourth window is zoomed in with the second location as a center point at a second ratio at a fifth moment, and the second location is any location in the second image in the fourth window; where the fifth moment is later than the fourth moment; and
in response to that a third location in the fourth window is triggered, an image in the fourth window is zoomed out to a size that is before the fourth moment at a sixth moment, and the third location is any location in the second image in the fourth window; where the sixth moment is later than the fifth moment.

In this way, the image is zoomed in, zoomed in, and then recovered, so that it is convenient for the user to view details of the image and the text.

In a possible implementation, in response to that a fourth location in the fourth window is triggered, an image in the fourth window is zoomed in with the fourth location as a center point at a third ratio at a seventh moment, and the fourth location is any location in the second image in the fourth window; and
in response to that a fifth location in the fourth window is triggered, a size of the image in the fourth window is recovered at an eighth moment, and the fifth location is any location in the second image in the fourth window; where the eighth moment is later than the seventh moment.

In this way, the image is zoomed in, and then recovered, so that it is convenient for the user to view details of the image and the text.

In a possible implementation, in response to that a first text block in the fourth window is triggered, an image in the fourth window is zoomed in at a ninth moment; where the longest text block in the zoomed-in image after the ninth moment reaches the edge of the screen of the terminal device; and
in response to that a sixth location in the fourth window is triggered, the image in the fourth window is recovered to an original image size of the image at a tenth moment, and the sixth location is any location in the second image in the fourth window; where the tenth moment is later than the ninth moment.

In this way, the text block is triggered, so that the image is zoomed in in a manner of the longest text block reaching the edge of the screen of the terminal device. Then, any location in the image is triggered to recover the image to the original image size.

In a possible implementation, in response to that a second text block in the fourth window is triggered, an image in the fourth window is zoomed in at an eleventh moment; where the second text block in the zoomed-in image after the eleventh moment reaches the edge of the screen of the terminal device;
in response to that a third text block in the fourth window is triggered, an image in the fourth window is zoomed in at a twelfth moment; where a length of the third text block is less than a length of the second text block, the third text block in the zoomed-in image after the twelfth moment reaches the edge of the screen of the terminal device, and the twelfth moment is later than the eleventh moment;
in response to that the third text block in the fourth window is triggered, the image in the fourth window is recovered to an image size that is before the twelfth moment at a thirteenth moment; where the second text block in the zoomed-out image after the thirteenth moment reaches the edge of the screen of the terminal device, and the thirteenth moment is later than the twelfth moment; and
in response to that a seventh location in the fourth window is triggered, the image in the fourth window is recovered to an original image size of the image at a fourteenth moment, where the seventh location has no target text, and the fourteenth moment is later than the eleventh moment.

In this way, the text block is zoomed in, so that it is convenient for the user to view details of the image and the text block.

In a possible implementation, after the displaying a fourth interface, the method further includes:
displaying, by the terminal device, the second interface in response to that the seventh button on the fourth interface is triggered.

In a possible implementation, after the displaying a fourth interface, the method further includes:
obtaining, by the terminal device, a frame image in the preview stream again in response to that the eighth button on the fourth interface is triggered.

According to a second aspect, an embodiment of this application provides a terminal device. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device includes: a processor and a memory, where the memory stores computer-executable instructions; and the processor executes the computer-executable instructions stored in the memory, to cause the terminal device to perform the method according to the first aspect.

According to a third aspect, an embodiment of this application provides a computer-readable storage medium, storing a computer program. When the computer program is executed by a processor, the method according to the first aspect is performed.

According to a fourth aspect, an embodiment of this application provides a computer program product including a computer program, where the computer program, when run, causes a computer to perform the method according to the first aspect.

According to a fifth aspect, an embodiment of this application provides a chip, including a processor, where the processor is configured to invoke a computer program in a memory to perform the method according to the first aspect.

It should be understood that, the technical solutions of the second aspect to the fifth aspect of this application correspond to that of the first aspect of this application, and the beneficial effects obtained by the aspects and the corresponding feasible implementations are similar, and details are not described again.

### BRIEF DESCRIPTION OF DRAWINGS

FIG. 1 is a schematic structural diagram of a terminal device 100;
FIG. 2 is a block diagram of a software structure of a terminal device 100 according to an embodiment of this application;
FIG. 3 is a first schematic flowchart of a text recognition method based on a terminal device according to an embodiment of this application;
FIG. 4 is a first schematic flowchart of detecting a content object of an image in a method according to an embodiment of this application;
FIG. 5 is a second schematic flowchart of detecting a content object of an image in a method according to an embodiment of this application;
FIG. 6A and FIG. 6B are a schematic diagram 1 of an interface according to an embodiment of this application;
FIG. 7A and FIG. 7B are a schematic diagram 2 of an interface according to an embodiment of this application;
FIG. 8A, FIG. 8B, FIG. 8C, and FIG. 8D are a schematic diagram 3 of an interface according to an embodiment of this application;
FIG. 9A, FIG. 9B, FIG. 9C, and FIG. 9D are a schematic diagram 4 of an interface according to an embodiment of this application;
FIG. 10A, FIG. 10B, FIG. 10C, and FIG. 10D are a schematic diagram 5 of an interface according to an embodiment of this application;
FIG. 11A, FIG. 11B, FIG. 11C, FIG. 11D, and FIG. 11E are a schematic diagram 6 of an interface according to an embodiment of this application;
FIG. 12A, FIG. 12B, FIG. 12C, and FIG. 12D are a schematic diagram 7 of an interface according to an embodiment of this application;
FIG. 13A, FIG. 13B, FIG. 13C, FIG. 13D, and FIG. 13E are a schematic diagram 8 of an interface according to an embodiment of this application;
FIG. 14A, FIG. 14B, FIG. 14C, FIG. 14D, FIG. 14E, FIG. 14F, and FIG. 14G are a schematic diagram 9 of an interface according to an embodiment of this application;
FIG. 15A, FIG. 15B, FIG. 15C, FIG. 15D, and FIG. 15E are a schematic diagram 10 of an interface according to an embodiment of this application;
FIG. 16A, FIG. 16B, FIG. 16C, and FIG. 16D are a schematic diagram 11 of an interface according to an embodiment of this application;
FIG. 17A, FIG. 17B, FIG. 17C, and FIG. 17D are a schematic diagram 12 of an interface according to an embodiment of this application;
FIG. 18A, FIG. 18B, FIG. 18C, and FIG. 18D are a schematic diagram 13 of an interface according to an embodiment of this application;
FIG. 19A, FIG. 19B, FIG. 19C, and FIG. 19D are a schematic diagram 14 of an interface according to an embodiment of this application;
FIG. 20A and FIG. 20B are a schematic diagram 15 of an interface according to an embodiment of this application;
FIG. 21A and FIG. 21B are a schematic diagram 16 of an interface according to an embodiment of this application;
FIG. 22A, FIG. 22B, and FIG. 22C are a schematic diagram 17 of an interface according to an embodiment of this application;
FIG. 23A, FIG. 23B, and FIG. 23C are a schematic diagram 18 of an interface according to an embodiment of this application;
FIG. 24A, FIG. 24B, FIG. 24C, and FIG. 24D are a schematic diagram 19 of an interface according to an embodiment of this application;
FIG. 25A, FIG. 25B, and FIG. 25C are a schematic diagram 20 of an interface according to an embodiment of this application;
FIG. 26A, FIG. 26B, FIG. 26C, and FIG. 26D are a schematic diagram 21 of an interface according to an embodiment of this application;
FIG. 27A, FIG. 27B, and FIG. 27C are a schematic diagram 22 of an interface according to an embodiment of this application;
FIG. 28 is a schematic diagram 23 of an interface according to an embodiment of this application;
FIG. 29 is a schematic diagram 24 of an interface according to an embodiment of this application;
FIG. 30 is a schematic diagram 25 of an interface according to an embodiment of this application;
FIG. 31 is a schematic diagram 26 of an interface according to an embodiment of this application;
FIG. 32A, FIG. 32B, FIG. 32C, and FIG. 32D are a schematic diagram 27 of an interface according to an embodiment of this application;
FIG. 33A, FIG. 33B, FIG. 33C, and FIG. 33D are a schematic diagram 28 of an interface according to an embodiment of this application;
FIG. 34A, FIG. 34B, FIG. 34C, and FIG. 34D are a schematic diagram 29 of an interface according to an embodiment of this application;
FIG. 35A, FIG. 35B, FIG. 35C, and FIG. 35D are a schematic diagram 30 of an interface according to an embodiment of this application;
FIG. 36 is a schematic diagram 31 of an interface according to an embodiment of this application;
FIG. 37 is a schematic diagram 32 of an interface according to an embodiment of this application;
FIG. 38 is a schematic diagram 33 of an interface according to an embodiment of this application;
FIG. 39 is a schematic diagram 34 of an interface according to an embodiment of this application;
FIG. 40 is a schematic diagram 35 of an interface according to an embodiment of this application;
FIG. 41 is a schematic diagram 36 of an interface according to an embodiment of this application;
FIG. 42 is a schematic diagram 37 of an interface according to an embodiment of this application;
FIG. 43 is a schematic diagram 38 of an interface according to an embodiment of this application;
FIG. 44 is a schematic diagram 39 of an interface according to an embodiment of this application;
FIG. 45 is a schematic diagram 40 of an interface according to an embodiment of this application;
FIG. 46 is a schematic diagram 41 of an interface according to an embodiment of this application;
FIG. 47 is a schematic diagram 42 of an interface according to an embodiment of this application;
FIG. 48 is a schematic diagram 43 of an interface according to an embodiment of this application;
FIG. 49 is a schematic diagram 44 of an interface according to an embodiment of this application;
FIG. 50 is a schematic diagram 45 of an interface according to an embodiment of this application;
FIG. 51 is a schematic diagram of a software layer of a terminal device according to an embodiment of this application;
FIG. 52 is a second schematic flowchart of a text recognition method based on a terminal device according to an embodiment of this application;
FIG. 53A, FIG. 53B, FIG. 53C, and FIG. 53D are a schematic diagram 46 of an interface according to an embodiment of this application;
FIG. 54 is a third schematic flowchart of a text recognition method based on a terminal device according to an embodiment of this application;
FIG. 55A, FIG. 55B, FIG. 55C, and FIG. 55D are a schematic diagram 47 of an interface according to an embodiment of this application;
FIG. 56A, FIG. 56B, FIG. 56C, and FIG. 56D are a schematic diagram 48 of an interface according to an embodiment of this application;
FIG. 57 is a schematic structural diagram of a chip according to an embodiment of this application; and
FIG. 58 is a schematic structural diagram of a terminal device according to an embodiment of this application.

### DESCRIPTION OF EMBODIMENTS

For ease of clearly describing the technical solutions in the embodiments of this application, in the embodiments of this application, a term such as "exemplary" or "for example" is used to represent giving an example, an illustration, or a description. Any embodiment or design scheme described as an "exemplary" or "for example" in this application should not be explained as being more preferred or having more advantages than another embodiment or design scheme. Exactly, use of the term such as "exemplary" or "for example" is intended to present a related concept in a specific manner.

In the embodiments of this application, "at least one" means one or more, and "plurality of" means two or more. "And/or" describes an association relationship between associated objects, and represents that there may be three relationships. For example, A and/or B may represent three cases: only A exists, both A and B exist, and only B exists, where A and B may be singular or plural. The character "/" generally indicates an "or" relationship between the associated objects. "At least one of the following items (pieces)" or a similar expression indicates any combination of these items, including any combination of a singular item (piece) or plural items (pieces). For example, at least one of a, b, or c may represent: a, b, c, a-b, a-c, b-c, or a-b-c, where a, b, and c may be singular or plural.

It should be noted that, in the embodiments of this application, "when..." may be an instantaneous occurrence time of a case, or may be a period of time after occurrence of a case. This is not specifically limited in the embodiments of this application. In addition, a display interface provided in the embodiments of this application is only used as an example, and the display interface may further include more or less content.

Terminal devices have become important tools in people's life. Terminal devices may be used to collect images and extract text information from images, so that users may obtain the text information.

Therefore, a solution that can promptly and rapidly obtain a text in an image is urgently needed, so as to avoid missing a text in a real-time image.

The electronic device includes a terminal device. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. The embodiments of this application impose no limitation on a specific technology and a specific device form used by the terminal device.

To better understand the embodiments of this application, the following describes a structure of the terminal device in the embodiments of this application.

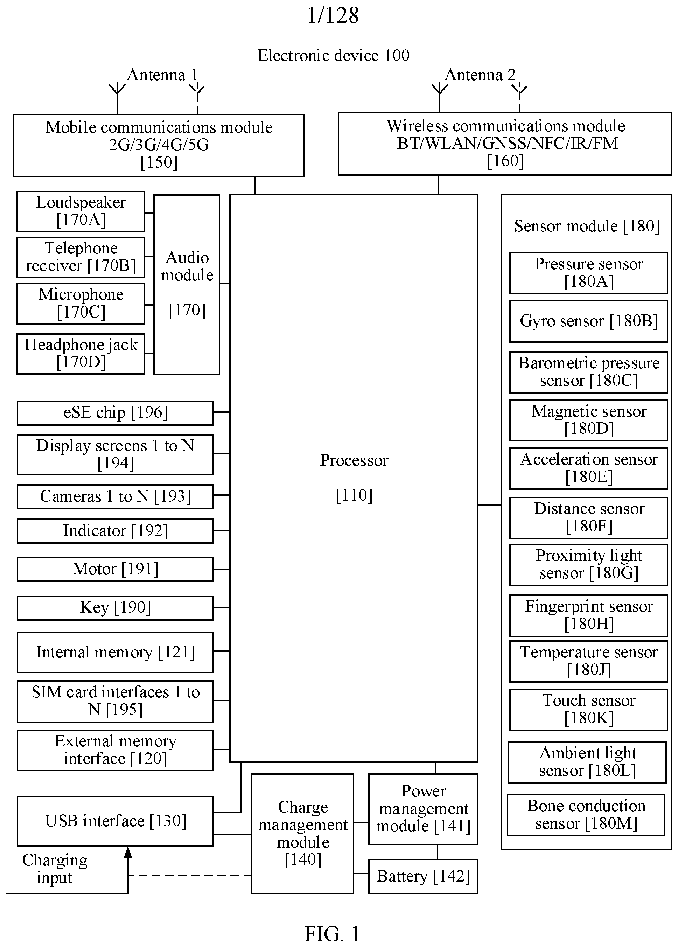

FIG. 1 is a schematic structural diagram of a terminal device 100. The terminal device 100 may include a processor 110, an external memory interface 120, an internal memory 121, a universal serial bus (universal serial bus, USB) interface 130, a charge management module 140, a power management module 141, a battery 142, an antenna 1, an antenna 2, a mobile communications module 150, a wireless communications module 160, an audio module 170, a loudspeaker 170A, a telephone receiver 170B, a microphone 170C, a headphone jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the terminal device 100. In some other embodiments of this application, the terminal device 100 may include more or fewer components than those shown in the figure, or may combine some components or split some components, or have a different component arrangement. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), or the like. Different processing units may be separate devices, or may be integrated into one or more processors.

The controller may generate an operation control signal according to instruction operation code and a time-sequence signal, and control obtaining and executing of instructions.

A memory may also be disposed in the processor 110, configured to store instructions and data. In some embodiments, the memory in the processor 110 is a cache memory. The memory may store instructions or data recently used or cyclically used by the processor 110. If the processor 110 needs to use the instructions or the data again, the processor may invoke the instructions or the data from the memory. Repeated access is avoided, and a waiting time of the processor 110 is reduced, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, or the like.

The I2C interface is a bidirectional synchronization serial bus, and includes a serial data line (serial data line, SDA) and a serial clock line (derail clock line, SCL). In some embodiments, the processor 110 may include a plurality of I2C buses. The processor 110 may be coupled to the touch sensor 180K, a charger, a flash, the camera 193, and the like by using different I2C bus interfaces respectively. For example: the processor 110 may be coupled to the touch sensor 180K by using the I2C interface, so that the processor 110 communicates with the touch sensor 180K by using the I2C bus interface, to implement a touch function of the terminal device 100.

It may be understood that an interface connection relationship between the modules illustrated in this embodiment of this application is merely an example for description, and does not constitute a limitation on a structure of the terminal device 100. In some other embodiments of this application, the terminal device 100 may use an interface connection method different from that in the above embodiment, or use a combination of a plurality of interface connection methods.

A wireless communication function of the terminal device 100 may be implemented by using the antenna 1, the antenna 2, the mobile communications module 150, the wireless communications module 160, the modem processor, the baseband processor, and the like.

The terminal device 100 implements a display function by using the GPU, the display screen 194, the application processor, and the like. The GPU is a microprocessor for image processing and connects the display screen 194 and the application processor. The GPU is configured to perform mathematical and geometric calculations, and is configured to render graphics. The processor 110 may include one or more GPUs that execute a program instruction to generate or change display information.

The display screen 194 is configured to display an image, a video, or the like.

The terminal device 100 can implement a photographing function by using the ISP, the camera 193, the video codec, the GPU, the display screen 194, the application processor, and the like.

The ISP is configured to process data fed back by the camera 193. For example, during photographing, a shutter is enabled. Light is transmitted to a photosensitive element of the camera through a lens, and an optical signal is converted into an electrical signal. The photosensitive element of the camera transmits the electrical signal to the ISP for processing, and the electrical signal is converted into an image visible to a naked eye. The ISP may also optimize algorithms for noise point, brightness, and skin tone of the image. The ISP may also optimize parameters such as exposure and a color temperature of a photographed scene. In some embodiments, the ISP may be arranged in the camera 193.

The camera 193 is configured to capture a still image or a video. An optical image is generated for an object by using the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in standard RGB and YUV formats. In some embodiments, the terminal device 100 may include one or N cameras 193, where N is a positive integer greater than 1.

The digital signal processor is configured to process a digital signal. In addition to a digital image signal, the digital signal processor may further process another digital signal. For example, when the terminal device 100 performs frequency point selection, the digital signal processor is configured to perform Fourier transformation or the like on frequency point energy.

The video codec is configured to compress or decompress a digital video. The terminal device 100 can support one or more video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor, quickly processes input information by referring to a structure of a biological neural network, for example, a transmission mode between neurons in a human brain, and may further continuously perform self-learning. The NPU may be configured to implement an application such as intelligent cognition of the terminal device 100, for example, image recognition, face recognition, voice recognition, and text understanding.

The external memory interface 120 may be configured to connect to an external storage card such as a micro SD card, to extend a storage capability of the terminal device 100. The external storage card communicates with the processor 110 through the external memory interface 120 to implement a data storage function, for example, store files such as music and a video in the external storage card.

The internal memory 121 may be configured to store computer-executable program code, where the executable program code includes an instruction. The internal memory 121 may include a program storage region and a data storage region. The program storage region may store an operating system, an application required by at least one function (such as a voice playing function and an image display function), and the like. The data storage region may store data (such as audio data and an address book) created in a process of using the terminal device 100, and the like. In addition, the internal memory 121 may include a high-speed random access memory, and may further include a non-volatile memory, for example, at least one disk storage device, a flash memory device, or a universal flash storage (universal flash storage, UFS). The processor 110 executes various functional applications and data processing of the terminal device 100 by running the instructions stored in the internal memory 121 and/or the instructions stored in the memory disposed in the processor.

The terminal device 100 can implement an audio function, for example, music playback and recording, by using the audio module 170, the loudspeaker 170A, the telephone receiver 170B, the microphone 170C, the headphone jack 170D, the application processor, and the like.

A software system of the terminal device 100 may use a hierarchical architecture, an event-driven architecture, a micro core architecture, a micro service architecture, a cloud architecture, and the like. In this embodiment of this application, a software structure of the terminal device 100 is illustrated by using an Android system with a hierarchical architecture as an example.

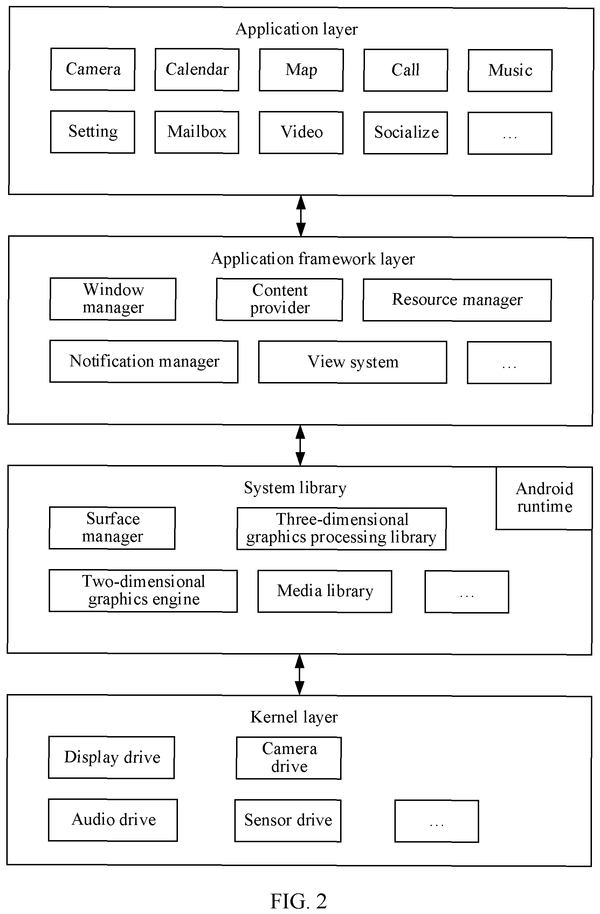

FIG. 2 is a block diagram of a software structure of the terminal device 100 according to an embodiment of this application.

In the hierarchical architecture, software is divided into several layers, and each layer has a clear role and task. The layers communicate with each other through a software interface. In some embodiments, the Android system is divided into four layers, namely, an application layer, an application framework layer, an Android runtime (Android runtime) and system library, and a kernel layer from top to bottom.

The application layer may include a series of application program packages.

As shown in FIG. 2, the application program packages may include application programs such as camera, calendar, call, map, call, music, setting, mailbox, video, and socializing.

The application framework layer provides an application programming interface (application programming interface, API) and a programming framework for application programs at the application layer. The application framework layer includes some predefined functions.

As shown in FIG. 2, the application framework layer may include a window manager, a content provider, a resource manager, a view system, a notification manager, and the like.

The window manager is configured to manage a window program. The window manager may obtain a size of a display screen, determine whether there is a status bar, perform screen locking, perform screen touch, perform screen dragging, perform screen capturing, and the like.

The content provider is configured to store and obtain data, and enable the data to be accessible by an application program. The data may include a video, an image, an audio, phone calls made and answered, a browsing history, favorite, a phone book, and the like.

The view system includes visual controls such as a control for displaying a text and a control for display an image. The view system may be configured to construct an application program. A display interface may include one or more views. For example, a display interface including a short message notification icon may include a view for displaying a text and a view for displaying a picture.

The resource manager provides various resources such as a localized character string, an icon, an image, a layout file, and a video file for an application program.

The notification manager enables an application program to display notification information in the status bar that may be used to convey a message of a notification type, where the message may disappear automatically after a short stay without user interaction. For example, the notification manager is configured to provide a notification of download completion, a message notification, and the like. The notification manager may alternatively provide a notification that appears on a top status bar of the system in the form of a graph or a scroll bar text, for example, a notification of an application program running on the background, or may be a notification that appears on the screen in the form of a dialog window. For example, text information reminding is performed in the status bar, a reminding tone is made, the terminal device vibrates, or an indicator flashes.

The Android runtime includes a kernel library and a virtual machine. The Android runtime is responsible for scheduling and managing an Android system.

The kernel library includes two parts: One part is a performance function that the Java language needs to invoke, and the other part is a kernel library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of function modules, for example: a surface manager (surface manager), media libraries (Media Libraries), a three-dimensional graphics processing library (for example, OpenGL ES), and a 2D graphics engine (for example, SGL).

The surface manager is configured to manage a display subsystem, and provide fusion of 2D and 3D graphics layers to a plurality of application programs.

The media library supports playback and recording in a plurality of common audio and video formats, and also supports static image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, synthesis, graphics layer processing, and the like.

The 2D graphics engine is a drawing engine for 2D drawing.

The kernel layer is a layer between hardware and software. The kernel layer includes at least a display drive, a camera drive, an audio drive, and a sensor drive.

With reference to a scenario in which an application program is started or interface switching occurs in the application program, the following describes a working procedure of software and hardware of the terminal device 100 by using an example.

When the touch sensor 180K receives a touch operation, a corresponding hardware interrupt is sent to the kernel layer. The kernel layer processes the touch operation into an original input event (including information such as touch coordinates, touch force, and a time stamp of the touch operation). The original input event is stored at the kernel layer. The application framework layer obtains the original input event from the kernel layer, and identifies a control corresponding to the input event. For example, the touch operation is a touch single-click operation, and a control corresponding to the single-click operation is a control of an email application icon. An email application invokes an interface of the application framework layer to start the email application, and then starts a display drive by invoking the kernel layer, to display a functional interface of the email application.

The following describes the solutions in the embodiments of this application in detail with reference to the accompanying drawings.

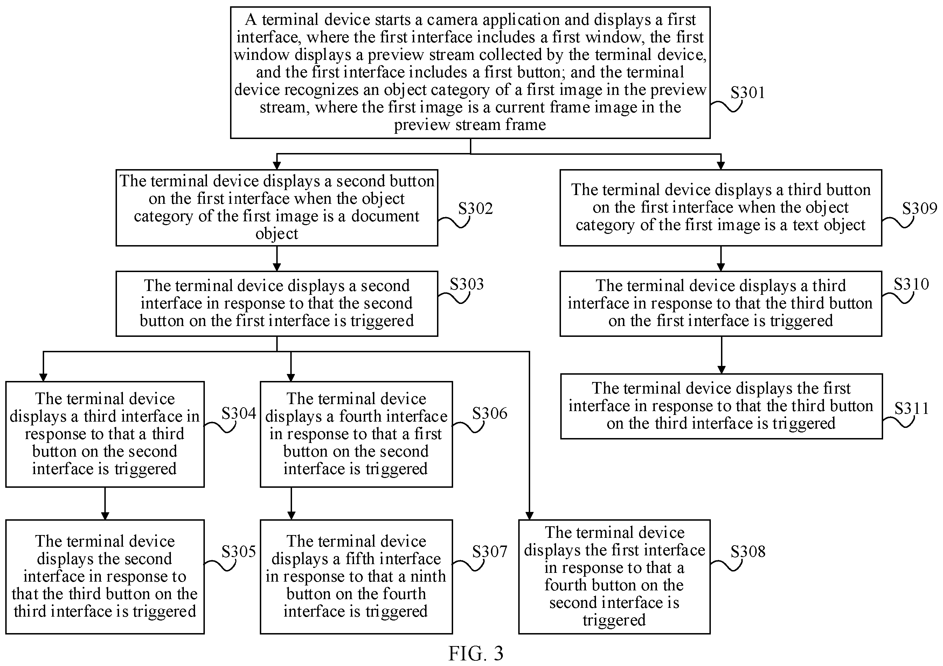

FIG. 3 is a schematic flowchart 1 of a text recognition method based on a terminal device according to an embodiment of this application. As shown in FIG. 3, the method includes:

S301: A terminal device starts a camera application and displays a first interface, where the first interface includes a first window, the first window displays a preview stream collected by the terminal device, and the first interface includes a first button; and the terminal device recognizes an object category of a first image in the preview stream, where the first image is a current frame image in the preview stream frame.

The object category includes the following categories: a text object, a document object, and a non-text object. The object category of the image recognized by the terminal device is one of the foregoing three categories.

If the object category of the image is the text object, it indicates that the collected image includes a target text and the collected image is not a document.

If the object category of the image is the document object, it indicates that the collected image is a document and the collected image includes a target text.

If the object category of the image is the non-text object, it indicates that the collected image does not include a target text.

Exemplarily, this embodiment is executed by the terminal device. The terminal device has the camera application.

A user triggers the terminal device to start the camera application. The terminal device collects an image stream based on the camera application, and then the terminal device displays the obtained preview stream (that is, the image stream) based on the camera application. The preview stream includes an image collected in real time. In this case, the terminal device may display a first interface based on the camera application, the first interface includes a first window, and the first window displays a currently collected preview stream (that is, an image stream). The first interface displays the first button, and the first button is a button that is configured to be triggered to capture an image.

In a process of obtaining the preview stream based on the camera application, the terminal device continuously detects frame images, and generates the preview stream at a preset speed, for example, generates the preview stream at a speed of 20 frames per second, or generates the preview stream at a speed of 60 frames per second.

In a process of generating the preview stream in real time, the terminal device performs sampling detection on a frame image in the preview stream at a preset detection frequency, to obtain a current frame image, that is, the first image. The terminal device identifies the object category of the first image, and determines whether the object category of the first image is the text object, the document object, or the non-text object. For example, in a process of generating the preview stream in real time, the terminal device samples a frame image at a detection frequency of an interval of 5 frames, to obtain the first image. The terminal device detects the first image, to determine the object category of the first image. Detecting once at the interval of 5 frames means detecting once at an interval of 250 milliseconds.

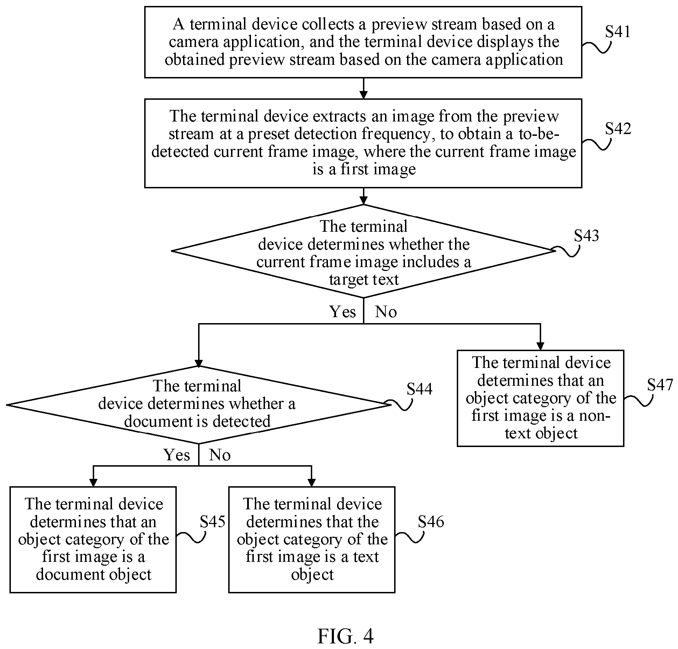

The "recognizing the object category of the collected first image" may be implemented in any one of the following manners:
First implementation: FIG. 4 is a first schematic flowchart of detecting a content object of an image in a method according to an embodiment of this application. As shown in FIG. 4, a detection process includes:
Step S41: The terminal device collects a preview stream based on the camera application, and the terminal device displays the obtained preview stream (that is, an image stream) based on the camera application. The preview stream includes a frame image collected in real time.

Step S42: The terminal device extracts an image from the preview stream at a preset detection frequency, to obtain a to-be-detected current frame image. The current frame image is the first image. For example, the terminal device detects the preview stream at the interval of 250 milliseconds, to extract a frame image.

Step S43: The terminal device performs text detection on the current frame image by using a word detection technology, to determine whether the current frame image includes a target text.

The "target text" is a text of a preset category. The preset category includes one or more of the following: a preset language, preset font information, a language is not limited and font information is not limited, and the like. The "preset font information" includes one or more of the following: a preset font type, a preset font size, a preset glyph type (for example, printing or handwriting), a preset font color, and the like.

The "performing, by the terminal device, text detection on the current frame image by using a word detection technology, to determine whether the current frame image includes a target text" includes: performing, by the terminal device, text detection on the current frame image by using the word detection technology; and in a detection process, detecting, by the terminal device based on a requirement that the text is a text of a preset category, whether the current frame image includes the target text.

Setting of the preset category of the "target text" may be implemented in the following manner: In one manner, a user sets information of the preset category in a "setting" page of the terminal device. For example, the "setting" page of the terminal device provides language options, and a user may select "Chinese" as a category of a to-be-extracted text in the page. For another example, the "setting" page of the terminal device provides font options, and a user may select "Song font" as a category of a to-be-extracted text in the page. In another manner, the terminal device automatically determines the preset category according to a language, a font, and a glyph currently used on the terminal device, and a font and a glyph of a text historically inputted by a user. In still another manner, the terminal device automatically determines the preset category according to a historical selection of a text from an image by a user according to the "text recognition method based on a terminal device" provided in this solution. For example, when a user selects a text in a "second window" described below, the terminal device records historical selections of the user, and then the terminal device automatically determines the preset category based on a plurality of historical selections of the user.

If the preset category is "a language is not limited and font information is not limited", the terminal device performs text detection on the current frame image by using a word detection technology, so as to detect whether the current frame image includes a text. In a process of detecting whether the current frame image includes a text, whether the text is in a preset language, whether the text satisfies preset font information, and the like are not limited.

Step S44: If determining that the current frame image includes a target text after step S43, the terminal device determines whether a document is detected.

The terminal device performs document detection on the current frame image, and according to one or more of edge detection information, proportion information of a to-be-analyzed box in a viewfinder box, and a location relationship between the center point of a viewfinder box and a to-be-analyzed box, the terminal device determines whether a document is detected. If determining that one or more of the edge detection information satisfying a first condition, the proportion information of the to-be-analyzed box in the viewfinder box satisfying a second condition, and the location relationship between the center point of the viewfinder box and the to-be-analyzed box satisfying a third condition is true, the terminal device determines that a document is detected. Otherwise, the terminal device determines that no document is detected.

The "edge detection information" indicates a number of detected sides and/or a number of detected corners.

The "first condition" corresponding to the "edge detection information" is that four sides are detected. Alternatively, the "first condition" corresponding to the "edge detection information" is that three sides are detected. Alternatively, the "first condition" corresponding to the "edge detection information" is that four corners are detected. Alternatively, the "first condition" corresponding to the "edge detection information" is that three corners are detected. Alternatively, the "first condition" corresponding to the "edge detection information" is that four sides and five corners are detected.

The terminal device may perform edge detection on the current frame image, to obtain the number of sides. For example, edge detection is performed on the current frame image by using an edge detection algorithm, to obtain the number of sides.

The terminal device performs edge detection on the current frame image, and determines, based on an edge detection result, whether sides form a corner, to obtain the number of corners. For example, edge detection is performed on the current frame image by using an edge detection algorithm, to determine whether a side is detected. Then, calculation is performed to determine whether sides intersect with each other, to determine whether a corner is detected.

After the "edge detection information" is obtained, one or more to-be-analyzed boxes are obtained based on sides in the "edge detection information". For example, four sides are obtained, and the four sides form a to-be-analyzed box 1. Another four sides are obtained, and the another four sides form a to-be-analyzed box 2.

The "proportion information of the to-be-analyzed box in the viewfinder box" indicates a proportion of the obtained to-be-analyzed box to the viewfinder box. When the first image is obtained by performing image collection by using the camera application, the viewfinder box is a viewfinder box obtained when the terminal device performs image collection by using the camera application. When the first image is opened by using a gallery application, the viewfinder box is a size of the first image. When the first image is obtained by using a screenshot application, the viewfinder box is a size of the first image.

The "second condition" corresponding to the "proportion information of the to-be-analyzed box in the viewfinder box" is a value represented by the proportion information, and is greater than or equal to a preset proportion threshold. The preset proportion threshold is a preset value. For example, a value of the preset proportion threshold is 80%, or a value of the preset proportion threshold is 70%.

The "location relationship between the center point of the viewfinder box and the to-be-analyzed box" indicates a location of the center point of the viewfinder box in the to-be-analyzed box. For example, the center point of the viewfinder box is located in the to-be-analyzed box, that is, the center point of the viewfinder box falls within the to-be-analyzed box. For another example, the center point of the viewfinder box is located outside the to-be-analyzed box, that is, the center point of the viewfinder box does not fall within the to-be-analyzed box. For another example, the center point of the viewfinder box is located in a preset region in the to-be-analyzed box, that is, the center point of the viewfinder box falls within the preset region in the to-be-analyzed box. The "preset region" herein may be a region of a preset shape centering around the center point of the to-be-analyzed box. For example, the "preset region" may be a preset circular region centering around the center point of the to-be-analyzed box. Alternatively, the "preset region" herein may be a preset rectangular region centering around the center point of the to-be-analyzed box.

The "third condition" corresponding to the "location relationship between the center point of the viewfinder box and the to-be-analyzed box" is that the center point of the viewfinder box is located in the to-be-analyzed box, or is that the center point of the viewfinder box is located in a preset region in the to-be-analyzed box.

Step S45: If a document is detected after step S44, the terminal device determines that the object category of the first image is the document object.

Step S46: If no document is detected after step S44, the terminal device determines that the object category of the first image is the text object.

Step S47: If determining that the current frame image includes no target text after step S43, the terminal device determines that the object category of the first image is the non-text object, and performs step S42 again.

The detection process in steps S41 to S47 is a scene recognition model of the preview stream.

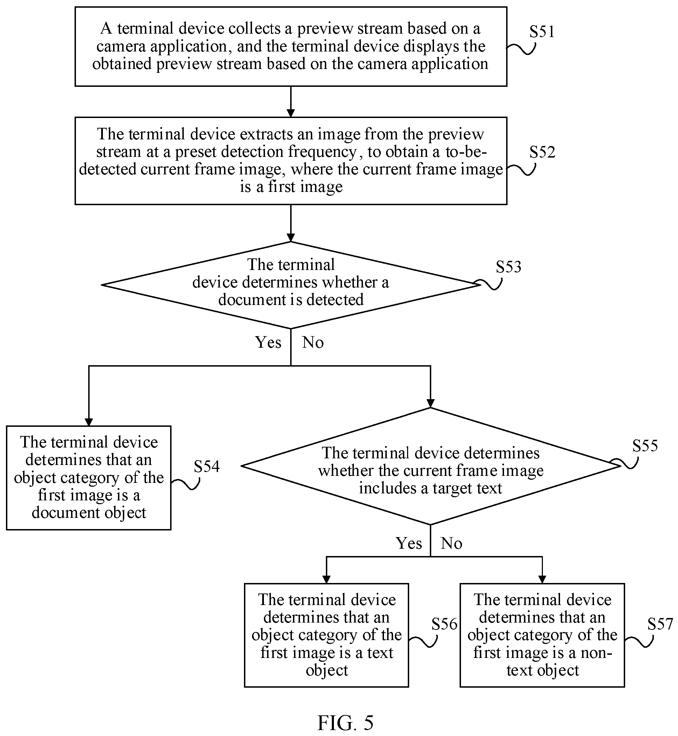

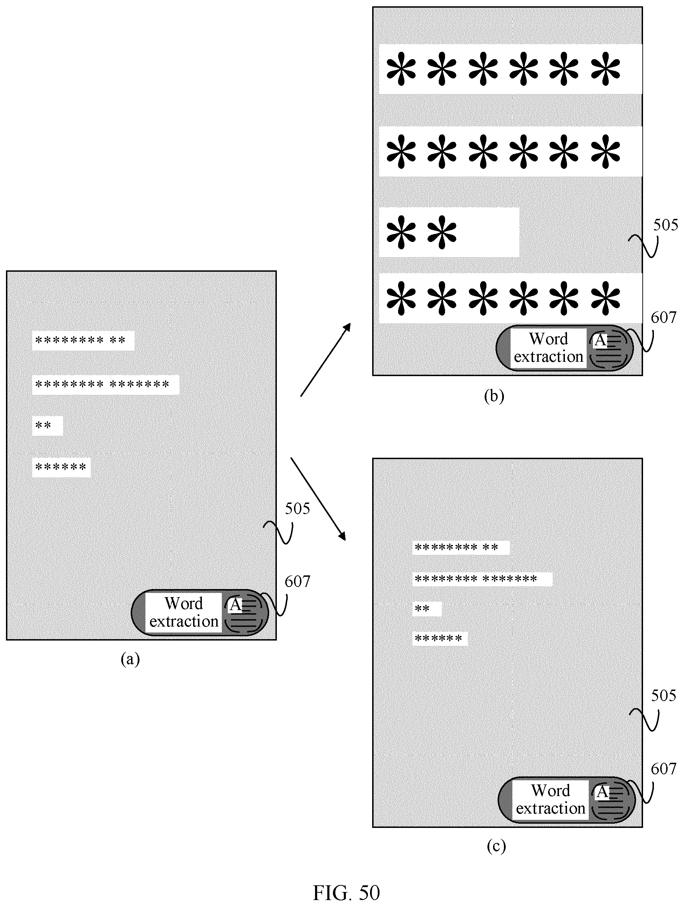

Second implementation: FIG. 5 is a second schematic flowchart of detecting a content object of an image in a method according to an embodiment of this application. As shown in FIG. 5, a detection process includes:

Step S51: The terminal device collects a preview stream based on the camera application, and the terminal device displays the obtained preview stream (that is, an image stream) based on the camera application. The preview stream includes a frame image collected in real time.

Step S52: The terminal device extracts an image from the preview stream at a preset detection frequency, to obtain a to-be-detected current frame image. The current frame image is the first image. For example, the terminal device detects the preview stream at the interval of 250 milliseconds, to extract a frame image.

Step S53: The terminal device determines whether a document is detected.

For step S53, refer to the foregoing step S44. Details are not described herein again.

Step S54: If determining that a document is detected after step S53, the terminal device determines that the object category of the first image is the document object.

Step S55: If determining that no document is detected after step S53, the terminal device performs text detection on the current frame image by using a word detection technology, to determine whether the current frame image includes a target text.

For step S55, refer to the foregoing step S43. Details are not described herein again.

Step S56: If determining that the current frame image includes a target text after step S55, the terminal device determines that the object category of the first image is the text object.

Step S57: If determining that the current frame image includes no target text after step S55, the terminal device determines that the object category of the first image is the non-text object, and performs step S52 again.

S302: The terminal device displays a second button on the first interface when the object category of the first image is the document object.

Exemplarily, when starting the camera application, the terminal device displays a first interface in real time. The first interface includes a first window, and the first window displays each current frame image in the preview stream collected by the terminal device in real time. The first interface includes a first button, at least one photographing-related setting button, at least one photographing mode button, a preview button, and a switching button.

The at least one photographing-related setting button on the first interface includes: a scanning button, an AI photographing button, a flash button, an image mode button, a camera setting button, and the like.

The at least one photographing mode button includes: an "aperture" photographing mode button, a "night scene" photographing mode button, a "portrait" photographing mode button, a "picture" photographing mode button, a "video recording" photographing mode button, a "movie" photographing mode button, a "professional" photographing mode button, and the like.

The preview button is a button that is configured to be triggered to preview an image in a camera application.

The switching button is a button that is configured to be triggered to switch between a front camera and a rear camera.

The first interface further includes at least one multiple button, where the multiple button is a button that is configured to adjust a display size of the image in the preview stream. For example, the multiple button includes: a "0.5" button, a "1" button, a "5" button, and a "10" button.

After step S301, the terminal device displays a second button on the first interface when determining that the first image in the collected preview stream is the document object. The second button is a dynamic document scanning button. The second button is a button that is configured to be triggered to scan a document in an image. "Document scan" is displayed on the second button, so that a user determines a function of the second button.

The second button is a dynamic button. The second button may have an expanded state and a collapsed state. In addition, when displaying the second button for the first time, the terminal device may display the second button at the lower right corner of the first window. A user may drag the second button. Further, the terminal device moves the second button on the first interface in response to the dragging operation of the user.

The at least one photographing-related setting button is arranged at the top of the first interface. The first window is located in the middle of the first interface. The at least one photographing mode button, the preview button, and the switching button are located at the bottom of the first window.

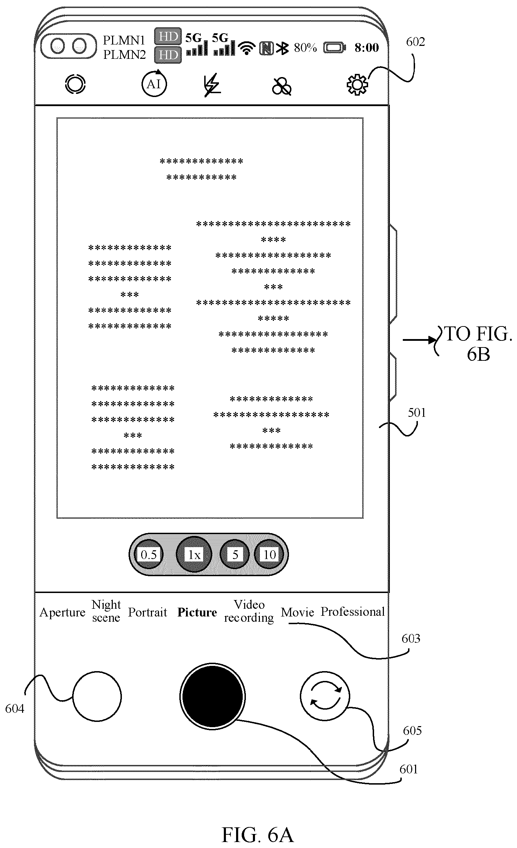

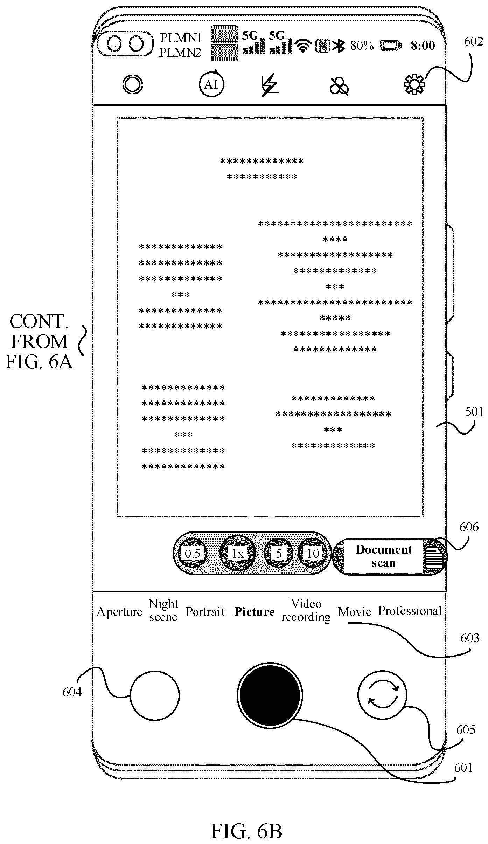

FIG. 6A and FIG. 6B are a schematic diagram 1 of an interface according to an embodiment of this application. As shown in FIG. 6A, a terminal device opens a camera application and displays a first interface. The first interface includes a first window 501, and the first window 501 displays a preview stream collected by the terminal device. The first interface may further include a first button 601, at least one photographing-related setting button 602, at least one photographing mode button 603, a preview button 604, and a switching button 605. As shown in FIG. 6B, when determining that a current frame image (that is, a first image) in the preview stream is a document object, the terminal device displays a second button 606 on the first interface. The second button 606 has an expanded state and a collapsed state. In FIG. 6B, the second button 606 is in the expanded state.

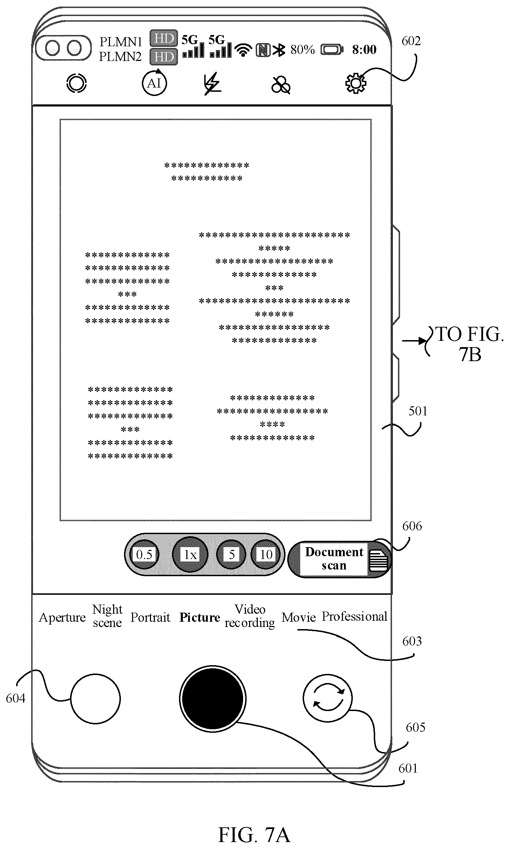

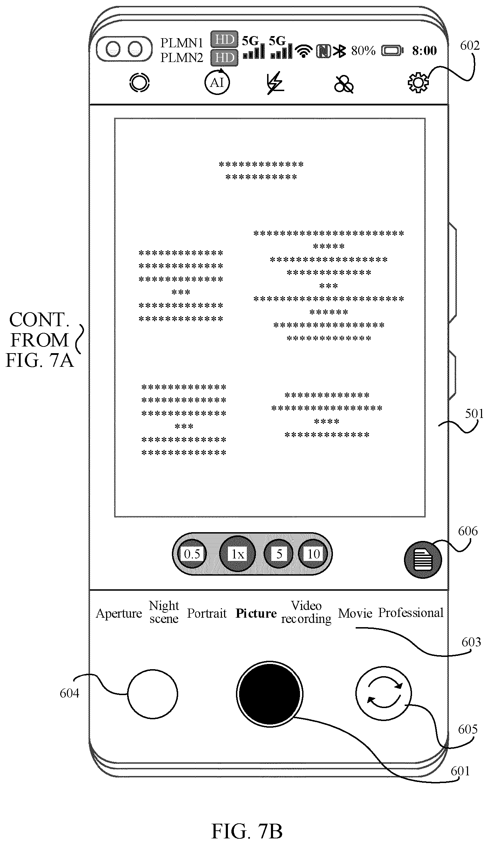

FIG. 7A and FIG. 7B are a schematic diagram 2 of an interface according to an embodiment of this application. As shown in FIG. 7A, FIG. 7A is FIG. 6B described above. The second button 606 is a dynamic button. In FIG. 7A, the second button 606 is in the expanded state. As shown in FIG. 7B , the second button 606 is not triggered in a preset time, and in this case, the second button 606 is in the collapsed state.

S303: The terminal device displays a second interface in response to that the second button on the first interface is triggered, where the second interface includes a second window and a third window, the second window displays the preview stream collected by the terminal device, an outer frame of a document in the current frame image in the preview stream is highlighted, the second interface displays a third button when the current frame image of the preview stream includes a target text, the second interface does not display the third button when the current frame image of the preview stream does not include the target text, and the third window displays the first button and a fourth button.

For example, the terminal device displays the second interface in response to that the second button on the first interface is triggered, where the second interface includes the second window and the third window, and the second window displays the preview stream collected by the terminal device in real time. In addition, the terminal device highlights an outer frame of a document detected in the current frame image in the preview stream. For example, the outer frame of the document detected in the current frame image is highlighted in yellow.

The third window displays the first button, a preview button, and the fourth button. The fourth button is a button that is configured to be triggered to exit document scan. "Document scan ×" is displayed on the fourth button, so that a user determines a function of the fourth button.

The second interface may further display at least one photographing-related setting button. The at least one photographing-related setting button on the second interface includes: an AI photographing button, a flash button, an image mode button, and the like.

The at least one photographing-related setting button is arranged at the top of the second interface. The second window is located in the middle of the second interface; and the third window is located at the bottom of the second interface.

The terminal device needs to detect, in real time, whether the current frame image of the preview stream in the second window includes the target text.

The "target text" is a text of a preset category. The preset category includes one or more of the following: a preset language, preset font information, a language is not limited and font information is not limited, and the like. The "preset font information" includes one or more of the following: a preset font type, a preset font size, a preset glyph type (for example, printing or handwriting), a preset font color, and the like.

Setting of the preset category of the "target text" may be implemented in the following manner: In one manner, a user sets information of the preset category in a "setting" page of the terminal device. For example, the "setting" page of the terminal device provides language options, and a user may select "Chinese" as a category of a to-be-extracted text in the page. For another example, the "setting" page of the terminal device provides font options, and a user may select "Song font" as a category of a to-be-extracted text in the page. In another manner, the terminal device automatically determines the preset category according to a language, a font, and a glyph currently used on the terminal device, and a font and a glyph of a text historically inputted by a user. In still another manner, the terminal device automatically determines the preset category according to a historical selection of a text from an image by a user according to the "text recognition method based on a terminal device" provided in this solution. For example, when a user selects a text in a "second window" described below, the terminal device records historical selections of the user, and then the terminal device automatically determines the preset category based on a plurality of historical selections of the user.

If the preset category is "a language is not limited and font information is not limited", the terminal device performs text detection on the current frame image by using a word detection technology, so as to detect whether the current frame image includes a text. In a process of detecting whether the current frame image includes a text, whether the text is in a preset language, whether the text satisfies preset font information, and the like are not limited.

Then, the terminal device performs text detection on the current frame image of the preview stream in the second window by using a word detection technology. Besides, in a detection process, the terminal device detects, based on a requirement that the text is a text of a preset category, whether the current frame image of the preview stream in the second window includes the target text.

If determining that the current frame image of the preview stream in the second window includes the target text, the terminal device displays the third button on the second interface. The third button is a "dynamic word extraction button", and the third button is a button that is configured to be triggered to extract a text in an image. "Text extraction" is displayed on the third button, so that a user determines a function of the third button.

The third button is a dynamic button. The third button may have an expanded state and a collapsed state. In addition, when displaying the third button for the first time, the terminal device may display the third button at the lower right corner of the second window. A user may drag the third button. Further, the terminal device moves the third button on the second interface in response to the dragging operation of the user.

If determining that the current frame image of the preview stream in the second window does not include the target text, the terminal device does not display the third button on the second interface. Alternatively, the terminal device performs detection on the target text in the current frame image of the preview stream in the second window in real time, and regardless of whether the target text is detected, the terminal device displays the third button on the second interface.

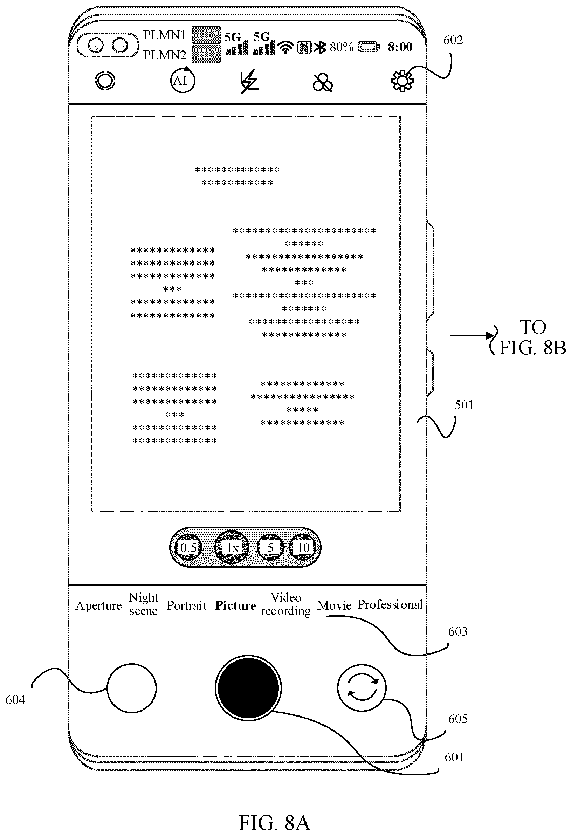

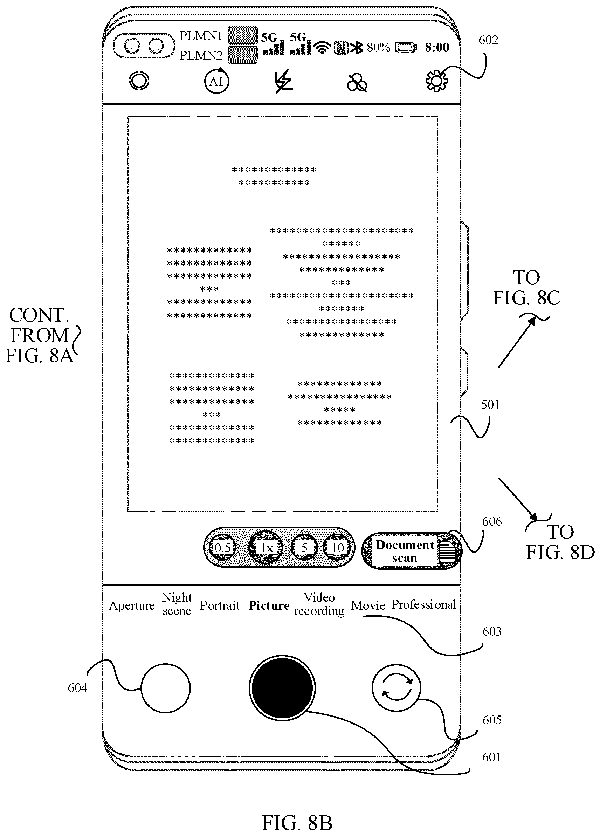

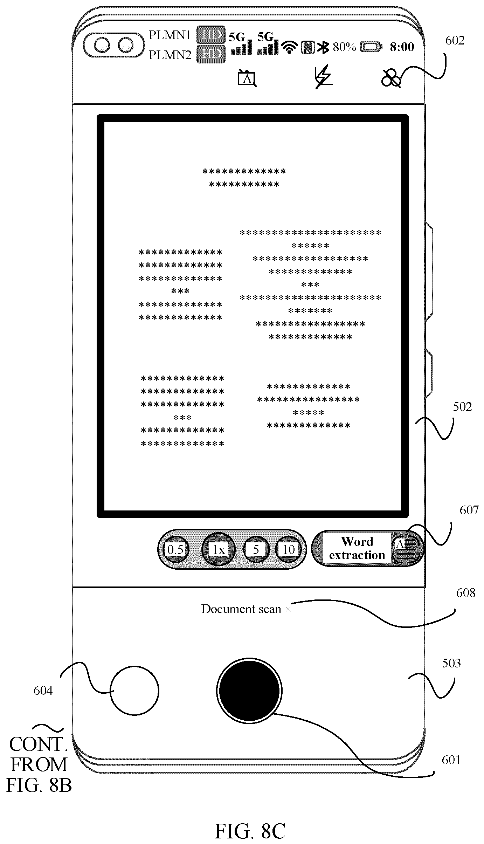

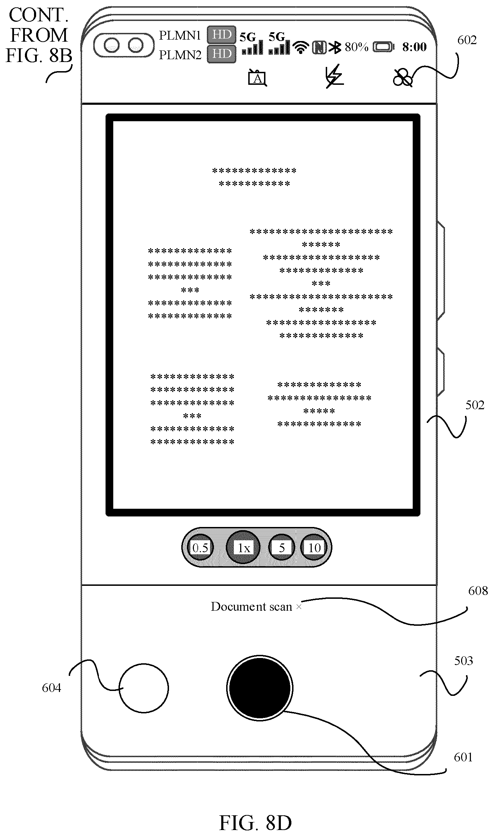

FIG. 8A, FIG. 8B, FIG. 8C, and FIG. 8D are a schematic diagram 3 of an interface according to an embodiment of this application. As shown in FIG. 8A, FIG. 8A is FIG. 6A described above, and FIG. 8B is FIG. 6B.

A user triggers a second button 606 on a first interface in FIG. 8B . As shown in FIG. 8C, the terminal device displays a second interface. The second interface includes a second window 502 and a third window 503, and the second window 502 displays a preview stream collected by a terminal device. The terminal device detects, in real time, whether a current frame image of the preview stream displayed in the second window 502 includes a target text. When determining that the current frame image of the preview stream displayed in the second window 502 includes the target text, as shown in FIG. 8C, the terminal device displays a third button 607 on the second interface. The third window 503 displays a first button 601, a preview button 604, and a fourth button 608. "Document scan ×" is displayed on the fourth button 608. The first interface may further include at least one photographing-related setting button 602.

Alternatively, a user triggers the second button 606 on the first interface in FIG. 8B . As shown in FIG. 8D, the terminal device displays the second interface. The second interface includes a second window 502 and a third window 503, and the second window 502 displays a preview stream collected by a terminal device. The terminal device detects, in real time, whether a current frame image of the preview stream displayed in the second window 502 includes a target text. When determining that the current frame image of the preview stream displayed in the second window 502 does not include the target text, as shown in FIG. 8D , the terminal device does not display the third button 607 on the second interface. The third window 503 displays a first button 601, a preview button 604, and a fourth button 608. "Document scan ×" is displayed on the fourth button 608. The first interface may further include at least one photographing-related setting button 602.

S304: The terminal device displays a third interface in response to that the third button on the second interface is triggered, where the third interface includes the fourth window and the fifth window, the third interface displays the third button, the fourth window displays the second image in the preview stream, the second image includes the highlighted target text, the fifth window displays the fifth button when the target text in the fourth window does not include an entity, the fifth window displays the fifth button and at least one sixth button when the target text in the fourth window includes an entity, and the sixth button is in a one-to-one correspondence with the entity in the target text in the fourth window.

In an example, the third interface further includes the seventh button.

In an example, the second image in the preview stream includes a first region and a second region, the first region is a region formed by text blocks of the target text, and the second region is a peripheral region of the first region.

The second image displayed on the third interface includes the first region and does not include the second region; the text block of the target text in the first region of the second image displayed on the third interface is highlighted; and a background color of the text block of the target text in the second image in the preview stream is different from a background color of the text block of the target text in the second image displayed on the third interface.

In an example, when a number of entities in the second image is greater than a preset number, a number of sixth buttons is the preset number minus 1, and the fifth window further displays a tenth button.

In an example, a distribution order of sixth buttons in the fifth window corresponds to a distribution order of the entities in the second image; or a distribution order of sixth buttons in the fifth window is determined in real time based on a user portrait or a user intention.

Exemplarily, in step S303, if detecting that the current frame image of the preview stream displayed in the second window of the second interface includes the target text, the terminal device displays the third button on the second interface. The third button is a "dynamic word extraction button". Further, a user may trigger the third button on the second interface.

Then, the terminal device displays the third interface in response to that the third button on the second interface is triggered. The third interface includes the fourth window and the fifth window. Besides, the third interface displays the third button, and the third button is in a collapsed state or an expanded state.

Because the user triggers the third button on the second interface, the terminal device may collect, in real time, a current frame image that is in the preview stream and that is at a moment at which the third button is triggered, to obtain a second image. Therefore, the terminal device displays the second image in the preview stream in the fourth window. In this case, the terminal device displays a second frame image in the fourth window of the third interface. The second image herein, the foregoing first image, and the image in step S303 are images at different moments in the preview stream.

In addition, the terminal device performs detection on the target text in the second image in real time. For the "target text", refer to the foregoing description. If detecting that the second image includes the target text, the terminal device highlights the target text in the second image in the fourth window of the third interface.

It can be known that the fourth window is a "text display region".

In an example, in a process of displaying the preview stream in the second window of the second interface in real time, the terminal device displays the second image of the preview stream. The terminal device does not process the second image in the second window on the second interface. The second image in the preview stream includes a first region and a second region, the first region is a region formed by text blocks of the target text, and the second region is a peripheral region of the first region. The first region is a minimum bounding rectangle formed by the text blocks in the second image, and the second region is a region in the second image other than the minimum bounding rectangle.

The terminal device determines, in response to that the third button on the second interface is triggered, a minimum bounding matrix formed by the text blocks in the second image. The terminal device cuts the second image according to a size of the minimum bounding matrix, to cut off a peripheral region located before the minimum bounding matrix in the second image. The terminal device may reserve a part of a region around the periphery of the minimum bounding matrix. In addition, the terminal device cuts off a peripheral region of the first region, that is, cuts off the second region, to obtain the second image for displaying on the third interface. In the second image for displaying on the third interface, a box formed by the text blocks has a particular distance to the edge of the image. The distance may be set to a fixed number of pixels, and the number of pixels is an empirical value. Alternatively, the distance is a proportion of a length of a text block corresponding to the distance.

Therefore, the second image displayed by the terminal device on the third interface includes the first region and does not include the second region. In addition, the terminal device highlights each text block of the target text in the first region. In addition, the terminal device sets a background color of the text block of the target text in the first region to a preset color (for example, gray or black). Therefore, a background color of the text block of the target text in the second image in the preview stream is different from a background color of the text block of the target text in the second image displayed on the third interface.

Optionally, because the second image displayed on the third interface of the terminal device is an image obtained after cutting, when displaying the second image in the fourth window of the third interface, the terminal device may fill up the fourth window with the second image obtained after cutting. For example, a width of the second image obtained after cutting is used as a reference, and the fourth window is filled up with the second image obtained after cutting, so that the second image obtained after cutting reaches the edge of the fourth window in a width direction. For another example, a height of the second image obtained after cutting is used as a reference, and the fourth window is filled up with the second image obtained after cutting, so that the second image obtained after cutting reaches the edge of the fourth window in a height direction.

In addition, in a process in which the terminal device performs detection on the target text in the second image in real time, the terminal device recognizes an entity in the target text. It can be known that the target text includes an entity and/or a non-entity. The entity includes the following several entities: an email address, an identity card number, a delivery number, a flight number, a website, a phone number, an address, and the like.

When detecting that the target text in the second image in the fourth window does not include any entity, the terminal device displays a fifth button in the fifth window. The fifth button is a button that is configured to be triggered to copy the target text in the second image in the fourth window. "Copy all" is displayed on the fifth button. In addition, the terminal device displays a seventh button on the third interface. The seventh button is a button that is configured to display prompt information "long-press to select a text". "Long-press to select a text" is displayed on the seventh button. The seventh button is located at the top of the third interface, the fourth window is located in the middle of the third interface, and the fifth window is located at the bottom of the third interface.

When detecting that the target text in the second image in the fourth window includes an entity, the terminal device displays, in the fifth window, a fifth button and a sixth button that is in a one-to-one correspondence with the entity in the target text in the second image. The fifth button is a button that is configured to be triggered to copy the target text in the second image in the fourth window. "Copy all" is displayed on the fifth button. The sixth button is a button that is configured to be triggered to invoke a function of the entity corresponding to the sixth button, and the sixth button displays information about the entity corresponding to the sixth button. In addition, the terminal device displays a seventh button on the third interface. The seventh button is a button that is configured to display prompt information "long-press to select a text". "Long-press to select a text" is displayed on the seventh button. The seventh button is located at the top of the third interface, the fourth window is located in the middle of the third interface, and the fifth window is located at the bottom of the third interface.

It can be known that if the second image includes an entity, the fifth window is an "entity information display region", and if the second image does not include any entity, the fifth window displays a "copy all" capsule.

In an example, when the second image includes entities, when displaying, in the fifth window, sixth buttons corresponding to the entities, the terminal device may display a preset number of sixth buttons in the fifth window because there are a relatively large number of entities.

If a number of the entities in the second image is less than or equal to a preset number M, the terminal device may display M sixth buttons in the fifth window. M is a positive integer greater than or equal to 1. For example, M=5.

If a number of the entities in the second image is greater than a preset number, the terminal device may display M-1 sixth buttons in the fifth window. Meanwhile, the terminal device displays a tenth button in the fifth window. The tenth button is a button that is configured to be triggered to display the remaining sixth buttons that are not displayed in the fifth window (that is, the other sixth buttons that are not displayed in the fifth window). "More" is displayed on the tenth button. The terminal device displays the tenth button at the end of the M-1 sixth buttons.

For example, the terminal device displays a fixed number of rows of sixth buttons in the fifth window. For example, the terminal device displays three rows of sixth buttons in the fifth window. A number of sixth buttons in each row is determined according to lengths of the sixth buttons. For example, two sixth buttons are displayed in a first row, two sixth buttons are displayed in a second row, and one sixth button is displayed in a third row.

For each sixth button, information about an entity corresponding to the sixth button needs to be displayed on the sixth button; therefore, complete information about the entity may be displayed on the sixth button. For example, for a phone number entity 86 158********, a sixth button is displayed in the fifth window, and 86 158******** is displayed on the sixth button. For a website entity www.****@**.com, a sixth button is displayed in the fifth window, and www.****@**.com is displayed on the sixth button. For an address entity city AA district BB road CC number DD, a sixth button is displayed in the fifth window, and city AA district BB road CC number DD is displayed on the sixth button. For an email address entity www.***@**.com, a sixth button is displayed in the fifth window, and www.***@**.com is displayed on the sixth button.

Alternatively, for each sixth button, information about an entity corresponding to the sixth button needs to be displayed on the sixth button; therefore, for beautiful appearance or effective usage of an interface location, key information about the entity may be displayed on the sixth button. The terminal device may determine the key information about the entity according to a preset display manner. Alternatively, the terminal device determines the key information about the entity according to a user intention, a user portrait, or the like. For example, for a phone number entity 86 158********, a sixth button is displayed in the fifth window, and 158******** is displayed on the sixth button. For a website entity www.****@**.com, a sixth button is displayed in the fifth window, and ****@**.com is displayed on the sixth button. For an address entity city AA district BB road CC number DD, a sixth button is displayed in the fifth window, and district BB road CC number DD is displayed on the sixth button. For an email address entity www.***@**.com, a sixth button is displayed in the fifth window, and ***@**.com is displayed on the sixth button.

In an example, the sixth buttons displayed in the fifth window by the terminal device have an order (that is, an appearance order). An entity in the second image is in a one-to-one correspondence with a sixth button, and the sixth button is configured to display the entity corresponding to the sixth button. Therefore, an order of the sixth buttons displayed by the terminal device in the fifth window may match with an order of entities corresponding to the sixth buttons in the second image. That is, the sixth buttons are sequentially displayed in the fifth window according to an appearance order of the entities in the second image.

Alternatively, the terminal device may dynamically sort the order of the sixth buttons in the fifth window according to information such as a user portrait, a user intention, and a user preference. The terminal device may determine the user portrait, the user intention, and the user preference according to user personal information and a number of times of using an entity by a user. The user personal information includes a user gender, a user age, and the like. The number of times of using an entity by a user is, for example, a number of times of opening a website by the user, a number of times of making a call by the user, or a number of times of sending an email by the user.

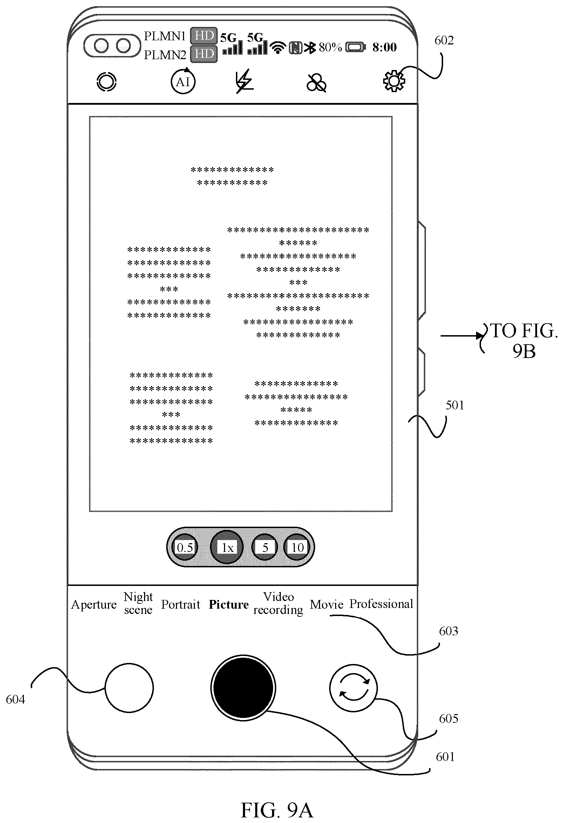

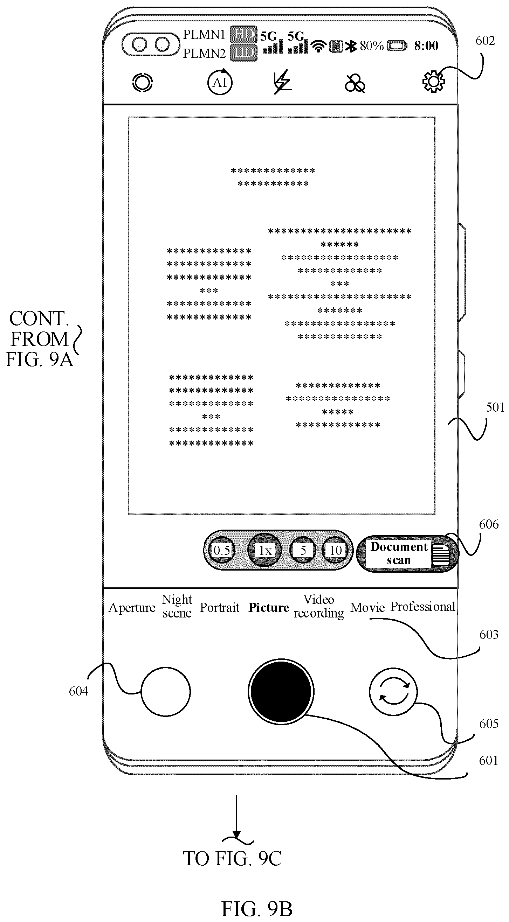

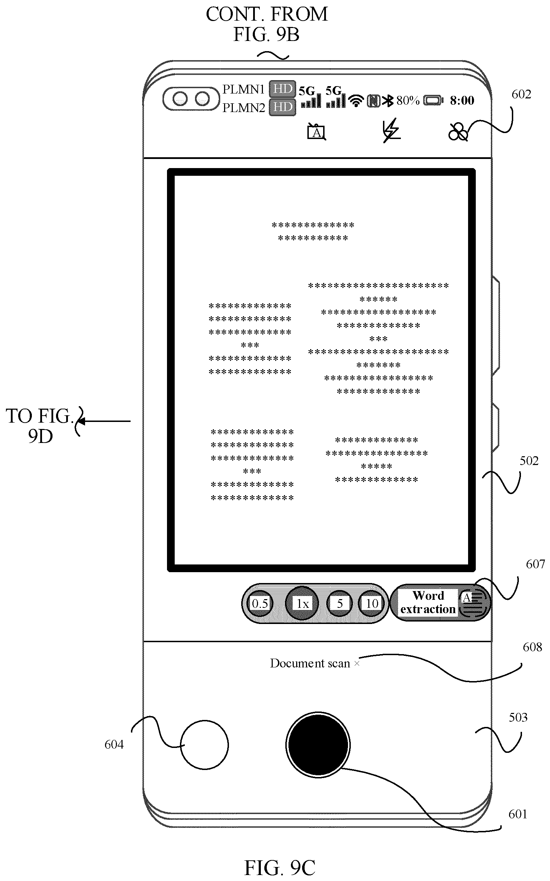

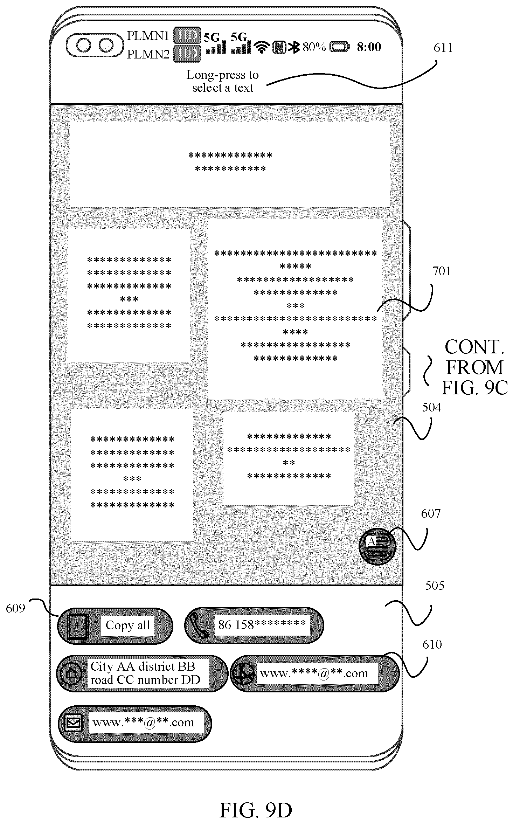

FIG. 9A, FIG. 9B, FIG. 9C, and FIG. 9D are a schematic diagram 4 of an interface according to an embodiment of this application. As shown in FIG. 9A, a terminal device opens a camera application and displays a first interface. The first interface includes a first window 501, and the first window 501 displays a preview stream collected by the terminal device. The first interface may further include a first button 601, at least one photographing-related setting button 602, at least one photographing mode button 603, a preview button 604, and a switching button 605. The first button 601 is a photographing button.

As shown in FIG. 9B, when determining that a current frame image (that is, a first image) in the preview stream is a document object, the terminal device displays a second button 606 on the first interface. The second button 606 is a "dynamic document scanning button". The second button 606 has an expanded state and a collapsed state. In FIG. 9B, the second button 606 is in the expanded state.

A user triggers a second button 606 on a first interface in FIG. 9B. As shown in FIG. 9C, the terminal device displays a second interface. The second interface includes a second window 502 and a third window 503, and the second window 502 displays a preview stream collected by a terminal device. The terminal device detects, in real time, whether a current frame image of the preview stream displayed in the second window 502 includes a target text. When determining that the current frame image of the preview stream displayed in the second window 502 includes the target text, the terminal device displays a third button 607 on the second interface. The third button is a "dynamic text extraction button". The third button 607 may have an expanded state or a collapsed state. In FIG. 9C, the third button 607 is in the expanded state. The third window 503 displays a first button 601, a preview button 604, and a fourth button 608. "Document scan ×" is displayed on the fourth button 608. The first interface may further include at least one photographing-related setting button 602. An image displayed in FIG. 9C is a second image.

A user triggers the third button 607 on the second interface in FIG. 9C. As shown in FIG. 9D, the terminal device displays a third interface. The third interface includes a fourth window 504 and a fifth window 505. The third interface displays the third button 607, and the third button 607 is a "dynamic word extraction button". The third button 607 may have an expanded state or a collapsed state. In FIG. 9D, the third button 607 is in the collapsed state. Each text block 701 of the target text in the second image displayed in the fourth window 504 is highlighted. Optionally, a background color of the text block of the target text in the second image displayed in the fourth window 504 is gray. The terminal device detects that the target text in the second image displayed in the fourth window 504 includes an entity, and the terminal device displays, in the fifth window 505, a fifth button 609 and a sixth button 610 that is in a one-to-one correspondence with the entity. "Copy all" is displayed on the fifth button 609. If a user triggers the fifth button 609, the terminal device copies the target text (that is, the entire target text) in the second image in the fourth window 504. The terminal device further displays a seventh button 611 on the third interface. "Long-press to select a text" is displayed on the seventh button 611. In this way, a user may be prompted to long-press the target text in the fourth window 504 to select the target text.

Complete information about an entity corresponding to the sixth button is displayed on the sixth button. As shown in FIG. 9D, for a phone number entity 86 158********, a sixth button 610 is displayed in the fifth window 505, and 86 158******** is displayed on the sixth button 610. For a website entity www.****@**.com, a sixth button is displayed in the fifth window 505, and www.****@**.com is displayed on the sixth button 610. For an address entity city AA district BB road CC number DD, a sixth button 610 is displayed in the fifth window 505, and city AA district BB road CC number DD is displayed on the sixth button 610. For an email address entity www.***@**.com, a sixth button 610 is displayed in the fifth window 505, and www.***@**.com is displayed on the sixth button 610.

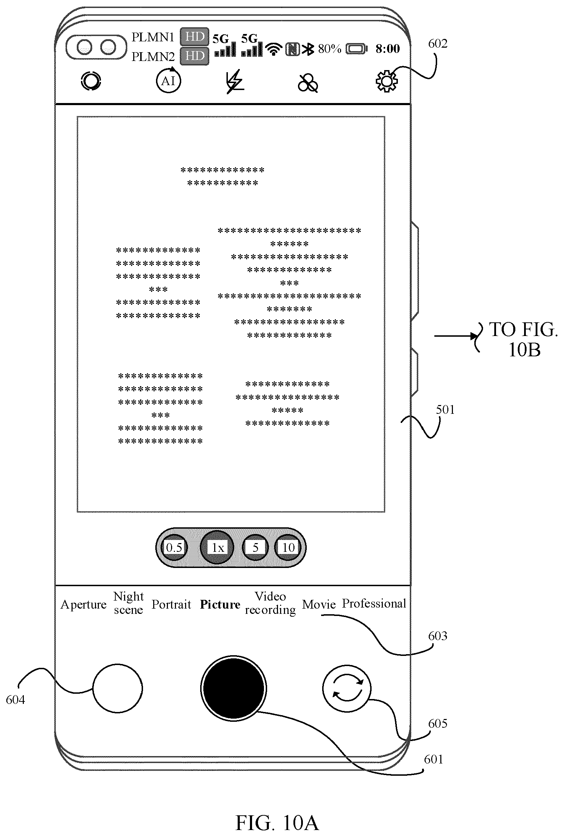

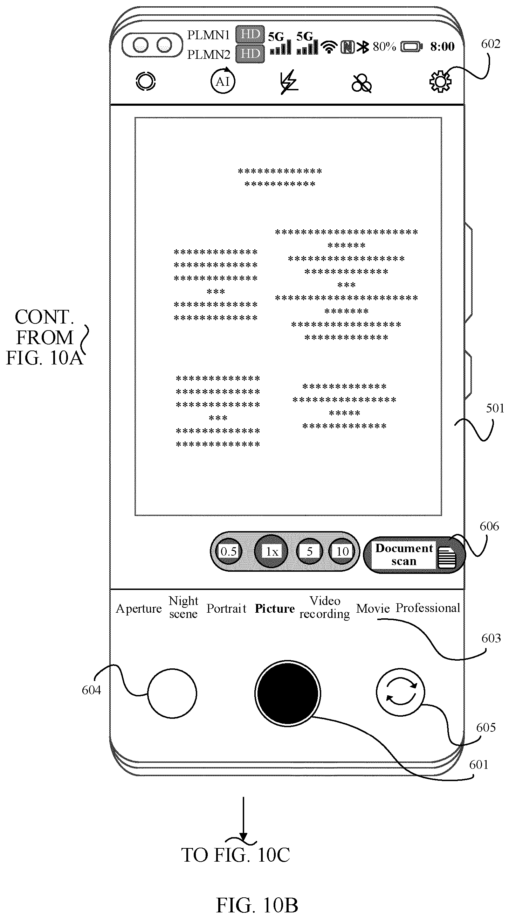

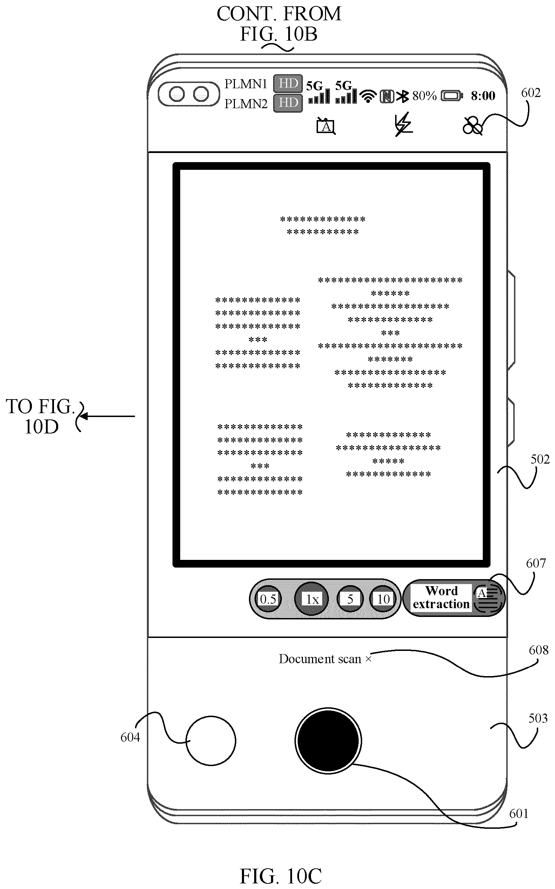

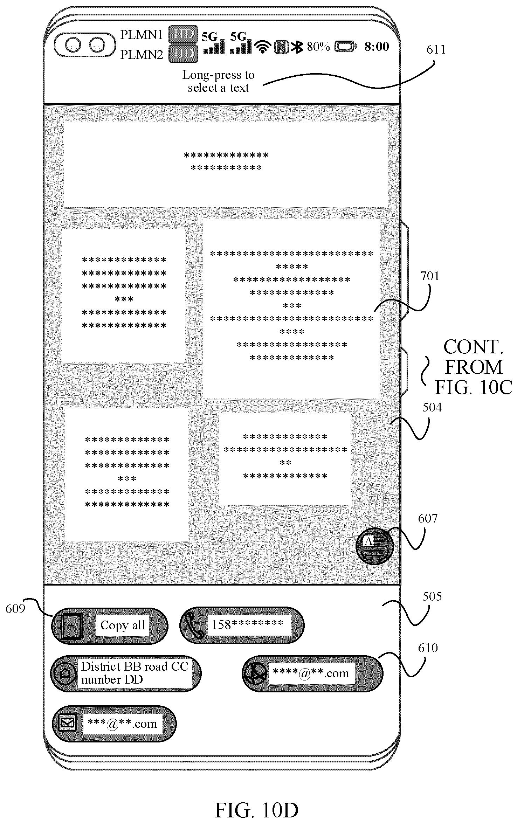

FIG. 10A, FIG. 10B, FIG. 10C, and FIG. 10D are a schematic diagram 5 of an interface according to an embodiment of this application. As shown in FIG. 10A, a terminal device opens a camera application and displays a first interface. For FIG. 10A, refer to FIG. 9A.

As shown in FIG. 10B, when determining that a current frame image (that is, a first image) in the preview stream is a document object, the terminal device displays a second button 606 on the first interface. For FIG. 10B, refer to FIG. 9B.

A user triggers a second button 606 on a first interface in FIG. 10B. As shown in FIG. 10C, the terminal device displays a second interface. For FIG. 10C, refer to FIG. 9C.

A user triggers a third button 607 on the second interface in FIG. 10C. As shown in FIG. 10D, the terminal device displays a third interface. The third interface includes a fourth window 504 and a fifth window 505. The third interface displays the third button 607, and the third button 607 is a "dynamic word extraction button". The third button 607 may have an expanded state or a collapsed state. In FIG. 10D, the third button 607 is in the collapsed state. Each text block 701 of the target text in the second image displayed in the fourth window 504 is highlighted. Optionally, a background color of the text block of the target text in the second image displayed in the fourth window 504 is gray. The terminal device detects that the target text in the second image displayed in the fourth window 504 includes an entity, and the terminal device displays, in the fifth window 505, a fifth button 609 and a sixth button 610 that is in a one-to-one correspondence with the entity. "Copy all" is displayed on the fifth button 609. If a user triggers the fifth button 609, the terminal device copies the target text (that is, the entire target text) in the second image in the fourth window 504. The terminal device further displays a seventh button 611 on the third interface. "Long-press to select a text" is displayed on the seventh button 611. In this way, a user may be prompted to long-press the target text in the fourth window 504 to select the target text.

Key information about an entity corresponding to the sixth button is displayed on the sixth button. As shown in FIG. 10D, for a phone number entity 86 158********, a sixth button 610 is displayed in the fifth window 505, and 158******** is displayed on the sixth button 610. For a website entity www.****@**.com, a sixth button 610 is displayed in the fifth window 505, and ****@**.com is displayed on the sixth button 610. For an address entity city AA district BB road CC number DD, a sixth button 610 is displayed in the fifth window 505, and district BB road CC number DD is displayed on the sixth button 610. For an email address entity www.***@**.com, a sixth button 610 is displayed in the fifth window 505, and ***@**.com is displayed on the sixth button 610.

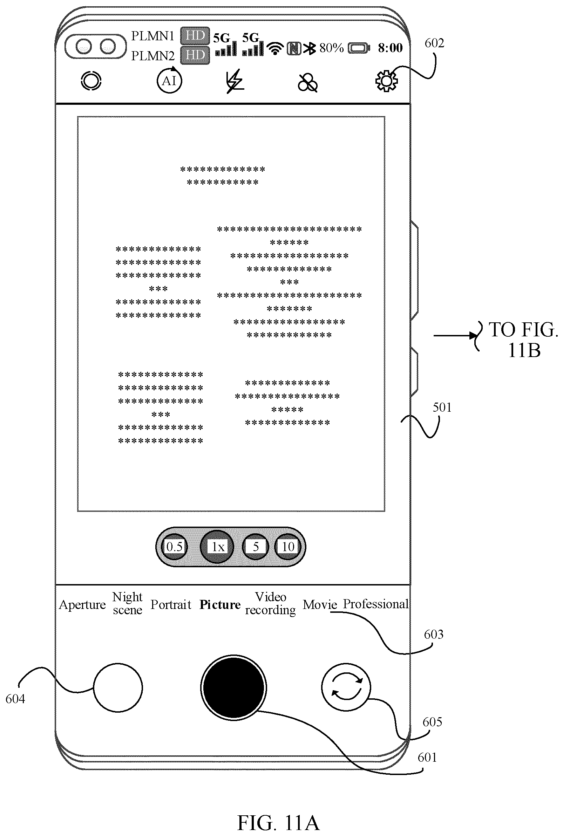

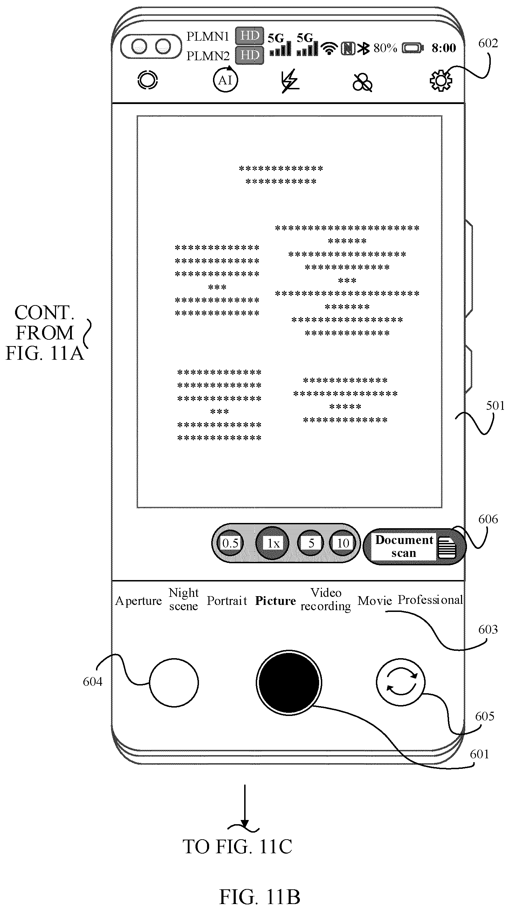

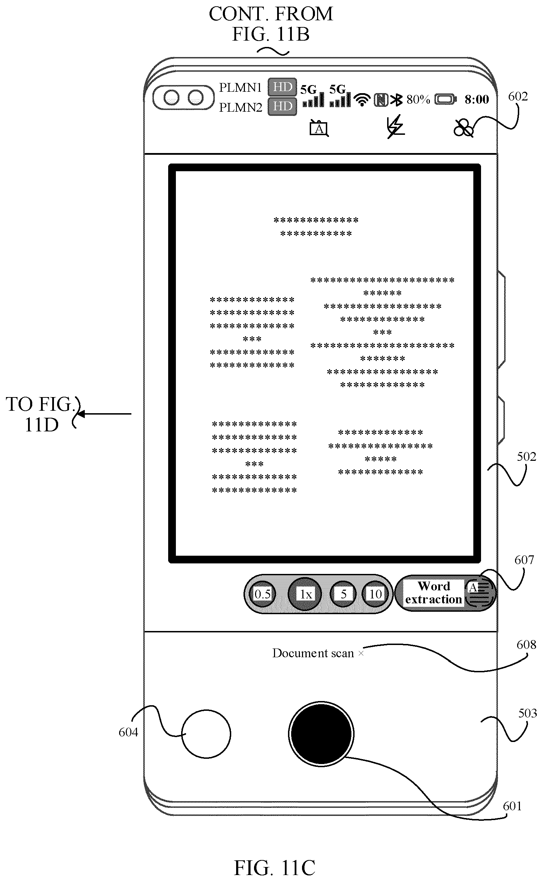

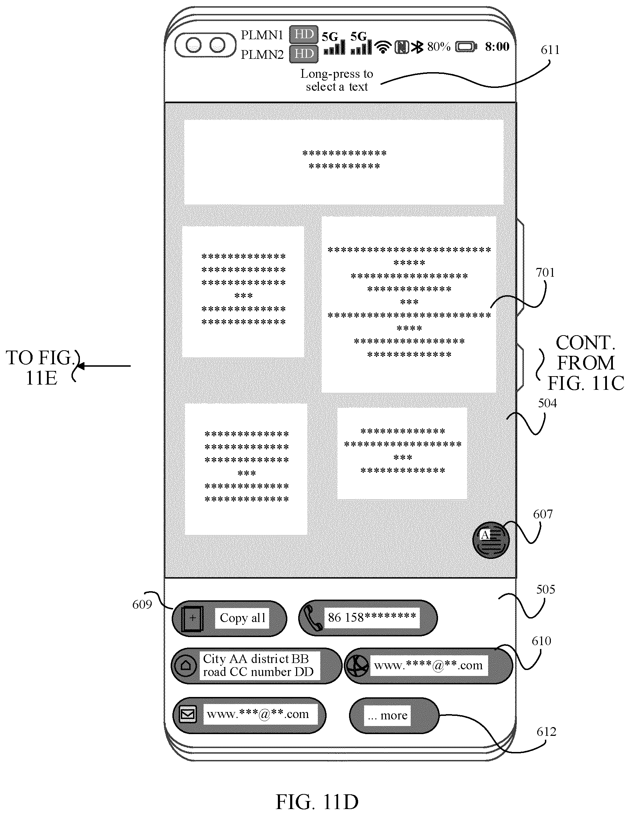

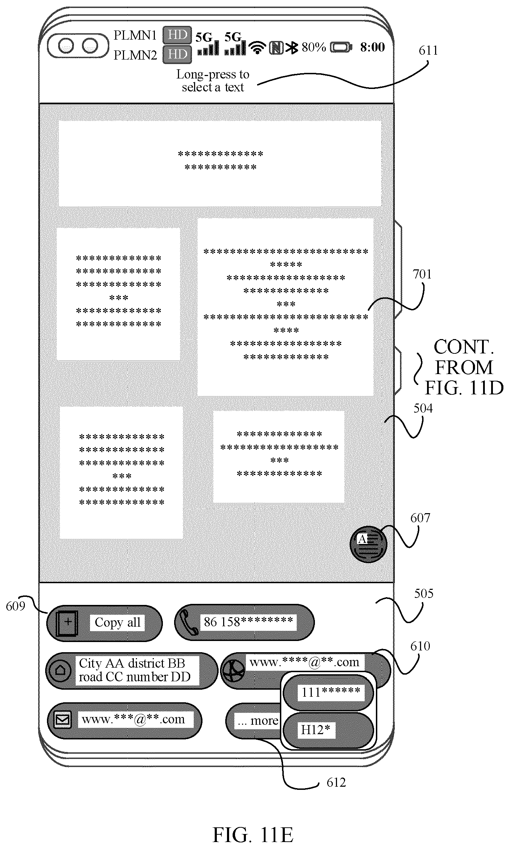

FIG. 11A, FIG. 11B, FIG. 11C, FIG. 11D, and FIG. 11E are a schematic diagram 6 of an interface according to an embodiment of this application. As shown in FIG. 11A, a terminal device opens a camera application and displays a first interface. For FIG. 11A, refer to FIG. 9A.

As shown in FIG. 11B, when determining that a current frame image (that is, a first image) in the preview stream is a document object, the terminal device displays a second button 606 on the first interface. For FIG. 11B, refer to FIG. 9B.

A user triggers the second button 606 on a first interface in FIG. 11B. As shown in FIG. 11C, the terminal device displays a second interface. For FIG. 11C, refer to FIG. 9C.

A user triggers a third button 607 on the second interface in FIG. 11C. As shown in FIG. 11D, the terminal device displays a third interface. The third interface includes a fourth window 504 and a fifth window 505. The third interface displays the third button 607, and the third button 607 is a "dynamic word extraction button". The third button 607 may have an expanded state or a collapsed state. In FIG. 11D, the third button 607 is in the collapsed state. Each text block 701 of the target text in the second image displayed in the fourth window 504 is highlighted. The terminal device detects that the target text in the second image displayed in the fourth window 504 includes an entity, and the terminal device displays, in the fifth window 505, a fifth button 609 and a sixth button 610 that is in a one-to-one correspondence with the entity. "Copy all" is displayed on the fifth button 609. If a user triggers the fifth button 609, the terminal device copies the target text (that is, the entire target text) in the second image in the fourth window 504. The terminal device further displays a seventh button 611 on the third interface. "Long-press to select a text" is displayed on the seventh button 611. In this way, a user may be prompted to long-press the target text in the fourth window 504 to select the target text.

If a number of entities in the second image is greater than a preset number M, the terminal device displays M-1 sixth buttons 610 in the fifth window 505. The fifth window 505 displays a tenth button 612, and "more" is displayed on the tenth button 612. For example, as shown in FIG. 11D, for a phone number entity 86 158********, a sixth button 610 is displayed in the fifth window 505, and 86 158******** is displayed on the sixth button 610. For a website entity www.****@**.com, a sixth button 610 is displayed in the fifth window 505, and ****@**.com is displayed on the sixth button 610. For an address entity city AA district BB road CC number DD, a sixth button 610 is displayed in the fifth window 505, and district BB road CC number DD is displayed on the sixth button 610. For an email address entity www.***@**.com, a sixth button 610 is displayed in the fifth window 505, and ***@**.com is displayed on the sixth button 610. The tenth button 612 is displayed on the fifth window.

A user triggers the tenth button 612 in the fifth window 505 of the third interface in FIG. 11D. As shown in FIG. 11E, the terminal device displays, in the fifth window 505 of the third interface, the remaining sixth buttons 610 that are not displayed. For example, for a sixth button 610 corresponding to an entity "delivery number", "111******" is displayed on the sixth button 610, and for a sixth button 610 corresponding to an entity "flight number", "H12*" is displayed on the sixth button 610.

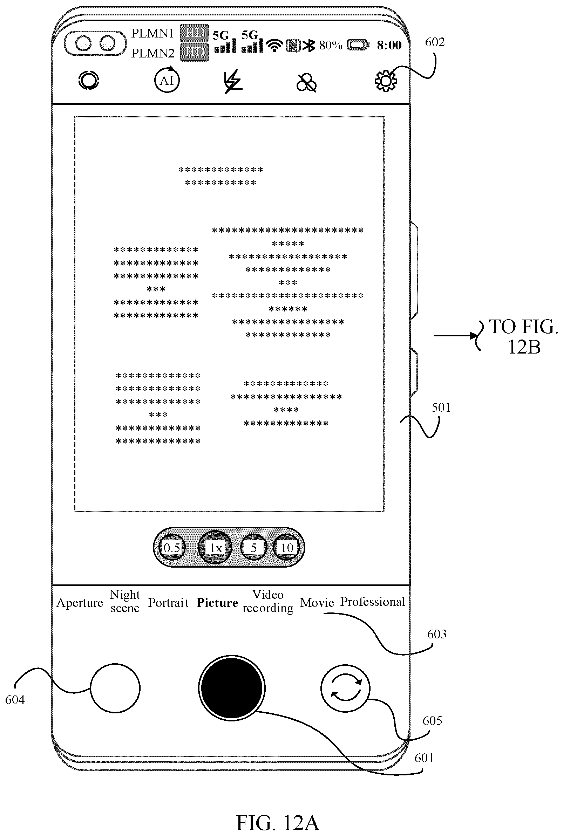

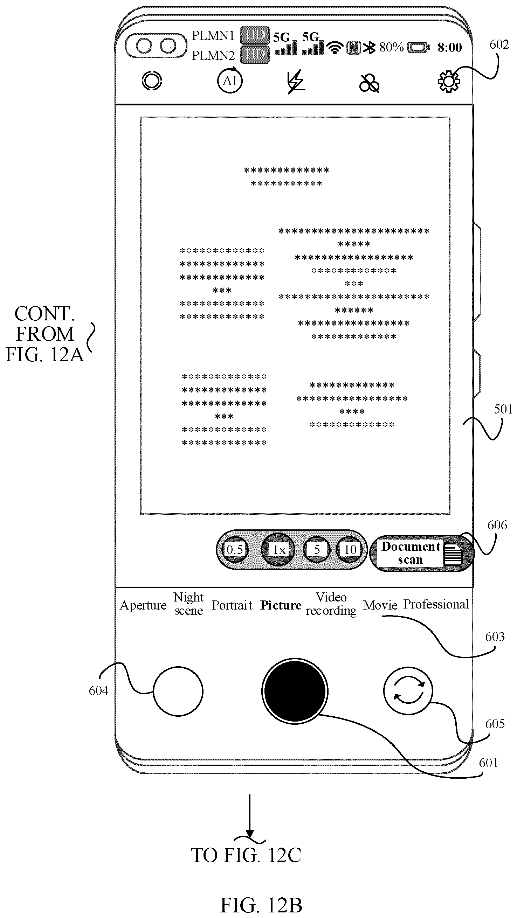

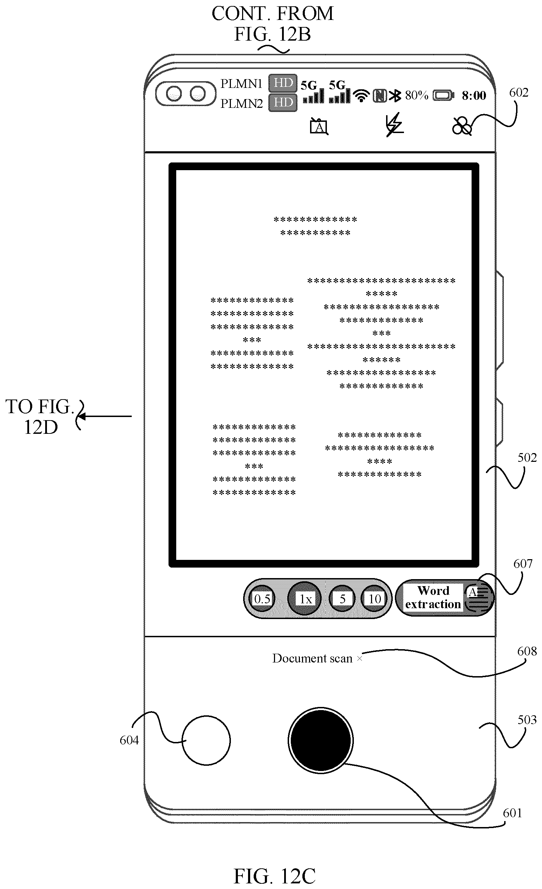

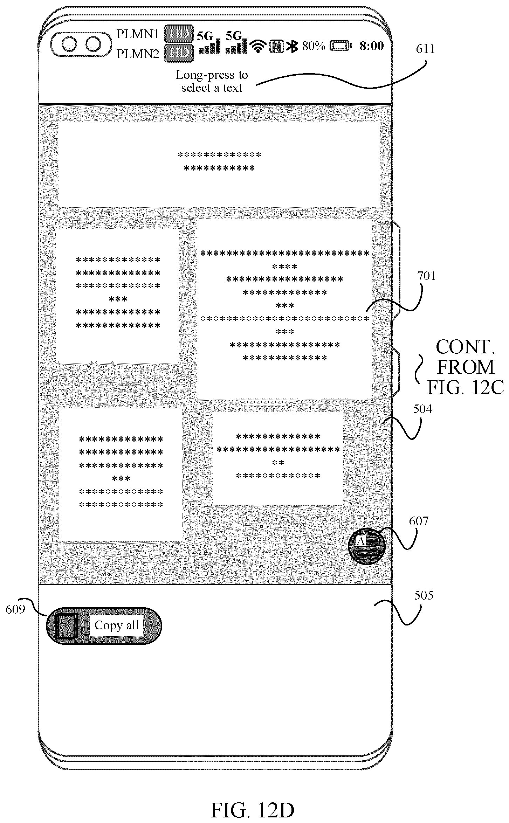

FIG. 12A, FIG. 12B, FIG. 12C, and FIG. 12D are a schematic diagram 7 of an interface according to an embodiment of this application. As shown in FIG. 12A, a terminal device opens a camera application and displays a first interface. For FIG. 12A, refer to FIG. 9A.

As shown in FIG. 12B, when determining that a current frame image (that is, a first image) in the preview stream is a document object, the terminal device displays a second button 606 on the first interface. For FIG. 12B, refer to FIG. 9B.

A user triggers the second button 606 on a first interface in FIG. 12B. As shown in FIG. 12C, the terminal device displays a second interface. For FIG. 12C, refer to FIG. 9C.

A user triggers a third button 607 on the second interface in FIG. 12C. As shown in FIG. 12D, the terminal device displays a third interface. The third interface includes a fourth window 504 and a fifth window 505. The third interface displays the third button 607, and the third button 607 is a "dynamic word extraction button". The third button 607 may have an expanded state or a collapsed state. In FIG. 12D, the third button 607 is in the collapsed state. Each text block 701 of the target text in the second image displayed in the fourth window 504 is highlighted. The terminal device detects that the target text in the second image displayed in the fourth window 504 does not include any entity, and the terminal device displays a fifth button 609 in the fifth window 505. "Copy all" is displayed on the fifth button 609. If a user triggers the fifth button 609, the terminal device copies the target text (that is, the entire target text) in the second image in the fourth window 504. The terminal device further displays a seventh button 611 on the third interface. "Long-press to select a text" is displayed on the seventh button 611. In this way, a user may be prompted to long-press the target text in the fourth window 504 to select the target text.

S305: The terminal device displays the second interface in response to that the third button on the third interface is triggered.

Exemplarily, after step S304, the user triggers the third button "dynamic word extraction button" on the third interface, and in this case, the terminal device exits the third interface, and displays the second interface. The second interface includes the second window and the third window, and the second window displays the preview stream collected by the terminal device in real time. In addition, the terminal device highlights an outer frame of a document detected in the current frame image in the preview stream. For example, the outer frame of the document detected in the current frame image is highlighted in yellow.

If determining that the current frame image of the preview stream in the second window includes the target text, the terminal device displays the third button on the second interface. The third button is a "dynamic word extraction button", and the third button is a button that is configured to be triggered to extract a text in an image. "Text extraction" is displayed on the third button, so that a user determines a function of the third button.

The third button is a dynamic button. The third button may have an expanded state and a collapsed state. In addition, when displaying the third button for the first time, the terminal device may display the third button at the lower right corner of the second window. A user may drag the third button. Further, the terminal device moves the third button on the second interface in response to the dragging operation of the user.

If determining that the current frame image of the preview stream in the second window does not include the target text, the terminal device does not display the third button on the second interface.

Therefore, in response to that the third button "dynamic word extraction button" on the third interface is triggered, the terminal device returns to display the second interface in step S303.

It should be noted that the second window of the second interface displays the preview stream collected in real time by the terminal device. Therefore, the current frame image that is in the preview stream collected in real time and that is displayed when the terminal device displays the second interface in step S305 is not the same as the current frame image displayed in step S303, and image content of the two is the same or different.

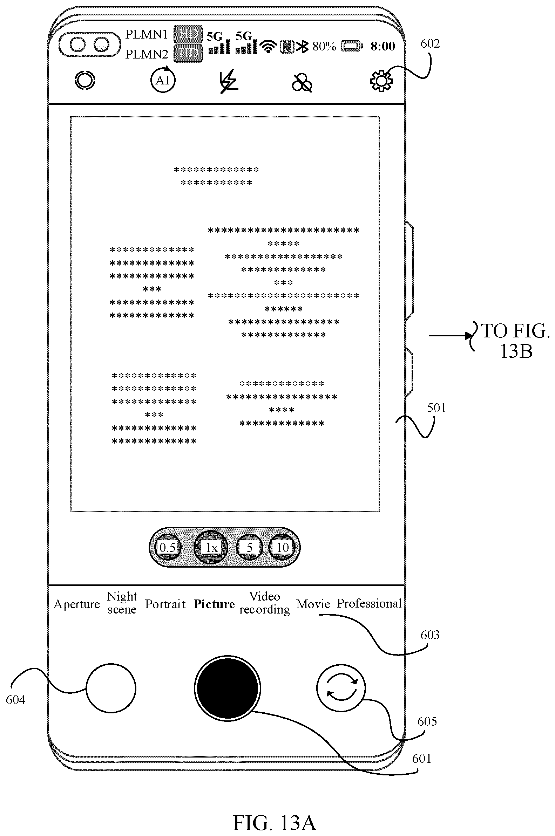

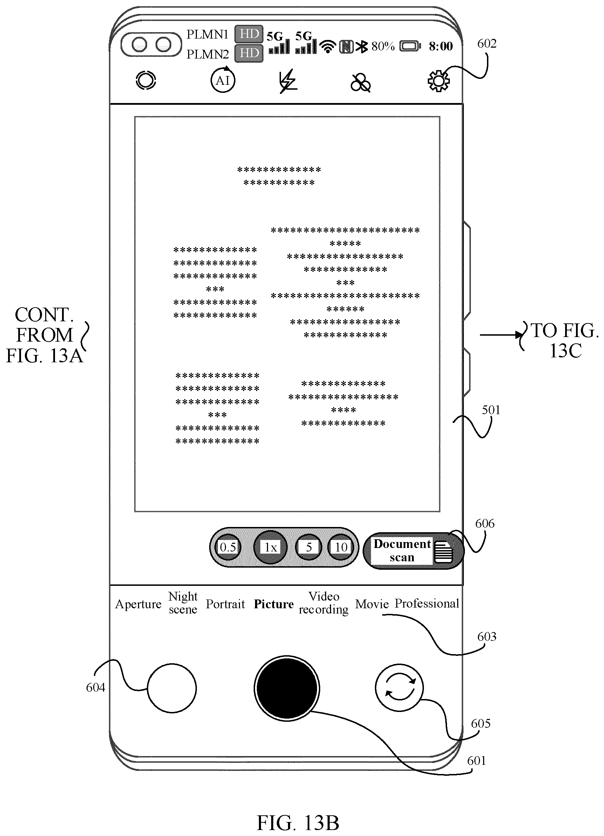

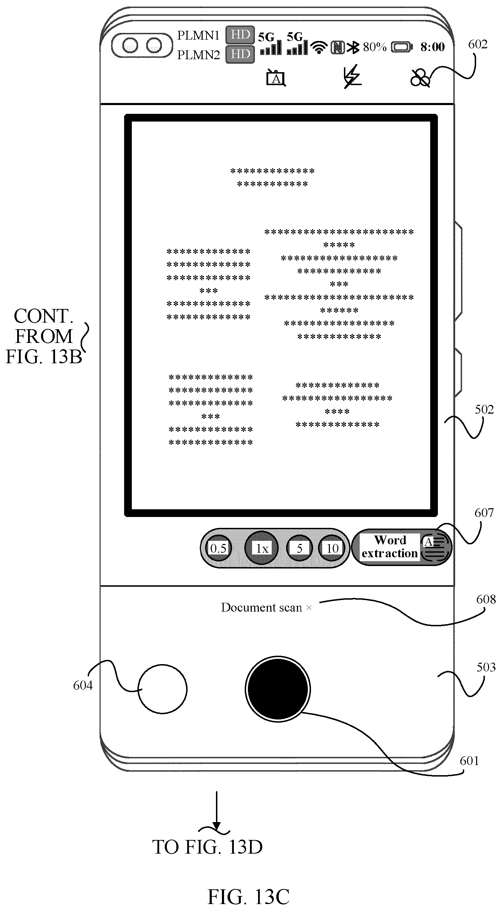

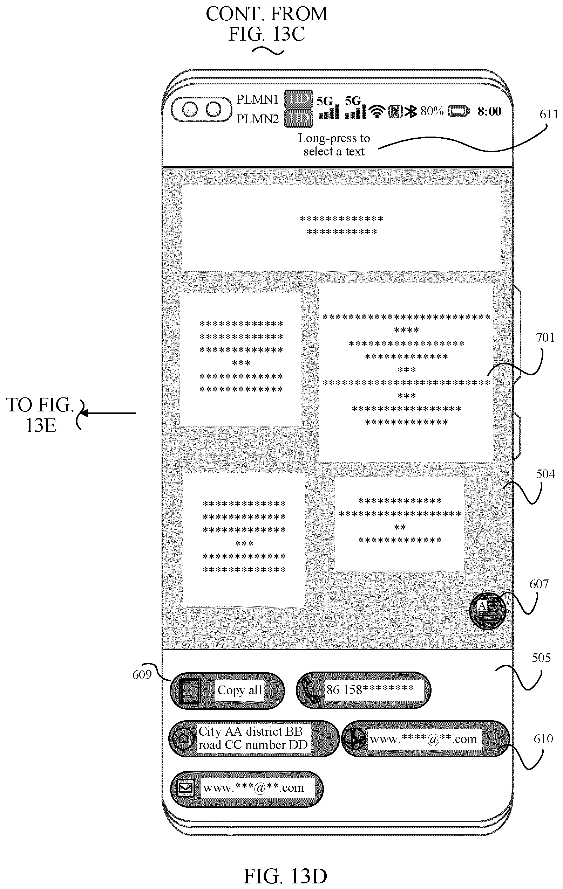

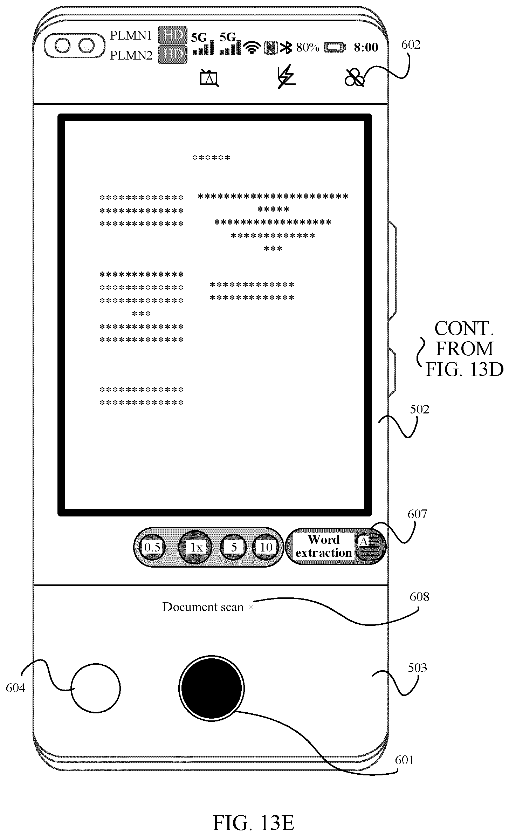

FIG. 13A, FIG. 13B, FIG. 13C, FIG. 13D, and FIG. 13E are a schematic diagram 8 of an interface according to an embodiment of this application. As shown in FIG. 13A, a terminal device opens a camera application and displays a first interface. For FIG. 13A, refer to FIG. 9A.

As shown in FIG. 13B, when determining that a current frame image (that is, a first image) in the preview stream is a document object, the terminal device displays a second button 606 on the first interface. For FIG. 13B, refer to FIG. 9B.

A user triggers the second button 606 on a first interface in FIG. 13B. As shown in FIG. 13C, the terminal device displays a second interface. For FIG. 13C, refer to FIG. 9C.

A user triggers a third button 607 on the second interface in FIG. 13C. As shown in FIG. 13D, the terminal device displays a third interface. For FIG. 13D, refer to FIG. 9D, or refer to FIG. 10D, or refer to FIG. 11D, or refer to FIG. 12D.

A user triggers the third button 607 on the third interface in FIG. 13D. As shown in FIG. 13E, the terminal device displays the second interface. For FIG. 13D, refer to FIG. 9C. In this case, the terminal device displays, in a second window 504 of the second interface, a preview stream collected by the terminal device in real time.

S306: The terminal device displays a fourth interface in response to that the first button on the second interface is triggered, where the fourth interface displays a third image in the preview stream, an outer frame of a document in the third image on the fourth interface is highlighted, and the fourth interface includes a seventh button, an eighth button, and a ninth button.

Exemplarily, step S303 provides two manners. A manner 1 of step S303 is: The terminal device detects, in real time, whether a current frame image of the preview stream displayed in the second window of the second interface includes a target text. If detecting that the current frame image of the preview stream displayed in the second window of the second interface includes the target text, the terminal device displays the third button on the second interface. The third button is a "dynamic word extraction button". If detecting that the current frame image of the preview stream displayed in the second window of the second interface does not include the target text, the terminal device does not display the third button on the second interface. The second interface further includes the first button (a photographing button). The second interface further includes a fourth button (a "document scan ×" button). Alternatively, if it is determined in real time that the current frame image in the preview stream is the document object, the second interface displays the fourth button (the "document scan ×" button).

A manner 2 of step S303 is: The terminal device detects in real time whether the current frame image of the preview stream displayed in the second window of the second interface includes the target text, and regardless of whether the target text is detected, the terminal device displays the third button on the second interface. The third button is a "dynamic word extraction button". The second interface further includes the first button (a photographing button). The second interface further includes a fourth button (a "document scan ×" button). Alternatively, if it is determined in real time that the current frame image in the preview stream is the document object, the second interface displays the fourth button (the "document scan ×" button).

In this case, in step S306, in the "manner 1 of step S303", the second interface always includes the first button (the photographing button). In the "manner 2 of step S303", the second interface also always includes the first button (the photographing button).

Therefore, in both the foregoing manners, a user can see that the second interface displays the first button (the photographing button).

If the user triggers the first button (the photographing button) on the second interface, the terminal device displays the fourth interface. The fourth interface displays a third image in the preview stream collected by the terminal device in real time, and the third image is an image collected when the user triggers the first button on the second interface. It can be known that the fourth interface is configured to display a frame image. In addition, the terminal device highlights an outer frame of a document detected in the third image. For example, the outer frame of the document detected in the third image is highlighted in yellow.

In addition, the terminal device displays the seventh button, the eighth button, and the ninth button on the fourth interface. The seventh button is a button configured to return to the second interface, and "preview" is displayed on the seventh button. The eighth button is a button configured to recapture an image, and "recapture" is displayed on the eighth button, that is, the eighth button is a recapture button. The ninth button is a button configured to confirm to perform image processing on the third image, and "confirm and continue" is displayed on the ninth button, that is, the ninth button is a confirm and continue button.

The terminal device displays the second interface in response to that the seventh button on the fourth interface is triggered.

The terminal device obtains a frame image in the preview stream again in response to that the eighth button on the fourth interface is triggered. The image is a current frame image in the preview stream when the eighth button is triggered.

S307: The terminal device displays a fifth interface in response to that the ninth button on the fourth interface is triggered, where the fifth interface displays the third image in the preview stream, and the fifth interface includes at least one image processing button.

Exemplarily, after step S306, if the user triggers the ninth button, that is, the "confirm and continue button" on the fourth interface, the terminal device displays the fifth interface. The fifth interface displays the third image. Optionally, the terminal device zooms in to display the third image on the fifth interface.

The fifth interface includes at least one image processing button, an eleventh button, a delete button, and an export button.

The at least one image processing button includes one or more of the following: a recapture button, a copy button, a document correction button, an image processing button, and a word extraction button. If the user triggers the recapture button, the terminal device re-obtains a latest frame image in the preview stream. If the user triggers the copy button, the terminal device copies the image displayed on the fifth interface. If the user triggers the document correction button, the terminal device performs document correction processing on the image displayed on the fifth interface. If the user triggers the image processing button, the terminal device performs processing such as enhancement and de-shadow on the image displayed on the fifth interface. If the user triggers the word extraction button, the terminal device extracts the target text from the image displayed on the fifth interface.

The eleventh button is a button configured to return to the fourth interface, and "preview" is displayed on the eleventh button. If the user triggers the eleventh button, the terminal device returns to the fourth interface.

The delete button is a button configured to delete the image displayed on the fifth interface. If the user triggers the delete button, the terminal device deletes the image displayed on the fifth interface, that is, does not store the image displayed on the fifth interface.

The export button is a button configured to export the image displayed on the fifth interface. If the user triggers the export button, the terminal device exports the image displayed on the fifth interface, that is, stores the image displayed on the fifth interface.

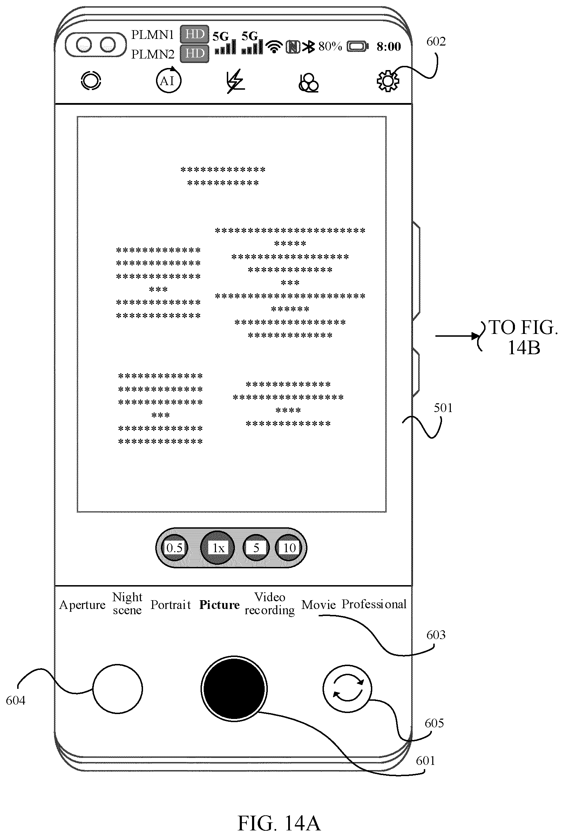

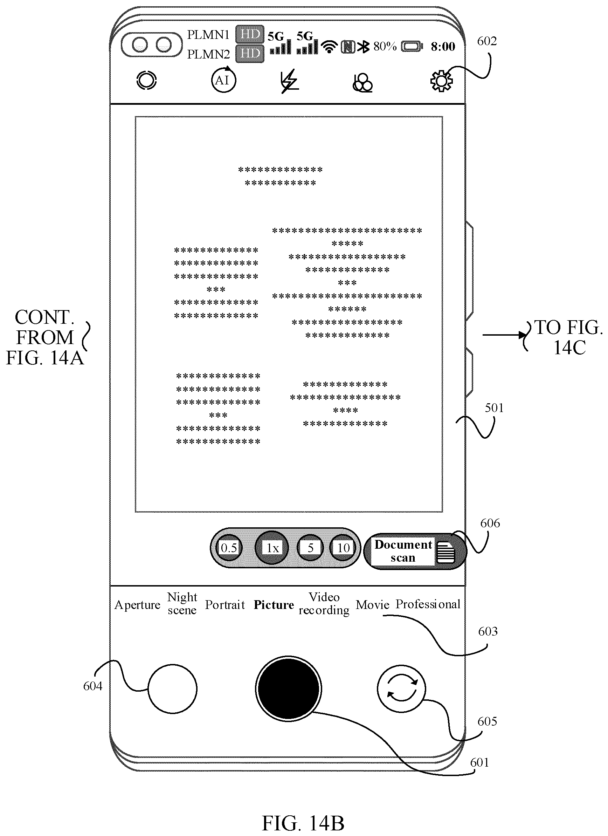

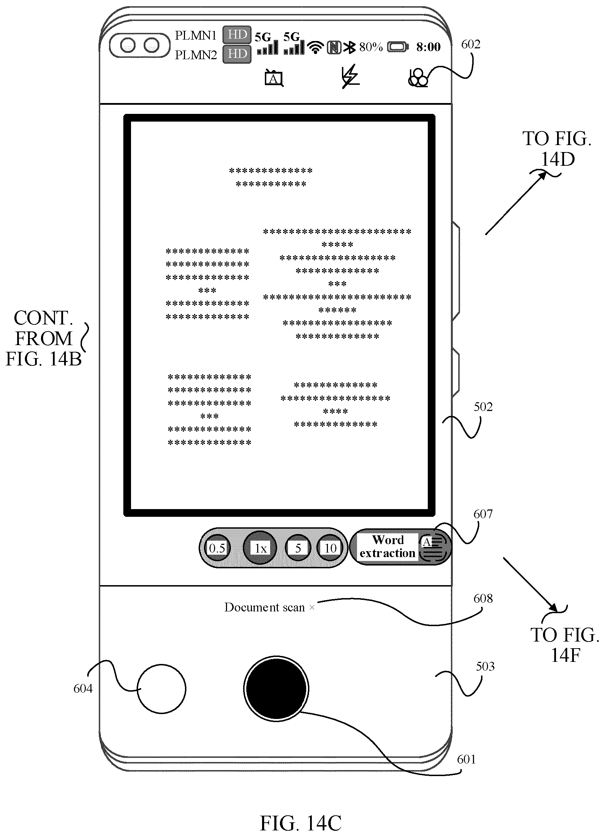

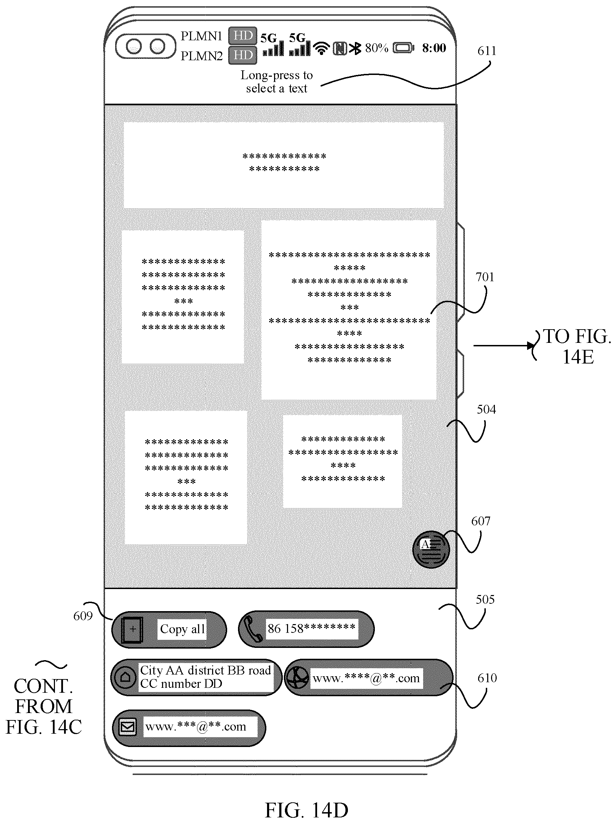

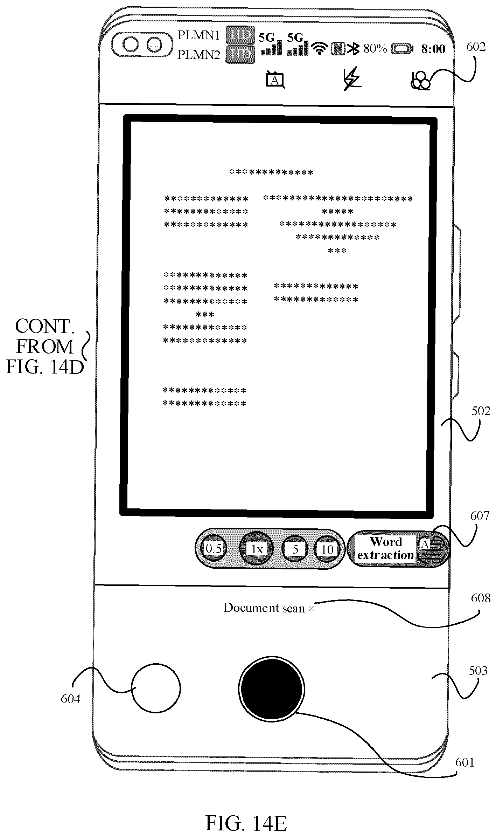

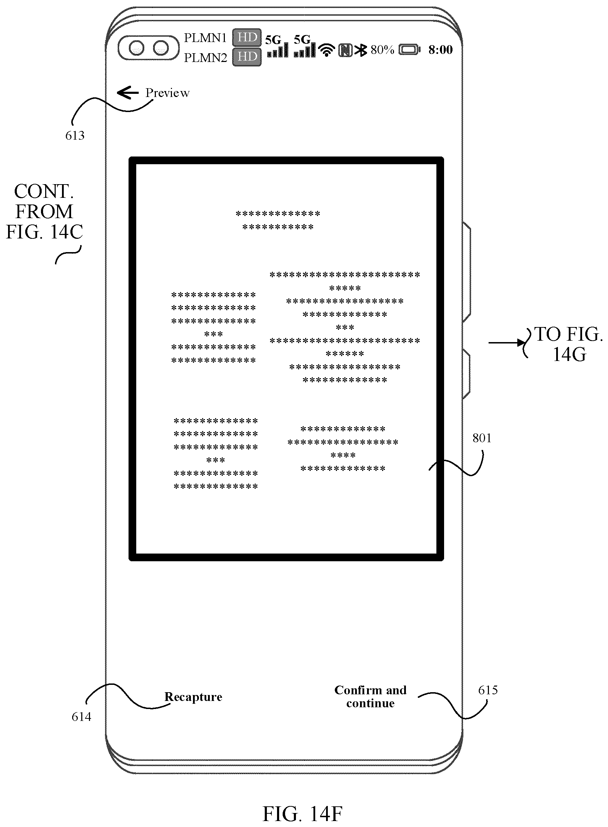

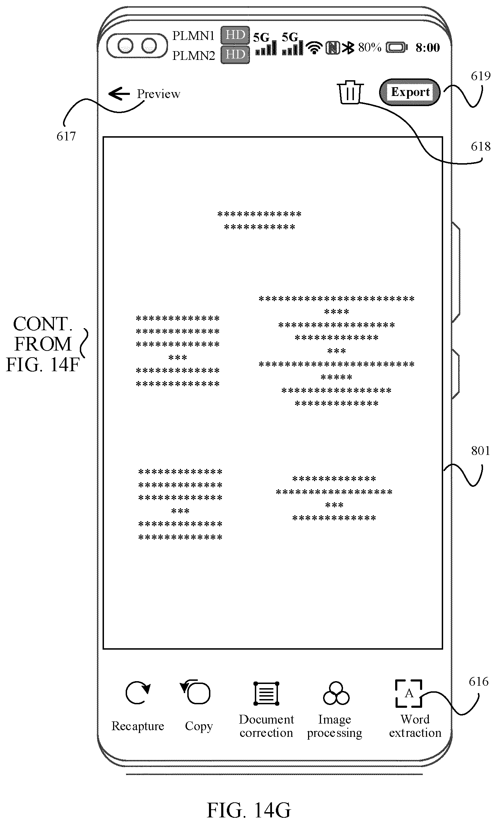

FIG. 14A, FIG. 14B, FIG. 14C, FIG. 14D, FIG. 14E, FIG. 14F, and FIG. 14G are a schematic diagram 9 of an interface according to an embodiment of this application. As shown in FIG. 14A, a terminal device opens a camera application and displays a first interface. For FIG. 14A, refer to FIG. 9A.

As shown in FIG. 14B, when determining that a current frame image (that is, a first image) in the preview stream is a document object, the terminal device displays a second button 606 on the first interface. For FIG. 14B, refer to FIG. 9B.

A user triggers the second button 606 on a first interface in FIG. 14B. As shown in FIG. 14C, the terminal device displays a second interface. For FIG. 14C, refer to FIG. 9C.

A user triggers a third button 607 on the second interface in FIG. 14C. As shown in FIG. 14D, the terminal device displays a third interface. For FIG. 14D, refer to FIG. 9D, or refer to FIG. 10D, or refer to FIG. 11D, or refer to FIG. 12D.

A user triggers the third button 607 on the third interface in FIG. 14D. As shown in FIG. 14E, the terminal device displays the second interface. For FIG. 14D, refer to FIG. 9C. In this case, the terminal device displays, in a second window 504 of the second interface, a preview stream collected by the terminal device in real time.

The user triggers a first button 601 on the second interface in FIG. 14C. As shown in FIG. 14F, the terminal device displays the fourth interface. The fourth interface displays a third image 801. The third image 801 is a frame image collected in real time when the first button 601 of the second interface is triggered. The fourth interface includes a seventh button 613, an eighth button 614, and a ninth button 615. "Preview" is displayed on the seventh button 613, "recapture" is displayed on the eighth button 614, and "confirm and continue" is displayed on the ninth button 615.

The user triggers the ninth button 615 on the fourth interface in FIG. 14F. As shown in FIG. 14G, the terminal device displays a fifth interface. The fifth interface displays the third image 801. Optionally, the third image 801 displayed on the fifth interface is a zoomed-in image. The fifth interface includes at least one image processing button 616. The fifth interface further includes an eleventh button 617, a delete button 618, and an export button 619.

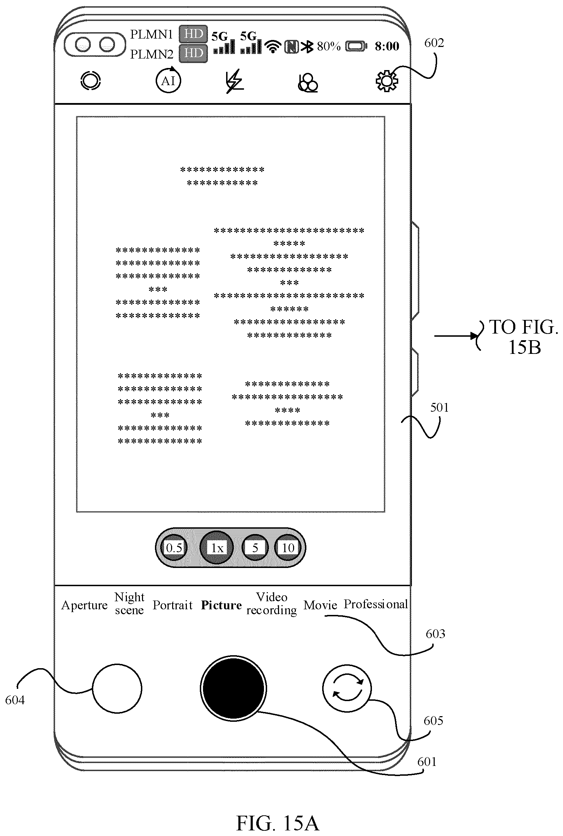

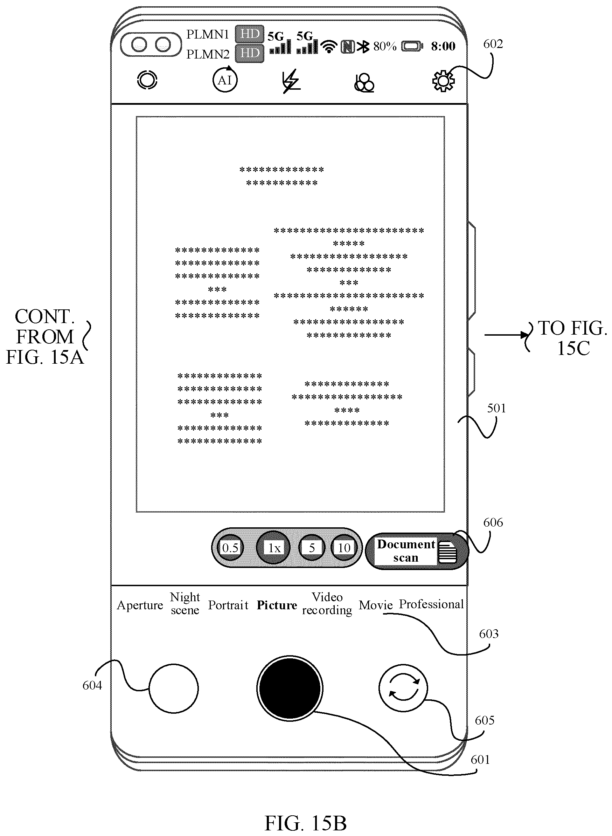

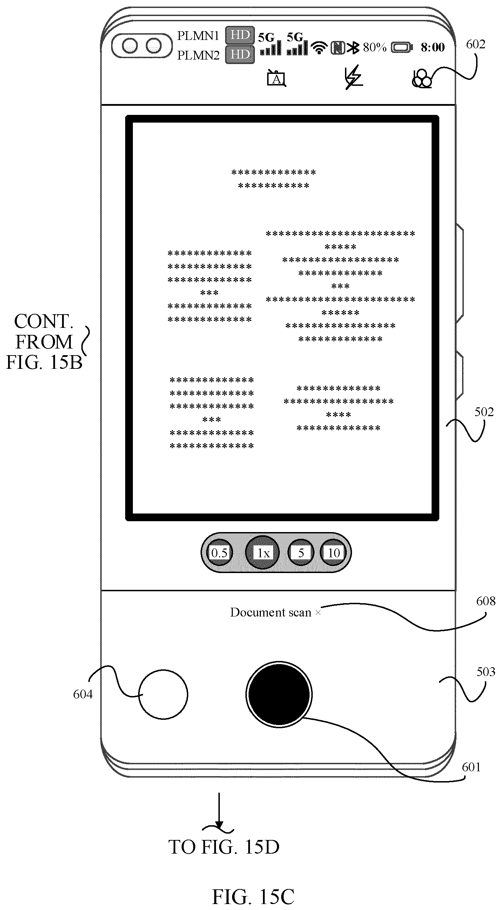

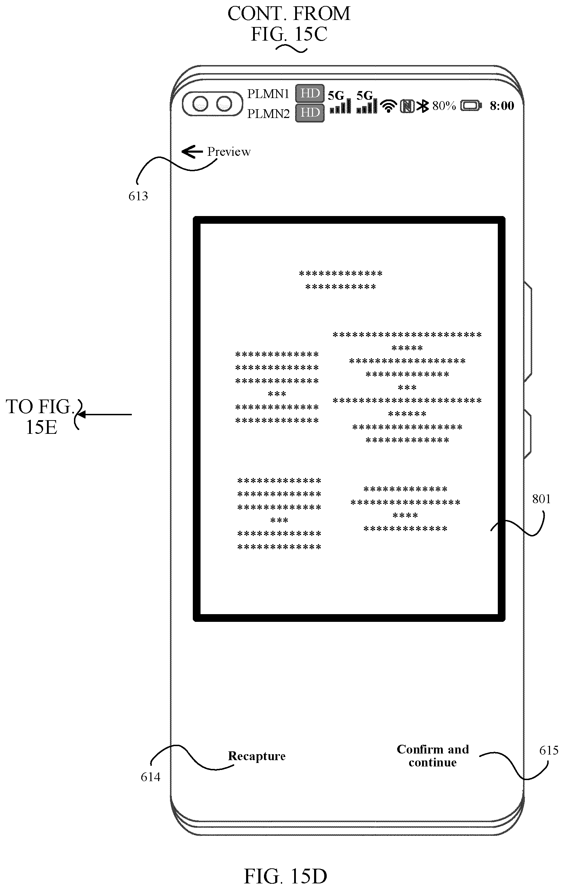

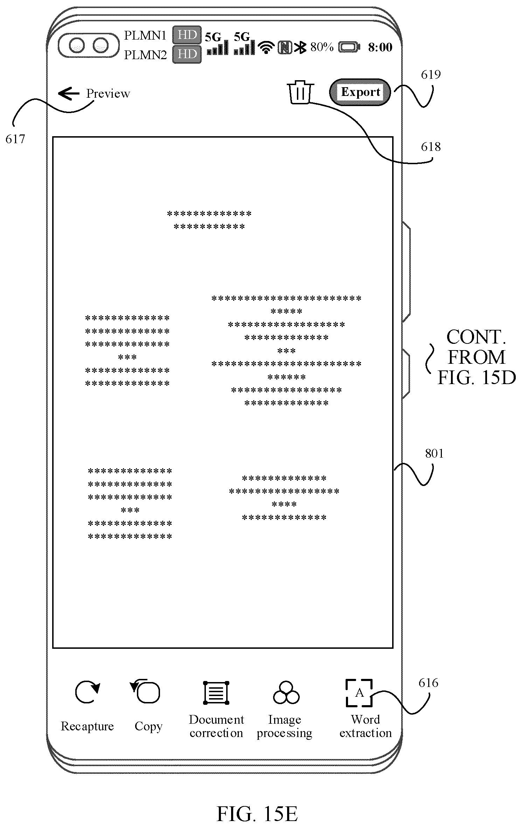

FIG. 15A, FIG. 15B, FIG. 15C, FIG. 15D, and FIG. 15E are a schematic diagram 10 of an interface according to an embodiment of this application. As shown in FIG. 15A, a terminal device opens a camera application and displays a first interface. For FIG. 15A, refer to FIG. 9A.

As shown in FIG. 15B, when determining that a current frame image (that is, a first image) in the preview stream is a document object, the terminal device displays a second button 606 on the first interface. For FIG. 15B, refer to FIG. 9B.

A user triggers the second button 606 on a first interface in FIG. 15B. As shown in FIG. 15C, the terminal device displays a second interface. The second interface includes a second window 502 and a third window 503, and the second window 502 displays a preview stream collected by a terminal device. The terminal device detects, in real time, whether a current frame image of the preview stream displayed in the second window 502 includes a target text. When determining that the current frame image of the preview stream displayed in the second window 502 does not include the target text, the terminal device does not display the third button on the second interface. The terminal device displays a first button 601, a preview button 604, and a fourth button 608 in the third window 503 of the second interface. "Document scan ×" is displayed on the fourth button 608. The first interface may further include at least one photographing-related setting button 602.

A user triggers the first button 601 on the second interface in FIG. 15C. As shown in FIG. 15D, the terminal device displays a fourth interface. The fourth interface displays a third image 801. The third image 801 is a frame image collected in real time when the first button 601 of the second interface is triggered. The fourth interface includes a seventh button 613, an eighth button 614, and a ninth button 615. "Preview" is displayed on the seventh button 613, "recapture" is displayed on the eighth button 614, and "confirm and continue" is displayed on the ninth button 615.

The user triggers the ninth button 615 on the fourth interface in FIG. 15D. As shown in FIG. 15E, the terminal device displays a fifth interface. The fifth interface displays the third image 801. Optionally, the third image 801 displayed on the fifth interface is a zoomed-in image. The fifth interface includes at least one image processing button 616. The fifth interface further includes an eleventh button 617, a delete button 618, and an export button 619.

S308: The terminal device displays the first interface in response to that the fourth button on the second interface is triggered.

For example, if the user triggers the fourth button (the "document scan ×" button) on the second interface, the terminal device exits the second interface. Therefore, the terminal device displays the first interface.

In a process in which the terminal exits the second interface and displays the first interface, the terminal device detects, in real time, an object category of the current frame image in the preview stream on the first interface. Refer to descriptions of step S301. Further, if determining that the object category of the current frame image in the preview stream on the first interface is a document object, the terminal device displays the second button (a dynamic document scanning button) on the first interface. If determining that the object category of the current frame image in the preview stream on the first interface is a text object, the terminal device displays the third button (a dynamic word extraction button) on the first interface.

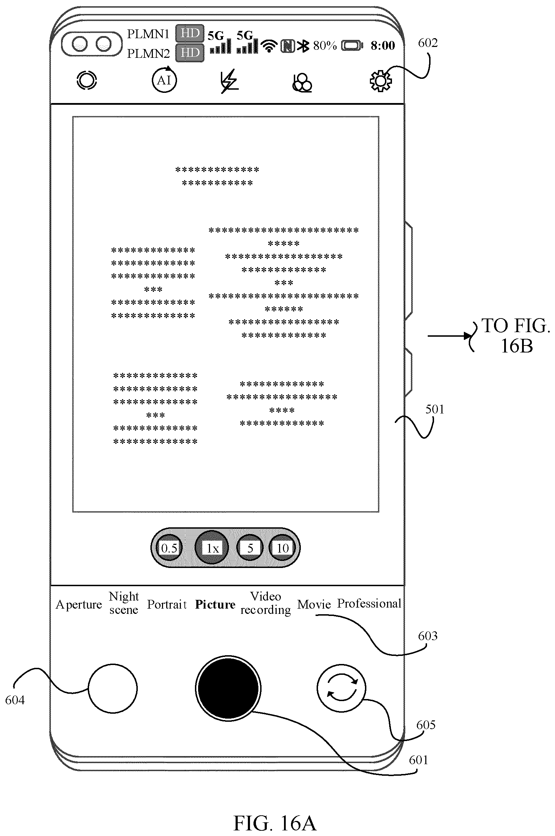

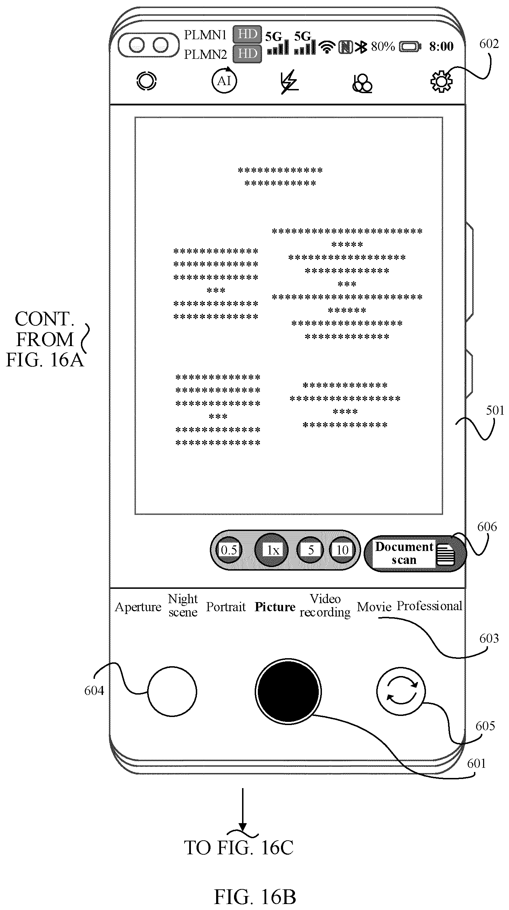

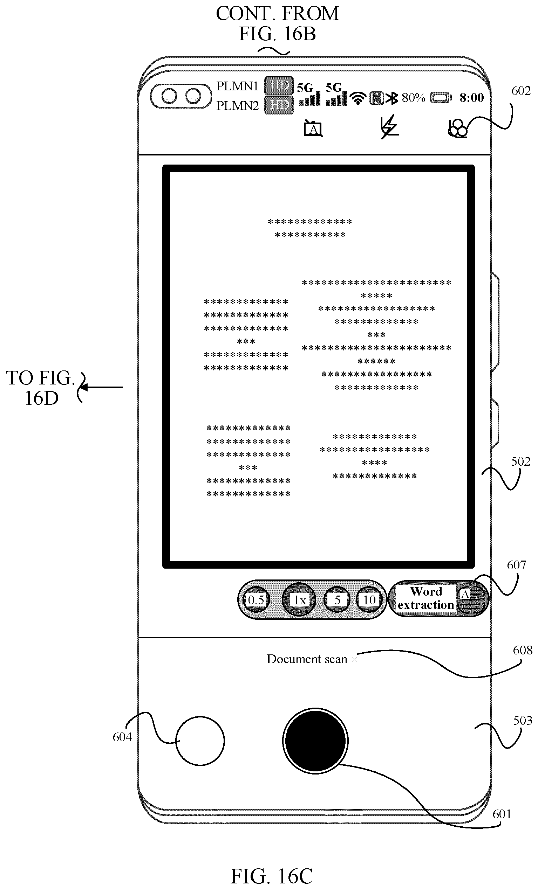

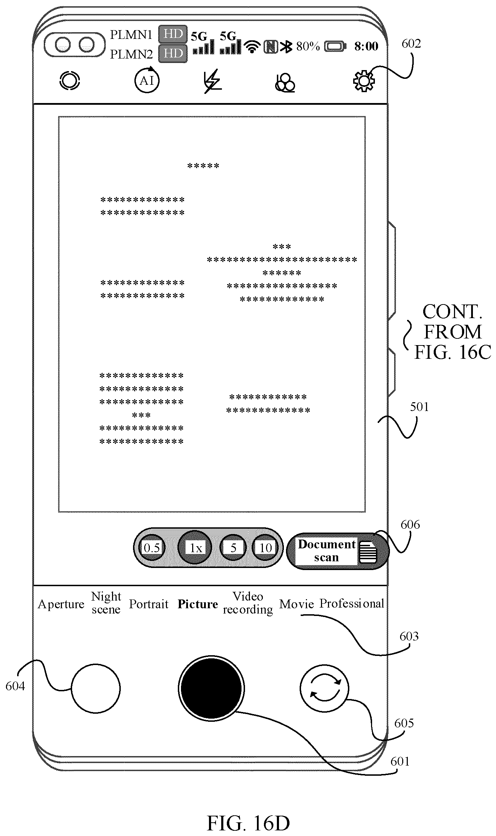

FIG. 16A, FIG. 16B, FIG. 16C, and FIG. 16D are a schematic diagram 11 of an interface according to an embodiment of this application. As shown in FIG. 16A, a terminal device opens a camera application and displays a first interface. For FIG. 16A, refer to FIG. 9A.

As shown in FIG. 16B, when determining that a current frame image (that is, a first image) in the preview stream is a document object, the terminal device displays a second button 606 on the first interface. For FIG. 16B, refer to FIG. 9B.

A user triggers the second button 606 on a first interface in FIG. 16B. As shown in FIG. 16C, the terminal device displays a second interface. For FIG. 16C, refer to FIG. 9C.

A user triggers a fourth button 608 (the "document scan ×" button) on the second interface in FIG. 16C. As shown in FIG. 16D, the terminal device displays the first interface. The terminal device detects the object category of the current frame image in the preview stream on the first interface in real time. As shown in FIG. 16D, if determining that the object category of the current frame image in the preview stream on the first interface is a document object, the terminal device displays the second button 606 (a dynamic document scanning button) on the first interface.

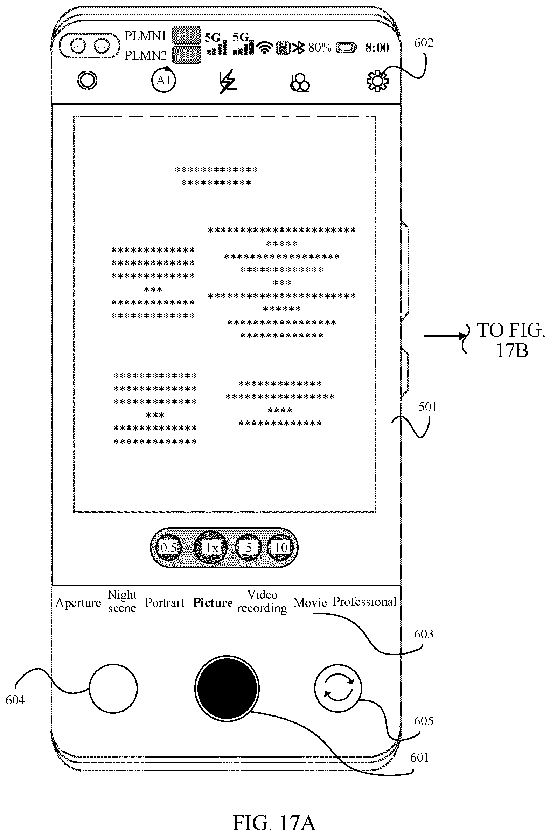

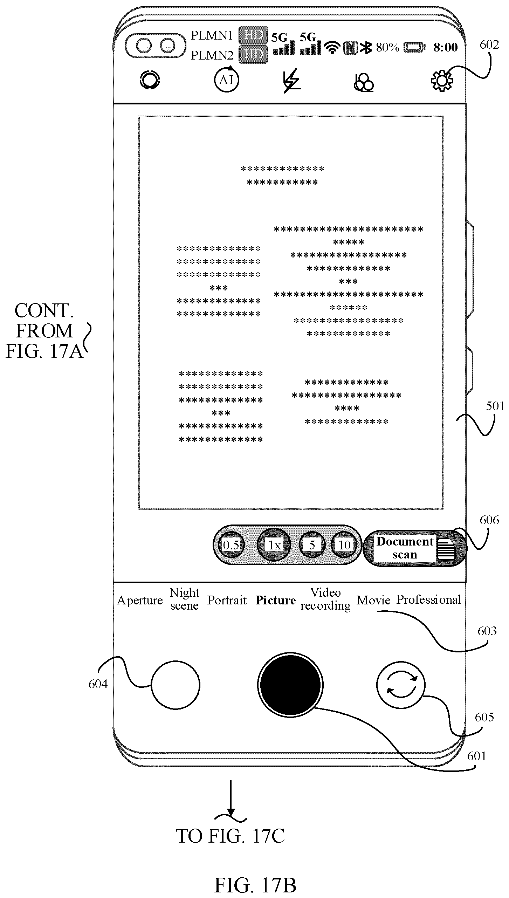

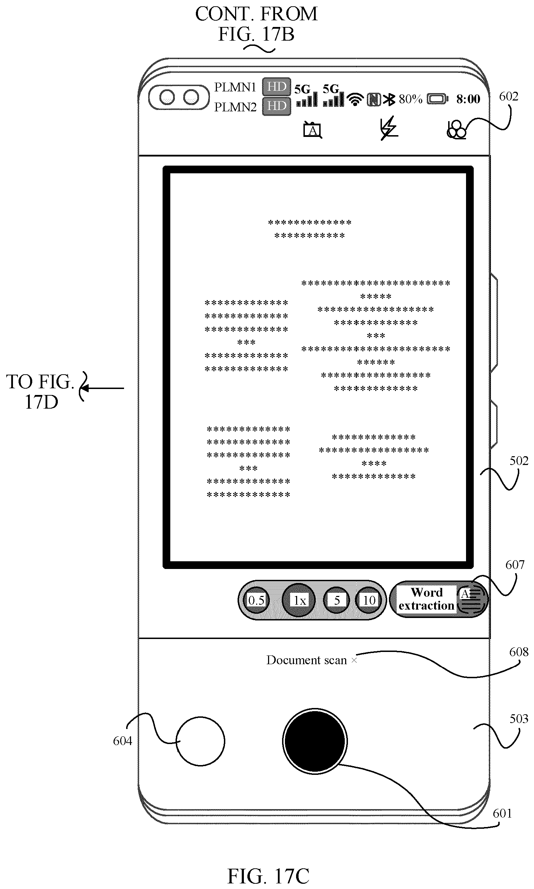

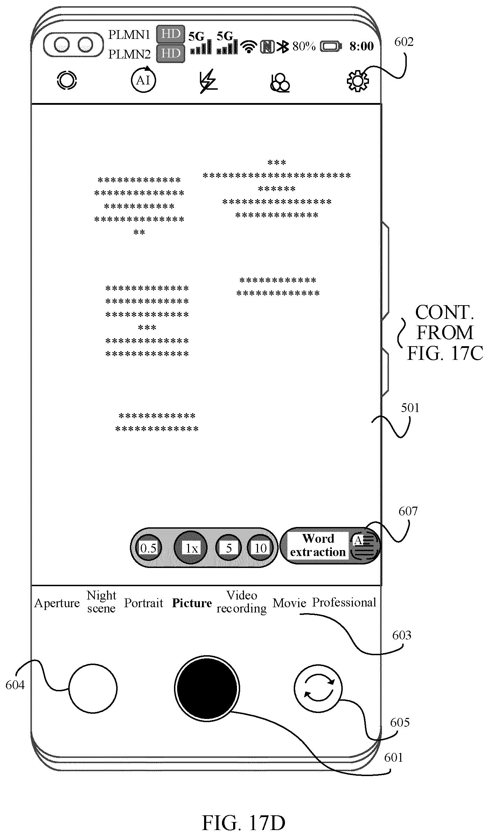

FIG. 17A, FIG. 17B, FIG. 17C, and FIG. 17D are a schematic diagram 12 of an interface according to an embodiment of this application. As shown in FIG. 17A, a terminal device opens a camera application and displays a first interface. For FIG. 17A, refer to FIG. 9A.

As shown in FIG. 17B, when determining that a current frame image (that is, a first image) in the preview stream is a document object, the terminal device displays a second button 606 on the first interface. For FIG. 17B, refer to FIG. 9B.

A user triggers the second button 606 on a first interface in FIG. 17B. As shown in FIG. 17C, the terminal device displays a second interface. For FIG. 17C, refer to FIG. 9C.

A user triggers a fourth button 608 (the "document scan ×" button) on the second interface in FIG. 17C. As shown in FIG. 17D, the terminal device displays the first interface. The terminal device detects the object category of the current frame image in the preview stream on the first interface in real time. As shown in FIG. 17D, if determining that the object category of the current frame image in the preview stream on the first interface is a text object, the terminal device displays a third button 607 (a dynamic word extraction button) on the first interface.

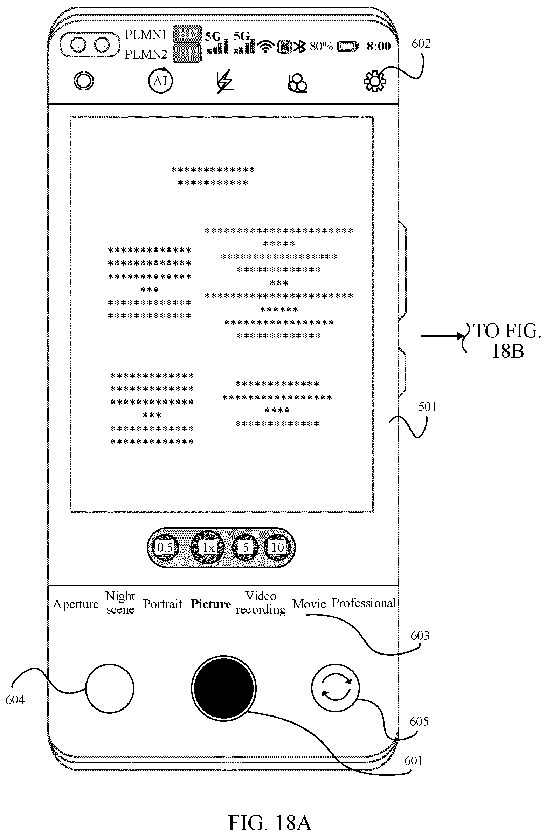

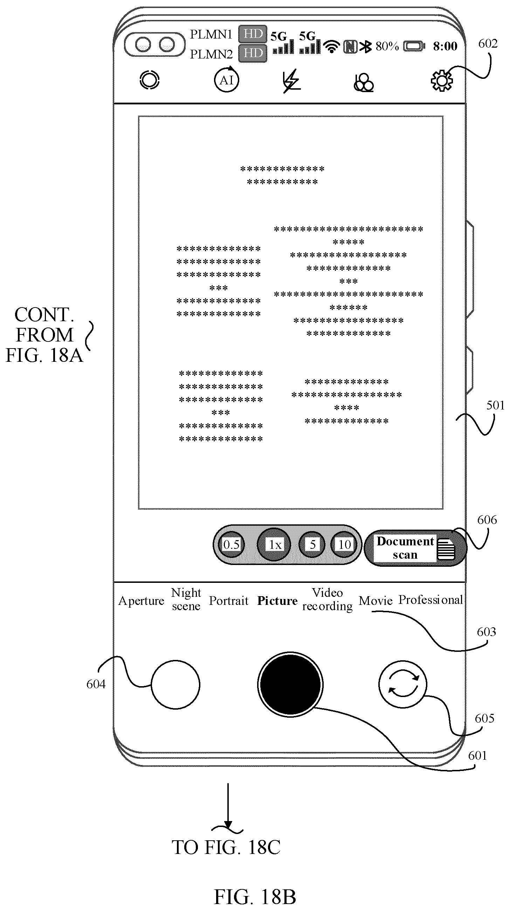

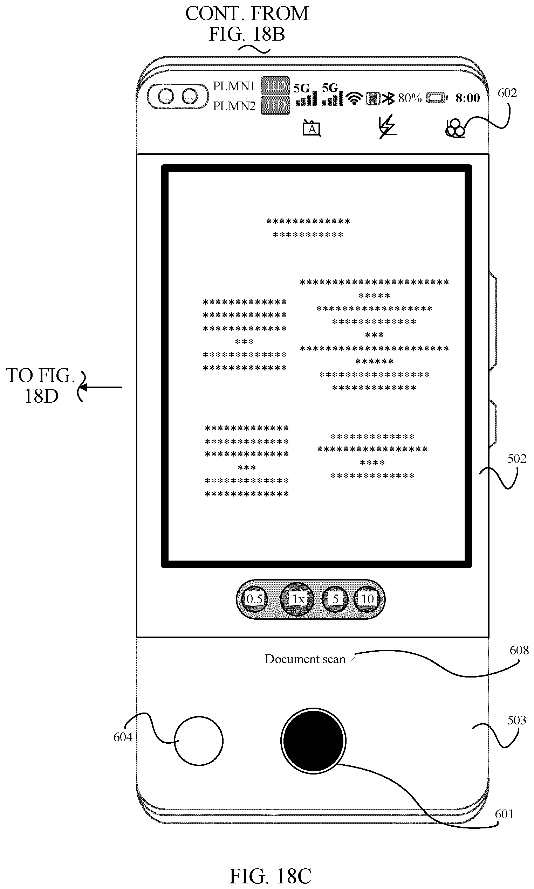

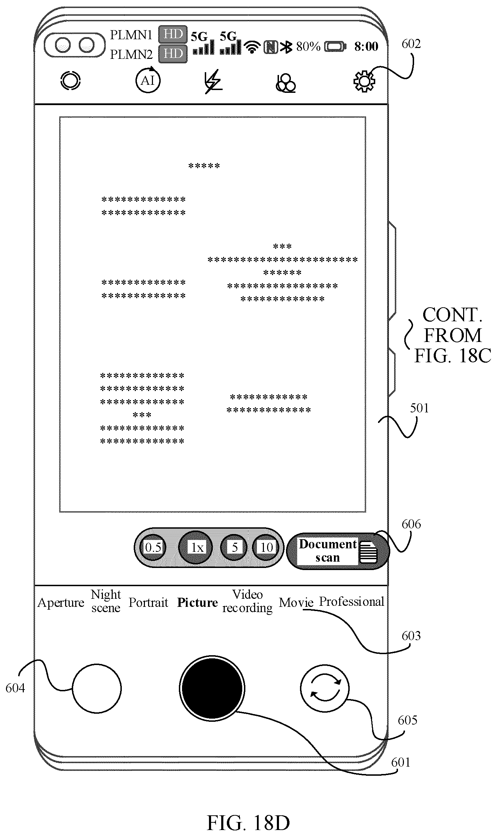

FIG. 18A, FIG. 18B, FIG. 18C, and FIG. 18D are a schematic diagram 13 of an interface according to an embodiment of this application. As shown in FIG. 18A, a terminal device opens a camera application and displays a first interface. For FIG. 18A, refer to FIG. 9A.

As shown in FIG. 18B, when determining that a current frame image (that is, a first image) in the preview stream is a document object, the terminal device displays a second button 606 on the first interface. For FIG. 18B, refer to FIG. 9B.

A user triggers the second button 606 on a first interface in FIG. 18B. As shown in FIG. 18C, the terminal device displays a second interface. The second interface includes a second window 502 and a third window 503, and the second window 502 displays a preview stream collected by a terminal device. The terminal device detects, in real time, whether a current frame image of the preview stream displayed in the second window 502 includes a target text. When determining that the current frame image of the preview stream displayed in the second window 502 does not include the target text, the terminal device does not display the third button on the second interface. The terminal device displays a first button 601, a preview button 604, and a fourth button 608 in the third window 503 of the second interface. "Document scan ×" is displayed on the fourth button 608. The first interface may further include at least one photographing-related setting button 602.

A user triggers a fourth button 608 (the "document scan ×" button) on the second interface in FIG. 18C. As shown in FIG. 18D, the terminal device displays the first interface. The terminal device detects in real time that the object category of the current frame image in the preview stream on the first interface is a document object. As shown in FIG. 18D, if determining that the object category of the current frame image in the preview stream on the first interface is the document object, the terminal device displays the second button 606 (a dynamic document scanning button) on the first interface.

In an example, the method further includes: displaying, by the terminal device, a sixth interface in response to that the third button on the second interface is triggered, where the sixth interface includes a sixth window and the third window, the sixth window displays the preview stream and displays first prompt information, the sixth interface does not display the third button, and the third window displays the first button and a fourth button.

Exemplarily, in step S304, the terminal device displays the third interface in response to that the third button on the second interface is triggered. In step S304, the terminal device recognizes that the second image in the preview stream is a normally collected image and the second image includes the target text, and in this case, the terminal device performs the process of step S304.

However, if the terminal device shakes and fails to collect a normal image in time when the user triggers the third button on the second interface, the terminal device may display the sixth interface. A difference between the sixth interface and the second interface lies in that the sixth interface displays first prompt information, the first prompt information is used to prompt a user that no text is recognized, and the first prompt information is "no text is recognized". As can be known, the sixth interface includes the sixth window and the third window, the sixth window displays the preview stream and displays first prompt information, the sixth interface does not display the third button, and the third window displays the first button and a fourth button.

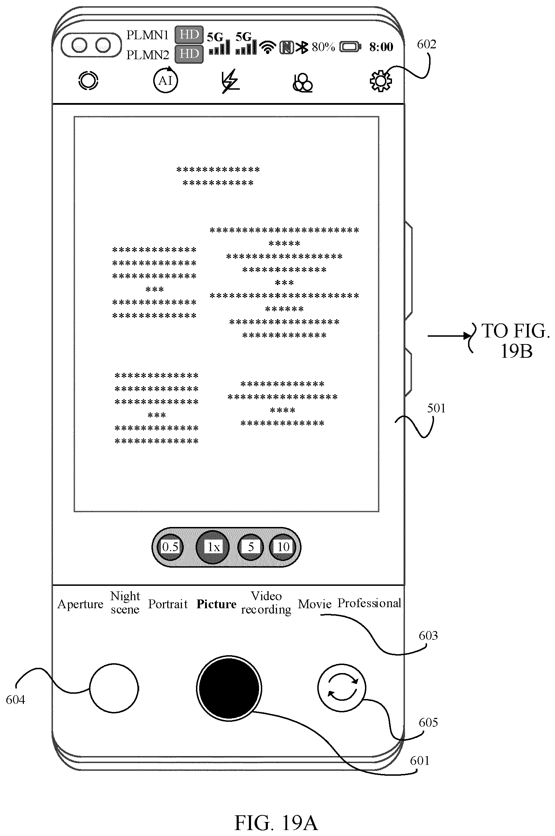

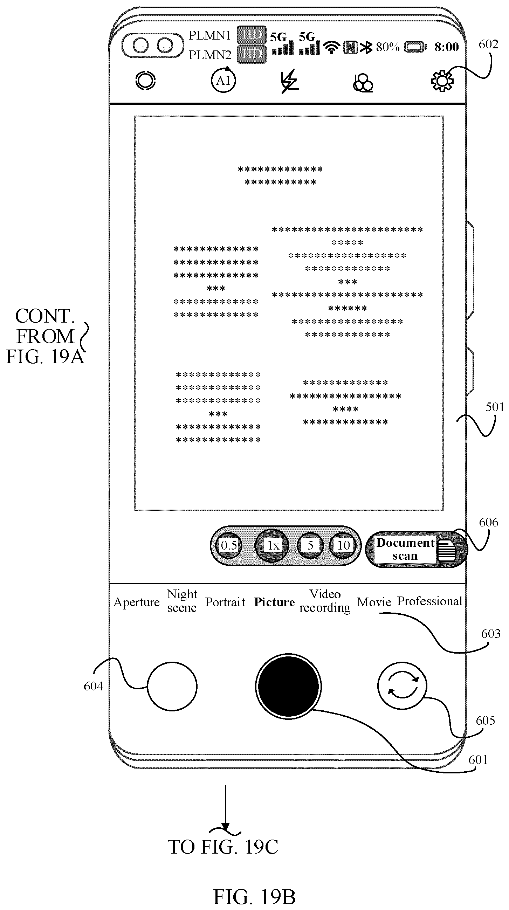

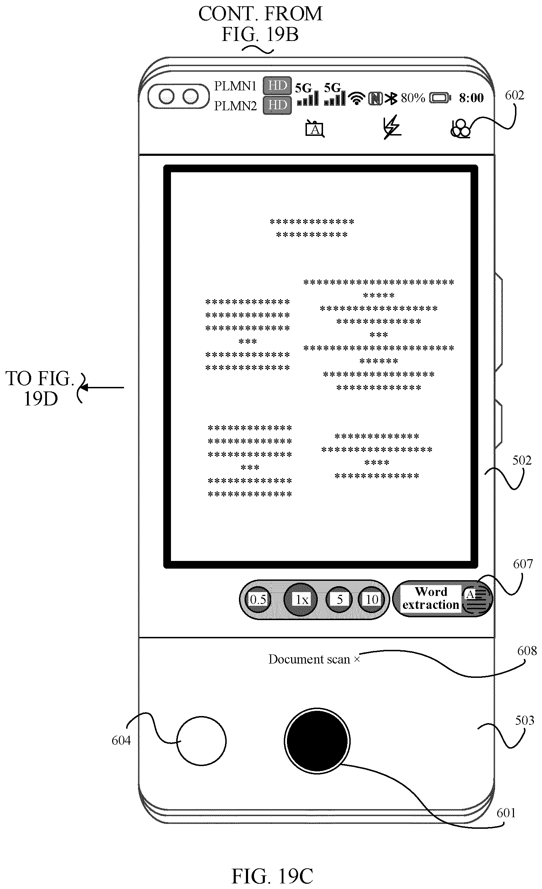

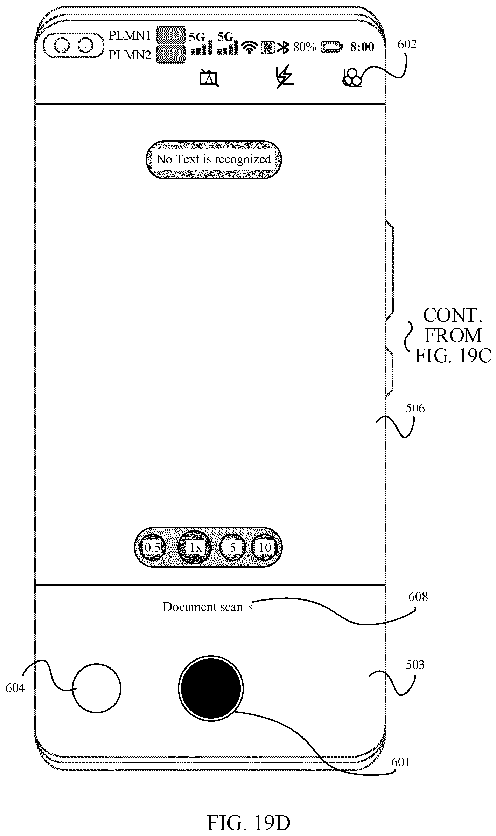

FIG. 19A, FIG. 19B, FIG. 19C, and FIG. 19D are a schematic diagram 14 of an interface according to an embodiment of this application. As shown in FIG. 19A, a terminal device opens a camera application and displays a first interface. For FIG. 19A, refer to FIG. 9A.

As shown in FIG. 19B, when determining that a current frame image (that is, a first image) in the preview stream is a document object, the terminal device displays a second button 606 on the first interface. For FIG. 19B, refer to FIG. 9B.

A user triggers the second button 606 on a first interface in FIG. 19B. As shown in FIG. 19C, the terminal device displays a second interface. For FIG. 19C, refer to FIG. 9C.

A user triggers a third button 607 on the second interface in FIG. 19C, but the terminal device shakes, the terminal device displays a sixth interface. As shown in FIG. 19D, the sixth interface includes a sixth window 506 and a third window 503. The sixth window 506 displays the preview stream and displays first prompt information "no text is recognized". The sixth interface does not display the third button, and the third window 503 displays the first button 601 and a fourth button 604.

S309: The terminal device displays the third button on the first interface when the object category of the first image is a text object.

Exemplarily, when starting the camera application, the terminal device displays the first interface in real time. The first interface includes the first window, and the first window displays each current frame image in the preview stream collected by the terminal device in real time. The first interface includes a first button, at least one photographing-related setting button, at least one photographing mode button, a preview button, and a switching button.

The at least one photographing-related setting button on the first interface includes: a scanning button, an AI photographing button, a flash button, an image mode button, a camera setting button, and the like.

The at least one photographing mode button includes: an "aperture" photographing mode button, a "night scene" photographing mode button, a "portrait" photographing mode button, a "picture" photographing mode button, a "video recording" photographing mode button, a "movie" photographing mode button, a "professional" photographing mode button, and the like.

The preview button is a button that is configured to be triggered to preview an image in a camera application.

The switching button is a button that is configured to be triggered to switch between a front camera and a rear camera.

The first interface further includes at least one multiple button, where the multiple button is a button that is configured to adjust a display size of the image in the preview stream. For example, the multiple button includes: a "0.5" button, a "1" button, a "5" button, and a "10" button.

After step S301, the terminal device displays a third button on the first interface when determining that the first image in the collected preview stream is the text object. The third button is a "dynamic word extraction button", and the third button is a button that is configured to be triggered to extract a text in an image. "Text extraction" is displayed on the third button, so that a user determines a function of the third button.

The third button is a dynamic button. The third button may have an expanded state and a collapsed state. In addition, when displaying the third button for the first time, the terminal device may display the third button at the lower right corner of the first window. A user may drag the third button. Further, the terminal device moves the third button on the first interface in response to the dragging operation of the user.

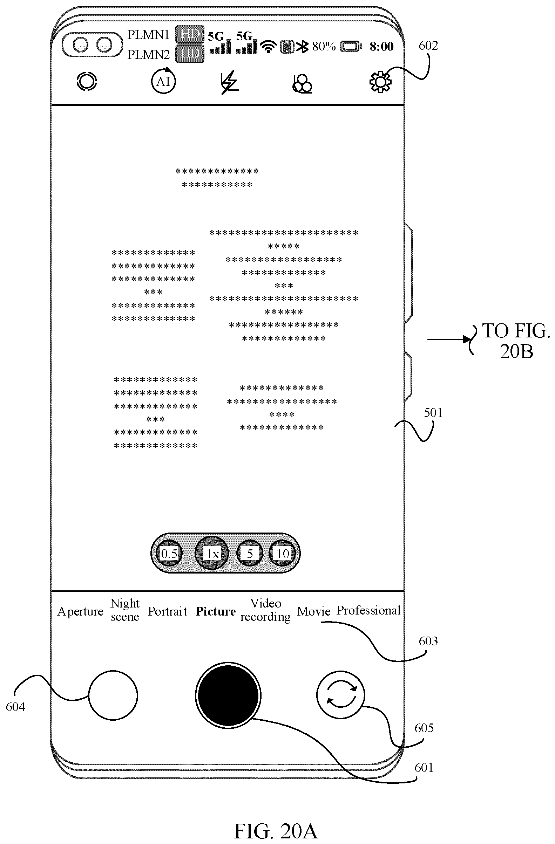

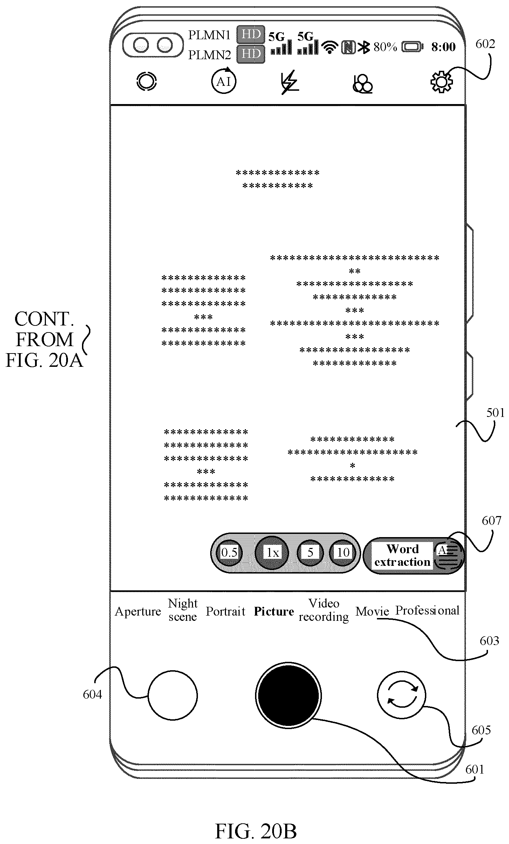

FIG. 20A and FIG. 20B are a schematic diagram 15 of an interface according to an embodiment of this application. As shown in FIG. 20A, a terminal device opens a camera application and displays a first interface. The first interface includes a first window 501, and the first window 501 displays a preview stream collected by the terminal device. The first interface may further include a first button 601, at least one photographing-related setting button 602, at least one photographing mode button 603, a preview button 604, and a switching button 605. As shown in FIG. 20B, when determining that a current frame image (that is, a first image) in the preview stream is a text object, the terminal device displays a third button 607 on the first interface. The third button 607 has an expanded state and a collapsed state. In FIG. 20B, the third button 607 is in the expanded state.

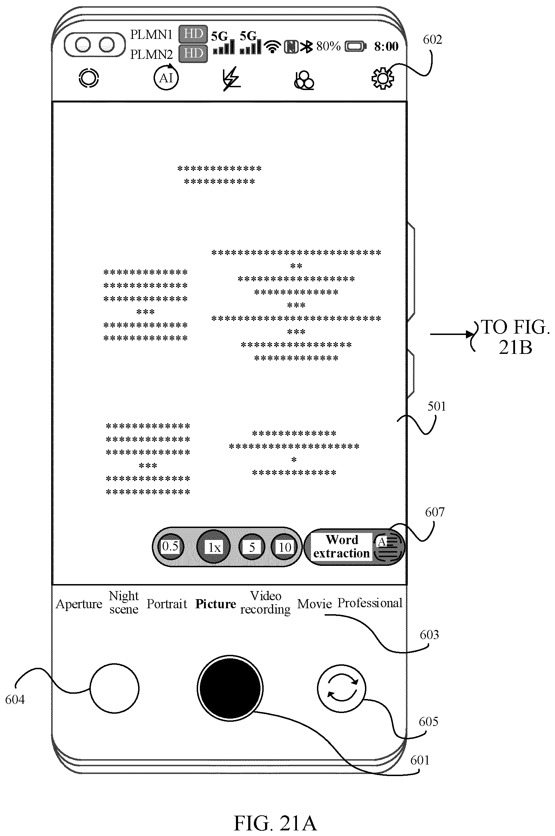

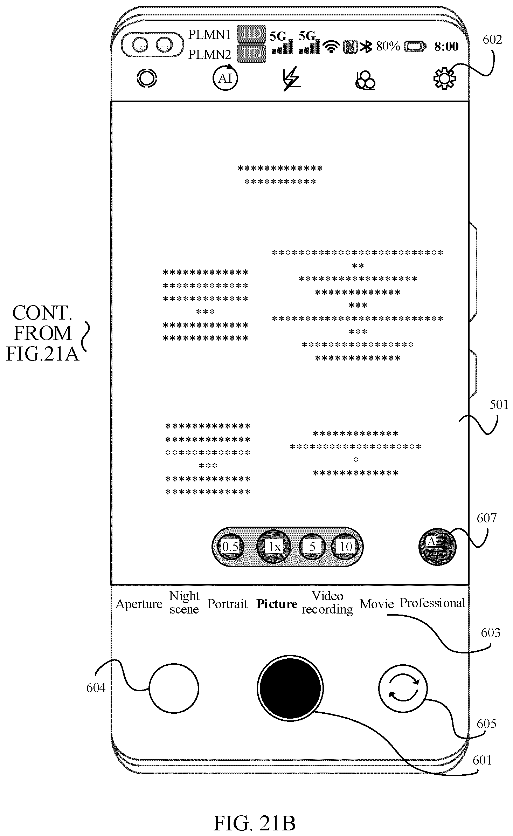

FIG. 21A and FIG. 21B are a schematic diagram 16 of an interface according to an embodiment of this application. As shown in FIG. 21A, FIG. 21A is FIG. 20B described above. The third button 607 is a dynamic button. In FIG. 21A, the third button 607 is in the expanded state. As shown in FIG. 21B, the third button 607 is not triggered in a preset time, and in this case, the third button 607 is in the collapsed state.

S310: The terminal device displays the third interface in response to that the third button on the first interface is triggered, where the third interface includes the fourth window and the fifth window, the third interface displays the third button, the fourth window displays the second image in the preview stream, the second image includes the highlighted target text, the fifth window displays the fifth button when the target text in the fourth window does not include an entity, the fifth window displays the fifth button and at least one sixth button when the target text in the fourth window includes an entity, and the sixth button is in a one-to-one correspondence with the entity in the target text in the fourth window.

In an example, the third interface further includes the seventh button.

In an example, the second image in the preview stream includes a first region and a second region, the first region is a region formed by text blocks of the target text, and the second region is a peripheral region of the first region.

The second image displayed on the third interface includes the first region and does not include the second region; the text block of the target text in the first region of the second image displayed on the third interface is highlighted; and a background color of the text block of the target text in the second image in the preview stream is different from a background color of the text block of the target text in the second image displayed on the third interface.

In an example, when a number of entities in the second image is greater than a preset number, a number of sixth buttons is the preset number minus 1, and the fifth window further displays a tenth button.

In an example, a distribution order of sixth buttons in the fifth window corresponds to a distribution order of the entities in the second image; or a distribution order of sixth buttons in the fifth window is determined in real time based on a user portrait or a user intention.

Exemplarily, after step S309, the terminal device triggers the third button (a dynamic word extraction button) on the third interface, and in this case, the terminal device displays the third interface. The third interface includes the fourth window and the fifth window. Besides, the third interface displays the third button, and the third button is in a collapsed state or an expanded state.

Because the user triggers the third button on the first interface, the terminal device may collect, in real time, a current frame image that is in the preview stream and that is at a moment at which the third button is triggered, to obtain a second image. Therefore, the terminal device displays the second image in the preview stream in the fourth window. In this case, the terminal device displays a second frame image in the fourth window of the third interface. The second image herein and the foregoing first image are images at different moments in the preview stream.

In addition, the terminal device performs detection on the target text in the second image in real time. For the "target text", refer to the foregoing description. If detecting that the second image includes the target text, the terminal device highlights the target text in the second image in the fourth window of the third interface.

It can be known that the fourth window is a "text display region".

In an example, in a process of displaying the preview stream in the first window of the first interface in real time, the terminal device displays the second image of the preview stream. The terminal device does not process the second image in the first window on the first interface. The second image in the preview stream includes a first region and a second region, the first region is a region formed by text blocks of the target text, and the second region is a peripheral region of the first region. The first region is a minimum bounding rectangle formed by the text blocks in the second image, and the second region is a region in the second image other than the minimum bounding rectangle.

The terminal device determines, in response to that the third button on the first interface is triggered, a minimum bounding matrix formed by the text blocks in the second image. The terminal device cuts the second image according to a size of the minimum bounding matrix, to cut off a peripheral region located before the minimum bounding matrix in the second image. The terminal device may reserve a part of a region around the periphery of the minimum bounding matrix. In addition, the terminal device cuts off a peripheral region of the first region, that is, cuts off the second region, to obtain the second image for displaying on the third interface. In the second image for displaying on the third interface, a box formed by the text blocks has a particular distance to the edge of the image. The distance may be set to a fixed number of pixels, and the number of pixels is an empirical value. Alternatively, the distance is a proportion of a length of a text block corresponding to the distance.

Therefore, the second image displayed by the terminal device on the third interface includes the first region and does not include the second region. In addition, the terminal device highlights each text block of the target text in the first region. In addition, the terminal device sets a background color of the text block of the target text in the first region to a preset color (for example, gray or black). Therefore, a background color of the text block of the target text in the second image in the preview stream is different from a background color of the text block of the target text in the second image displayed on the third interface.

Optionally, because the second image displayed on the third interface of the terminal device is an image obtained after cutting, when displaying the second image in the fourth window of the third interface, the terminal device may fill up the fourth window with the second image obtained after cutting. For example, a width of the second image obtained after cutting is used as a reference, and the fourth window is filled up with the second image obtained after cutting, so that the second image obtained after cutting reaches the edge of the fourth window in a width direction. For another example, a height of the second image obtained after cutting is used as a reference, and the fourth window is filled up with the second image obtained after cutting, so that the second image obtained after cutting reaches the edge of the fourth window in a height direction.

In addition, in a process in which the terminal device performs detection on the target text in the second image in real time, the terminal device recognizes an entity in the target text. It can be known that the target text includes an entity and/or a non-entity. The entity includes the following several entities: an email address, an identity card number, a delivery number, a flight number, a website, a phone number, an address, and the like.

When detecting that the target text in the second image in the fourth window does not include any entity, the terminal device displays a fifth button in the fifth window. The fifth button is a button that is configured to be triggered to copy the target text in the second image in the fourth window. "Copy all" is displayed on the fifth button. In addition, the terminal device displays a seventh button on the third interface. The seventh button is a button that is configured to display prompt information "long-press to select a text". "Long-press to select a text" is displayed on the seventh button. The seventh button is located at the top of the third interface, the fourth window is located in the middle of the third interface, and the fifth window is located at the bottom of the third interface.

When detecting that the target text in the second image in the fourth window includes an entity, the terminal device displays, in the fifth window, a fifth button and a sixth button that is in a one-to-one correspondence with the entity in the target text in the second image. The fifth button is a button that is configured to be triggered to copy the target text in the second image in the fourth window. "Copy all" is displayed on the fifth button. The sixth button is a button that is configured to be triggered to invoke a function of the entity corresponding to the sixth button, and the sixth button displays information about the entity corresponding to the sixth button. In addition, the terminal device displays a seventh button on the third interface. The seventh button is a button that is configured to display prompt information "long-press to select a text". "Long-press to select a text" is displayed on the seventh button. The seventh button is located at the top of the third interface, the fourth window is located in the middle of the third interface, and the fifth window is located at the bottom of the third interface.

It can be known that if the second image includes an entity, the fifth window is an "entity information display region", and if the second image does not include any entity, the fifth window displays a "copy all" capsule.

In an example, when the second image includes entities, when displaying, in the fifth window, sixth buttons corresponding to the entities, the terminal device may display a preset number of sixth buttons in the fifth window because there are a relatively large number of entities.

If a number of the entities in the second image is less than or equal to a preset number M, the terminal device may display M sixth buttons in the fifth window. M is a positive integer greater than or equal to 1. For example, M=5.

If a number of the entities in the second image is greater than a preset number, the terminal device may display M-1 sixth buttons in the fifth window. Meanwhile, the terminal device displays a tenth button in the fifth window. The tenth button is a button that is configured to be triggered to display the remaining sixth buttons that are not displayed in the fifth window (that is, the other sixth buttons that are not displayed in the fifth window). "More" is displayed on the tenth button. The terminal device displays the tenth button at the end of the M-1 sixth buttons.

For example, the terminal device displays a fixed number of rows of sixth buttons in the fifth window. For example, the terminal device displays three rows of sixth buttons in the fifth window. A number of sixth buttons in each row is determined according to lengths of the sixth buttons. For example, two sixth buttons are displayed in a first row, two sixth buttons are displayed in a second row, and one sixth button is displayed in a third row.

For each sixth button, information about an entity corresponding to the sixth button needs to be displayed on the sixth button; therefore, complete information about the entity may be displayed on the sixth button. For example, for a phone number entity 86 158********, a sixth button is displayed in the fifth window, and 86 158******** is displayed on the sixth button. For a website entity www.****@**.com, a sixth button is displayed in the fifth window, and www.****@**.com is displayed on the sixth button. For an address entity city AA district BB road CC number DD, a sixth button is displayed in the fifth window, and city AA district BB road CC number DD is displayed on the sixth button. For an email address entity www.***@**.com, a sixth button is displayed in the fifth window, and www.***@**.com is displayed on the sixth button.

Alternatively, for each sixth button, information about an entity corresponding to the sixth button needs to be displayed on the sixth button; therefore, for beautiful appearance or effective usage of an interface location, key information about the entity may be displayed on the sixth button. The terminal device may determine the key information about the entity according to a preset display manner. Alternatively, the terminal device determines the key information about the entity according to a user intention, a user portrait, or the like. For example, for a phone number entity 86 158********, a sixth button is displayed in the fifth window, and 158******** is displayed on the sixth button. For a website entity www.****@**.com, a sixth button is displayed in the fifth window, and ****@**.com is displayed on the sixth button. For an address entity city AA district BB road CC number DD, a sixth button is displayed in the fifth window, and district BB road CC number DD is displayed on the sixth button. For an email address entity www.***@**.com, a sixth button is displayed in the fifth window, and ***@**.com is displayed on the sixth button.

In an example, the sixth buttons displayed in the fifth window by the terminal device have an order (that is, an appearance order). An entity in the second image is in a one-to-one correspondence with a sixth button, and the sixth button is configured to display the entity corresponding to the sixth button. Therefore, an order of the sixth buttons displayed by the terminal device in the fifth window may match with an order of entities corresponding to the sixth buttons in the second image. That is, the sixth buttons are sequentially displayed in the fifth window according to an appearance order of the entities in the second image.

Alternatively, the terminal device may dynamically sort the order of the sixth buttons in the fifth window according to information such as a user portrait, a user intention, and a user preference. The terminal device may determine the user portrait, the user intention, and the user preference according to user personal information and a number of times of using an entity by a user. The user personal information includes a user gender, a user age, and the like. The number of times of using an entity by a user is, for example, a number of times of opening a website by the user, a number of times of making a call by the user, or a number of times of sending an email by the user.

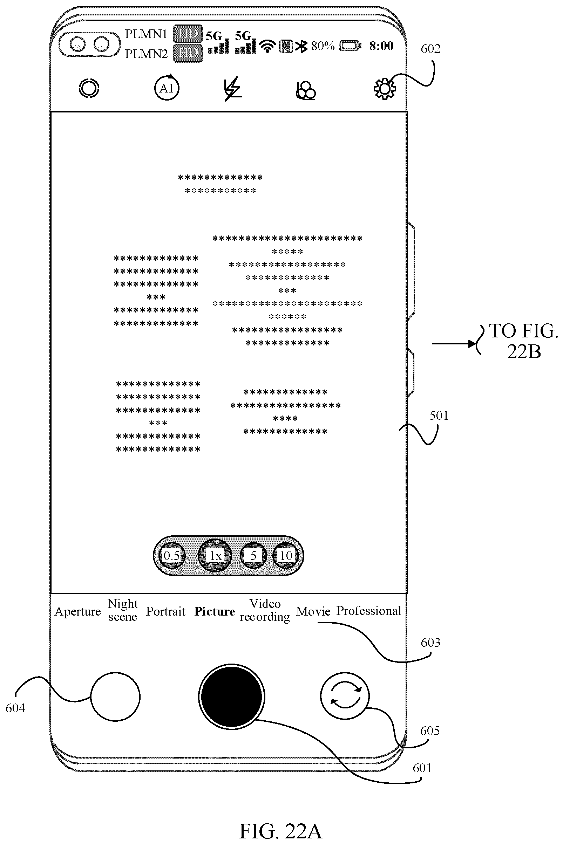

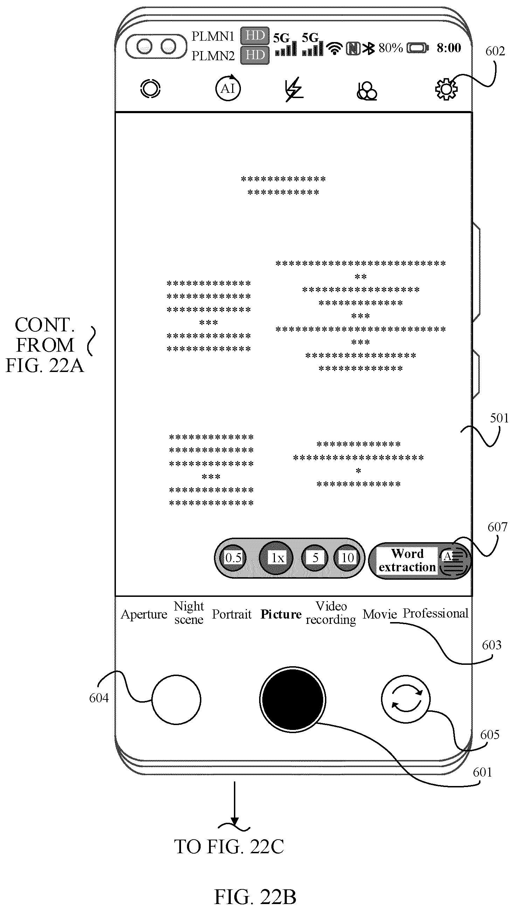

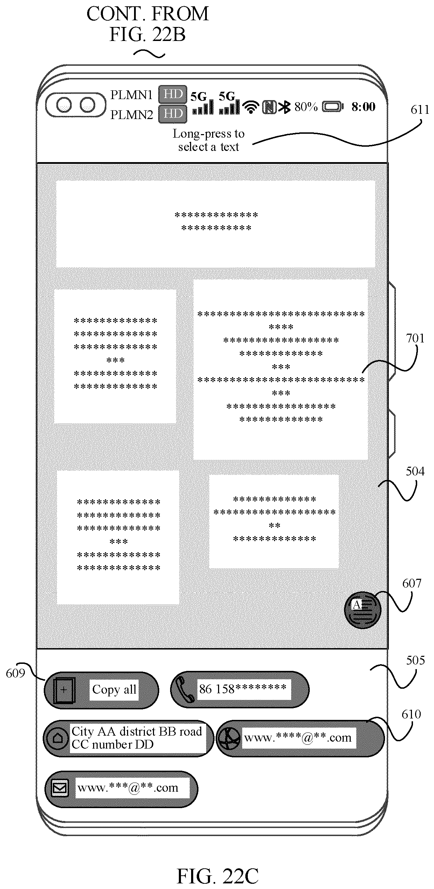

FIG. 22A, FIG. 22B, and FIG. 22C are a schematic diagram 17 of an interface according to an embodiment of this application. As shown in FIG. 22A, a terminal device opens a camera application and displays a first interface. The first interface includes a first window 501, and the first window 501 displays a preview stream collected by the terminal device. The first interface may further include a first button 601, at least one photographing-related setting button 602, at least one photographing mode button 603, a preview button 604, and a switching button 605. The first button 601 is a photographing button.

As shown in FIG. 22B, when determining that a current frame image (that is, a first image) in the preview stream is a text object, the terminal device displays a third button 607 on the first interface. The third button 607 is a "dynamic word extraction button". The third button 607 has an expanded state and a collapsed state. In FIG. 22B, the third button 607 is in the expanded state.

A user triggers the third button 607 on a first interface in FIG. 22B. As shown in FIG. 22C, the terminal device displays a third interface. The third interface includes a fourth window 504 and a fifth window 505. The third interface displays the third button 607, and the third button 607 is a "dynamic word extraction button". The third button 607 may have an expanded state or a collapsed state. In FIG. 22C, the third button 607 is in the collapsed state. Each text block 701 of the target text in the second image displayed in the fourth window 504 is highlighted. Optionally, a background color of the text block of the target text in the second image displayed in the fourth window 504 is gray. The terminal device detects that the target text in the second image displayed in the fourth window 504 includes an entity, and the terminal device displays, in the fifth window 505, a fifth button 609 and a sixth button 610 that is in a one-to-one correspondence with the entity. "Copy all" is displayed on the fifth button 609. If a user triggers the fifth button 609, the terminal device copies the target text (that is, the entire target text) in the second image in the fourth window 504. The terminal device further displays a seventh button 611 on the third interface. "Long-press to select a text" is displayed on the seventh button 611. In this way, a user may be prompted to long-press the target text in the fourth window 504 to select the target text.

Complete information about an entity corresponding to the sixth button is displayed on the sixth button. As shown in FIG. 22C, for a phone number entity 86 158********, a sixth button 610 is displayed in the fifth window 505, and 86 158******** is displayed on the sixth button 610. For a website entity www.****@**.com, a sixth button is displayed in the fifth window 505, and www.****@**.com is displayed on the sixth button 610. For an address entity city AA district BB road CC number DD, a sixth button 610 is displayed in the fifth window 505, and city AA district BB road CC number DD is displayed on the sixth button 610. For an email address entity www.***@**.com, a sixth button 610 is displayed in the fifth window 505, and www.***@**.com is displayed on the sixth button 610.

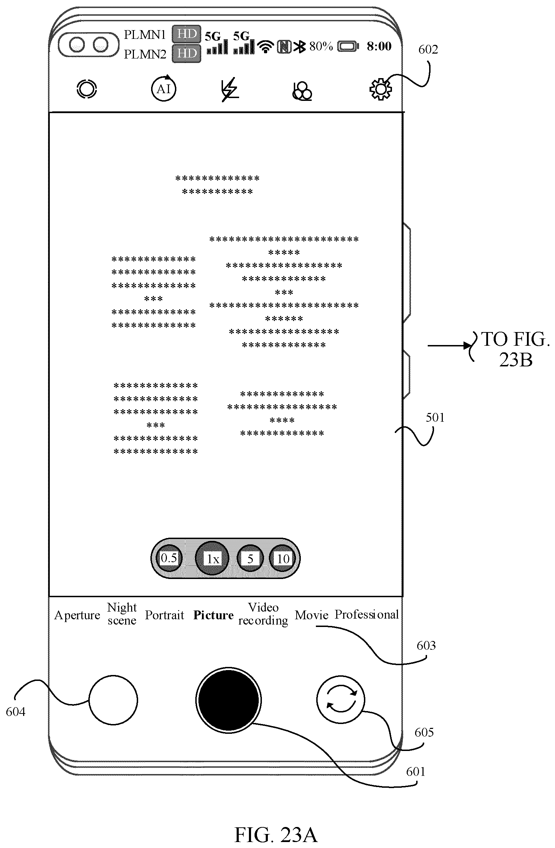

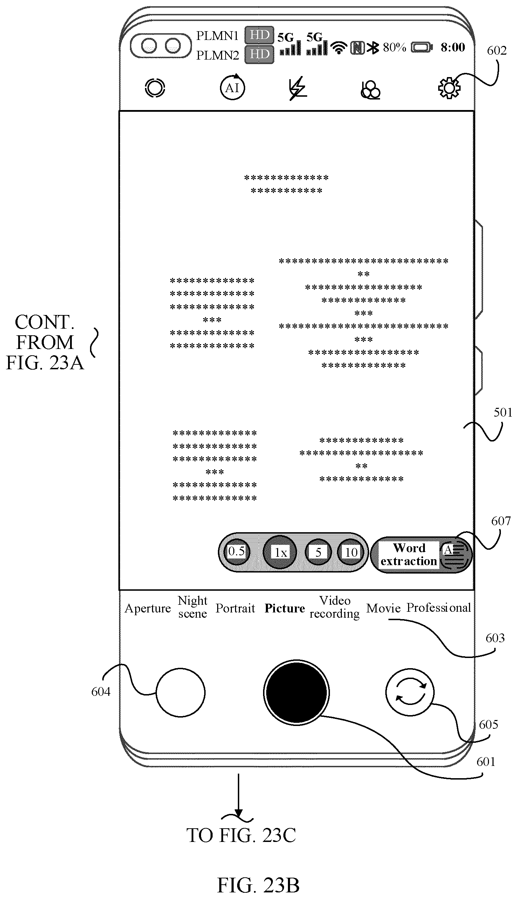

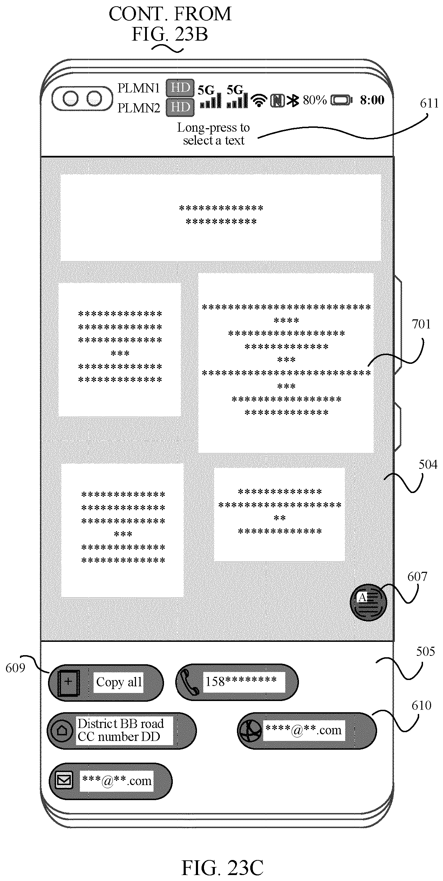

FIG. 23A, FIG. 23B, and FIG. 23C are a schematic diagram 18 of an interface according to an embodiment of this application. As shown in FIG. 23A, a terminal device opens a camera application and displays a first interface. For FIG. 23A, refer to FIG. 22A.

As shown in FIG. 23B, when determining that a current frame image (that is, a first image) in the preview stream is a text object, the terminal device displays a third button 607 on the first interface. For FIG. 23B, refer to FIG. 22B.

A user triggers the third button 607 on a first interface in FIG. 23B. As shown in FIG. 23C, the terminal device displays a third interface. The third interface includes a fourth window 504 and a fifth window 505. The third interface displays the third button 607, and the third button 607 is a "dynamic word extraction button". The third button 607 may have an expanded state or a collapsed state. In FIG. 10D, the third button 607 is in the collapsed state. Each text block 701 of the target text in the second image displayed in the fourth window 504 is highlighted. Optionally, a background color of the text block of the target text in the second image displayed in the fourth window 504 is gray. The terminal device detects that the target text in the second image displayed in the fourth window 504 includes an entity, and the terminal device displays, in the fifth window 505, a fifth button 609 and a sixth button 610 that is in a one-to-one correspondence with the entity. "Copy all" is displayed on the fifth button 609. If a user triggers the fifth button 609, the terminal device copies the target text (that is, the entire target text) in the second image in the fourth window 504. The terminal device further displays a seventh button 611 on the third interface. "Long-press to select a text" is displayed on the seventh button 611. In this way, a user may be prompted to long-press the target text in the fourth window 504 to select the target text.

Key information about an entity corresponding to the sixth button is displayed on the sixth button. As shown in FIG. 23C, for a phone number entity 86 158********, a sixth button 610 is displayed in the fifth window 505, and 158******** is displayed on the sixth button 610. For a website entity www.****@**.com, a sixth button 610 is displayed in the fifth window 505, and ****@**.com is displayed on the sixth button 610. For an address entity city AA district BB road CC number DD, a sixth button 610 is displayed in the fifth window 505, and district BB road CC number DD is displayed on the sixth button 610. For an email address entity www.***@**.com, a sixth button 610 is displayed in the fifth window 505, and ***@**.com is displayed on the sixth button 610.

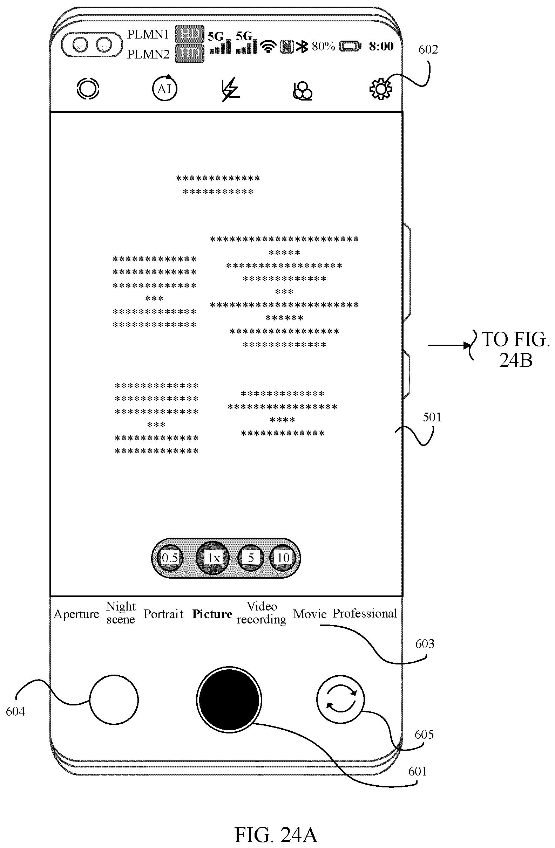

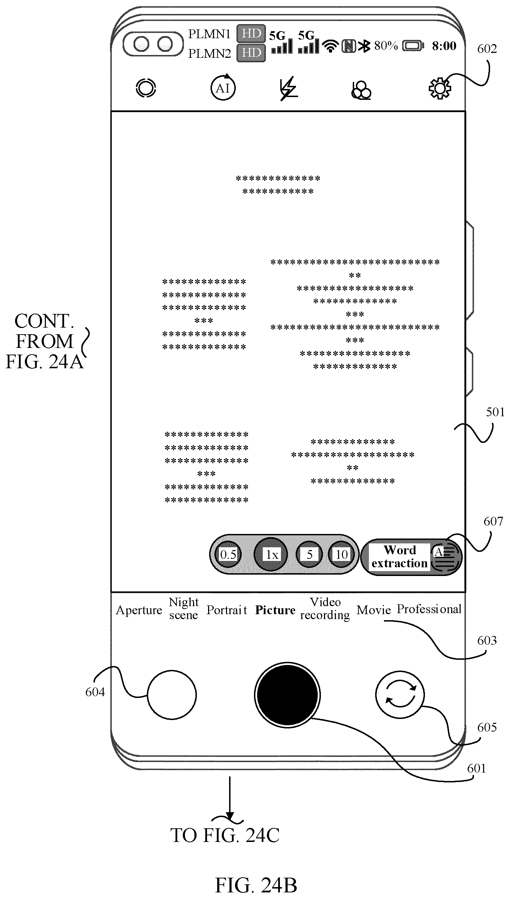

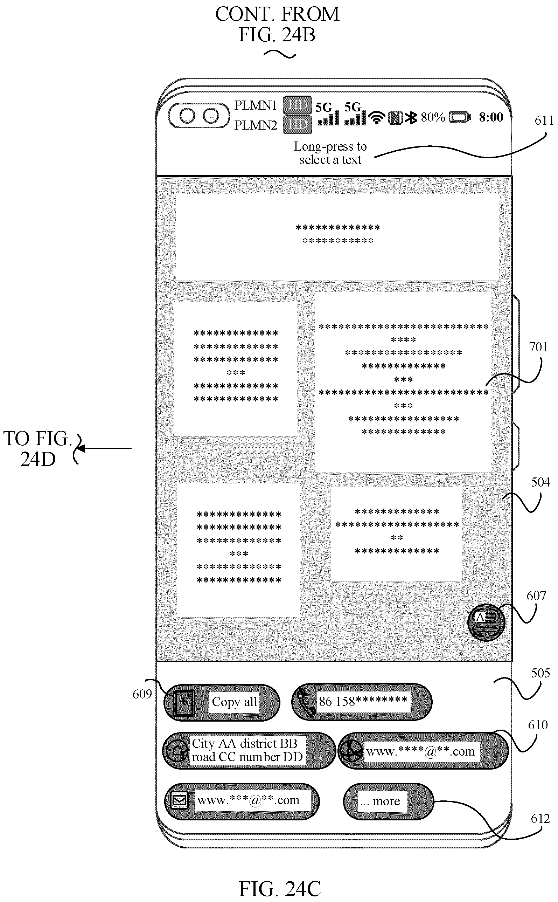

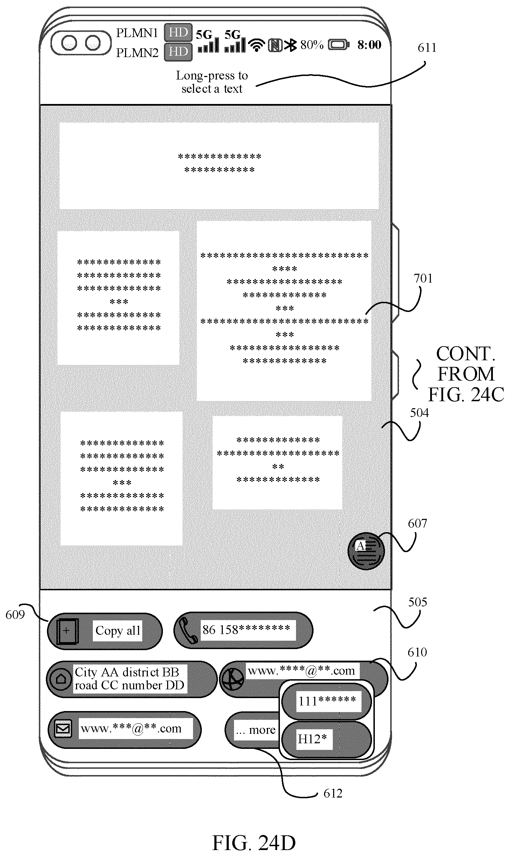

FIG. 24A, FIG. 24B, FIG. 24C, and FIG. 24D are a schematic diagram 19 of an interface according to an embodiment of this application. As shown in FIG. 24A, a terminal device opens a camera application and displays a first interface. For FIG. 24A, refer to FIG. 22A.

As shown in FIG. 24B, when determining that a current frame image (that is, a first image) in the preview stream is a text object, the terminal device displays a third button 607 on the first interface. For FIG. 24B, refer to FIG. 22B.

A user triggers the third button 607 on a first interface in FIG. 24B. As shown in FIG. 24C, the terminal device displays a third interface. The third interface includes a fourth window 504 and a fifth window 505. The third interface displays the third button 607, and the third button 607 is a "dynamic word extraction button". The third button 607 may have an expanded state or a collapsed state. In FIG. 24C, the third button 607 is in the collapsed state. Each text block 701 of the target text in the second image displayed in the fourth window 504 is highlighted. The terminal device detects that the target text in the second image displayed in the fourth window 504 includes an entity, and the terminal device displays, in the fifth window 505, a fifth button 609 and a sixth button 610 that is in a one-to-one correspondence with the entity. "Copy all" is displayed on the fifth button 609. If a user triggers the fifth button 609, the terminal device copies the target text (that is, the entire target text) in the second image in the fourth window 504. The terminal device further displays a seventh button 611 on the third interface. "Long-press to select a text" is displayed on the seventh button 611. In this way, a user may be prompted to long-press the target text in the fourth window 504 to select the target text.

If a number of entities in the second image is greater than a preset number M, the terminal device displays M-1 sixth buttons 610 in the fifth window 505. The fifth window 505 displays a tenth button 612, and "more" is displayed on the tenth button 612. For example, as shown in FIG. 24C, for a phone number entity 86 158********, a sixth button 610 is displayed in the fifth window 505, and 86 158******** is displayed on the sixth button 610. For a website entity www.****@**.com, a sixth button 610 is displayed in the fifth window 505, and ****@**.com is displayed on the sixth button 610. For an address entity city AA district BB road CC number DD, a sixth button 610 is displayed in the fifth window 505, and district BB road CC number DD is displayed on the sixth button 610. For an email address entity www.***@**.com, a sixth button 610 is displayed in the fifth window 505, and ***@**.com is displayed on the sixth button 610. The tenth button 612 is displayed on the fifth window.

A user triggers the tenth button 612 in the fifth window 505 of the third interface in FIG. 24C. As shown in FIG. 24D, the terminal device displays, in the fifth window 505 of the third interface, the remaining sixth buttons 610 that are not displayed. For example, for a sixth button 610 corresponding to an entity "delivery number", "111******" is displayed on the sixth button 610, and for a sixth button 610 corresponding to an entity "flight number", "H12*" is displayed on the sixth button 610.

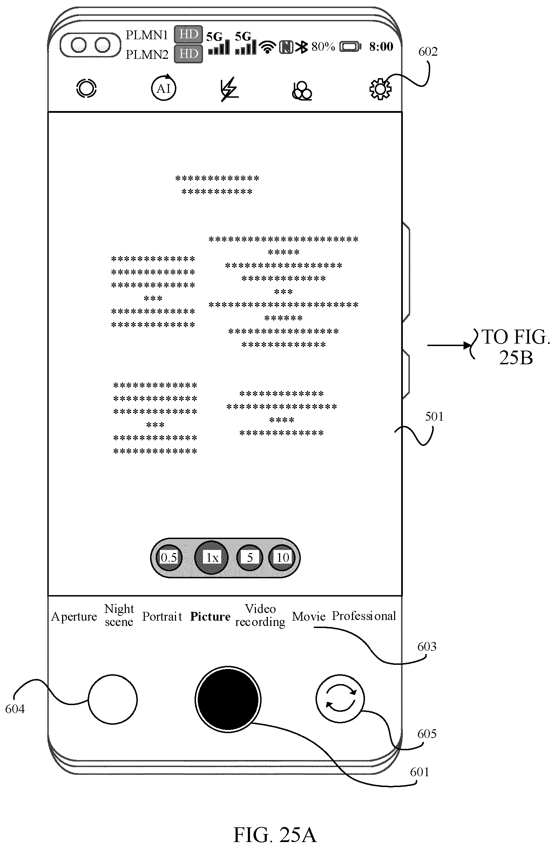

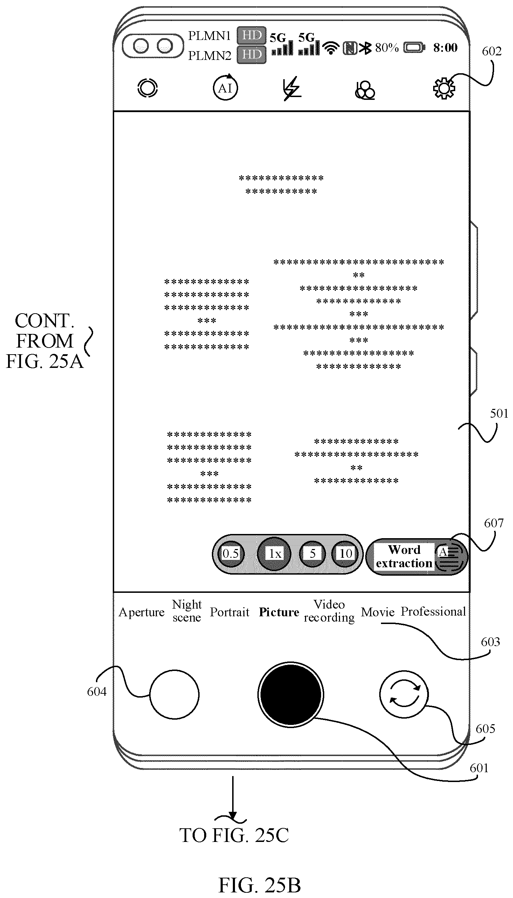

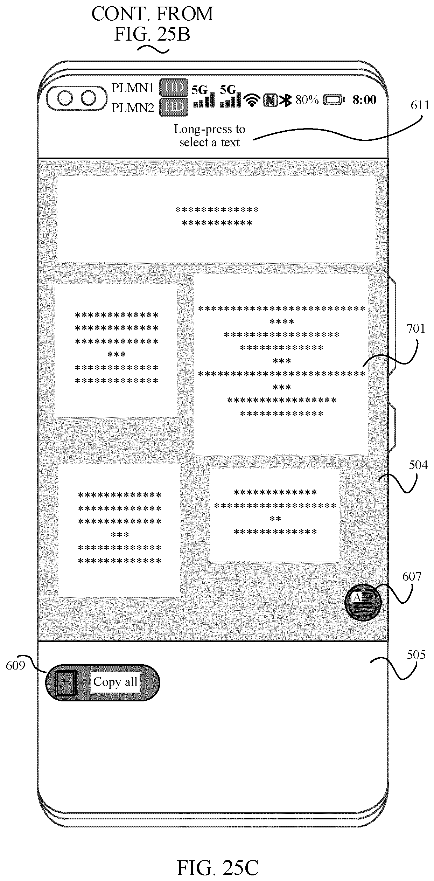

FIG. 25A, FIG. 25B, and FIG. 25C are a schematic diagram 20 of an interface according to an embodiment of this application. As shown in FIG. 25A, a terminal device opens a camera application and displays a first interface. For FIG. 25A, refer to FIG. 22A.

As shown in FIG. 25B, when determining that a current frame image (that is, a first image) in the preview stream is a text object, the terminal device displays a third button 607 on the first interface. For FIG. 25B, refer to FIG. 22B

A user triggers the third button 607 on a first interface in FIG. 25B. As shown in FIG. 25C, the terminal device displays a third interface. The third interface includes a fourth window 504 and a fifth window 505. The third interface displays the third button 607, and the third button 607 is a "dynamic word extraction button". The third button 607 may have an expanded state or a collapsed state. In FIG. 25C, the third button 607 is in the collapsed state. Each text block 701 of the target text in the second image displayed in the fourth window 504 is highlighted. The terminal device detects that the target text in the second image displayed in the fourth window 504 does not include any entity, and the terminal device displays a fifth button 609 in the fifth window 505. "Copy all" is displayed on the fifth button 609. If a user triggers the fifth button 609, the terminal device copies the target text (that is, the entire target text) in the second image in the fourth window 504. The terminal device further displays a seventh button 611 on the third interface. "Long-press to select a text" is displayed on the seventh button 611. In this way, a user may be prompted to long-press the target text in the fourth window 504 to select the target text.

S311: The terminal device displays the first interface in response to that the third button on the third interface is triggered.

Exemplarily, after step S310, the user triggers the third button "dynamic word extraction button" on the third interface, and in this case, the terminal device exits the third interface, and displays the first interface. The first interface includes the first window, and the first window displays a preview stream collected by the terminal device in real time. The first interface includes a first button, at least one photographing-related setting button, at least one photographing mode button, a preview button, and a switching button.

Step S301 starts to be performed again.

Therefore, in this step, in response to that the third button "dynamic word extraction button" on the third interface is triggered, the terminal device returns to display the first interface in step S301.

It should be noted that the second window of the first interface displays the preview stream collected in real time by the terminal device. Therefore, the current frame image that is in the preview stream collected in real time and that is displayed when the terminal device displays the first interface in step S311 is not the same as the current frame image in the preview stream displayed in step S301, and image content of the two is the same or different.

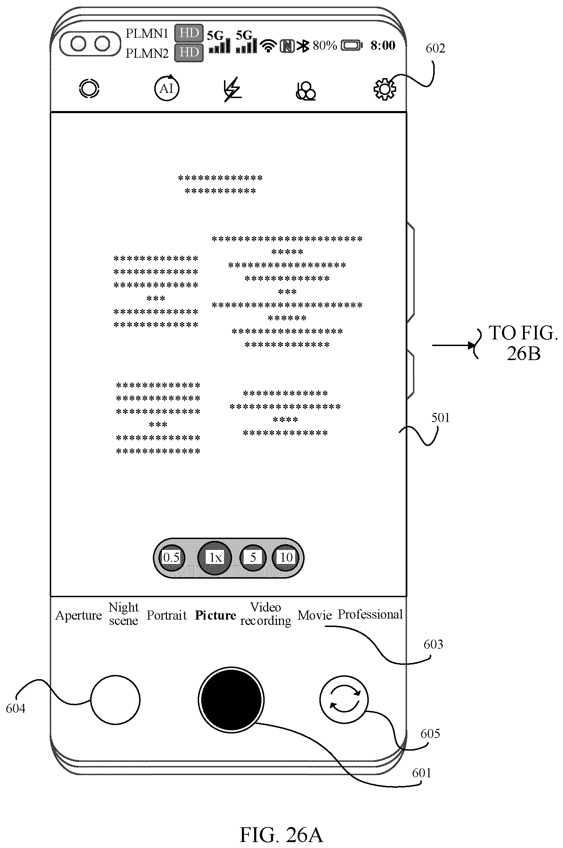

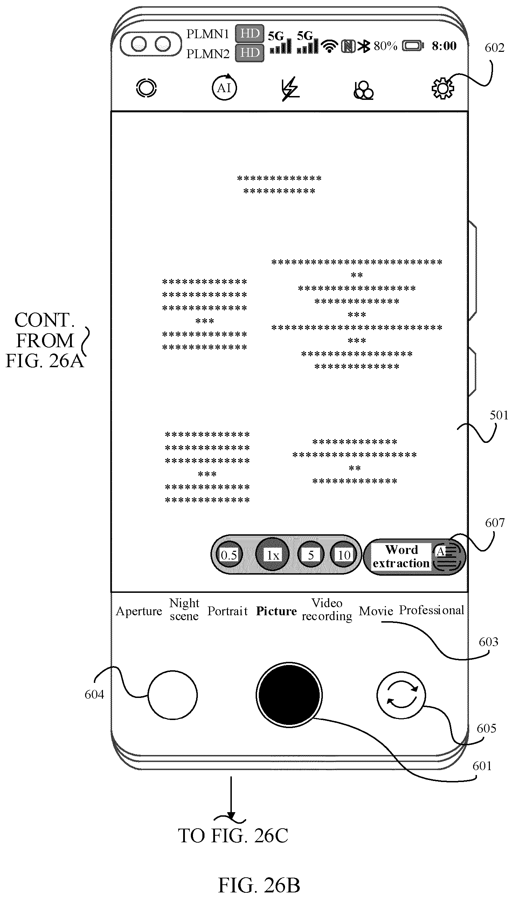

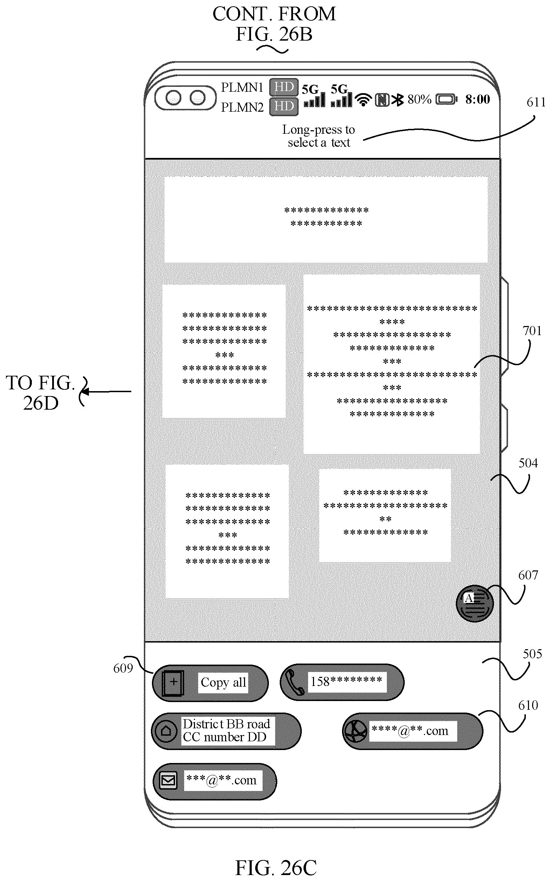

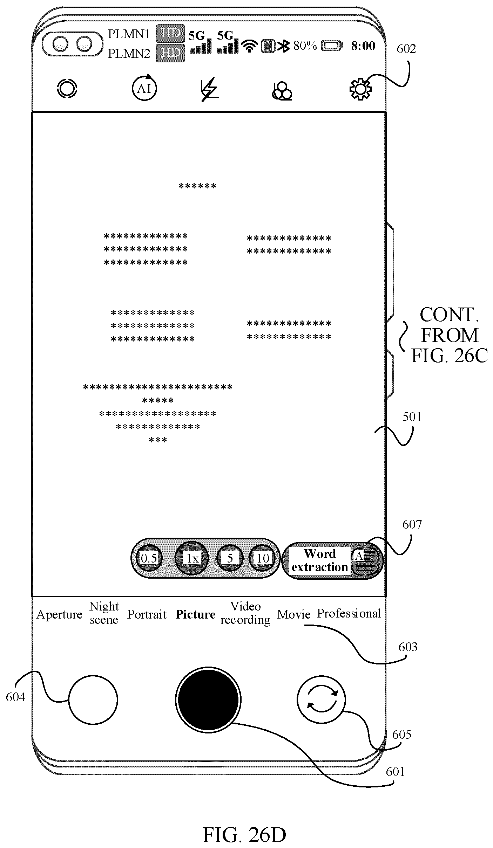

FIG. 26A, FIG. 26B, FIG. 26C, and FIG. 26D are a schematic diagram 21 of an interface according to an embodiment of this application. As shown in FIG. 26A, a terminal device opens a camera application and displays a first interface. For FIG. 26A, refer to FIG. 22A.

As shown in FIG. 26B, when determining that a current frame image (that is, a first image) in the preview stream is a text object, the terminal device displays a third button 607 on the first interface. For FIG. 26B, refer to FIG. 22B.

A user triggers the third button 607 on a first interface in FIG. 26B. As shown in FIG. 26C, the terminal device displays a third interface. For FIG. 26C, refer to FIG. 22C, or refer to FIG. 23C, or refer to FIG. 24C, or refer to FIG. 25C.

A user triggers the third button 507 on the third interface in FIG. 26C. As shown in FIG. 26D, the terminal device displays the first interface. In this case, the terminal device displays, in a first window 501 of the first interface, a preview stream collected by the terminal device in real time.

In an example, the method provided in this embodiment further includes: displaying, by the terminal device, a seventh interface in response to that the third button on the first interface is triggered, where the seventh interface includes a seventh window, the seventh window displays the preview stream, the seventh window displays second prompt information, the seventh interface does not display the third button, and the seventh interface includes the first button.

Exemplarily, in step S310, the terminal device displays the third interface in response to that the third button on the first interface is triggered. In step S310, the terminal device recognizes that the second image in the preview stream is a normally collected image and the second image includes the target text, and in this case, the terminal device performs the process of step S310.

However, if the terminal device shakes and fails to collect a normal image in time when the user triggers the third button on the first interface, the terminal device may display the seventh interface. A difference between the seventh interface and the first interface lies in that the seventh interface displays second prompt information, the second prompt information is used to prompt a user that no text is recognized, and the second prompt information is "no text is recognized". As can be known, the seventh interface includes a seventh window, the seventh window displays the preview stream, the seventh window displays second prompt information, and the seventh interface does not display the third button.

In addition, the first interface includes a first button, at least one photographing-related setting button, at least one photographing mode button, a preview button, and a switching button.

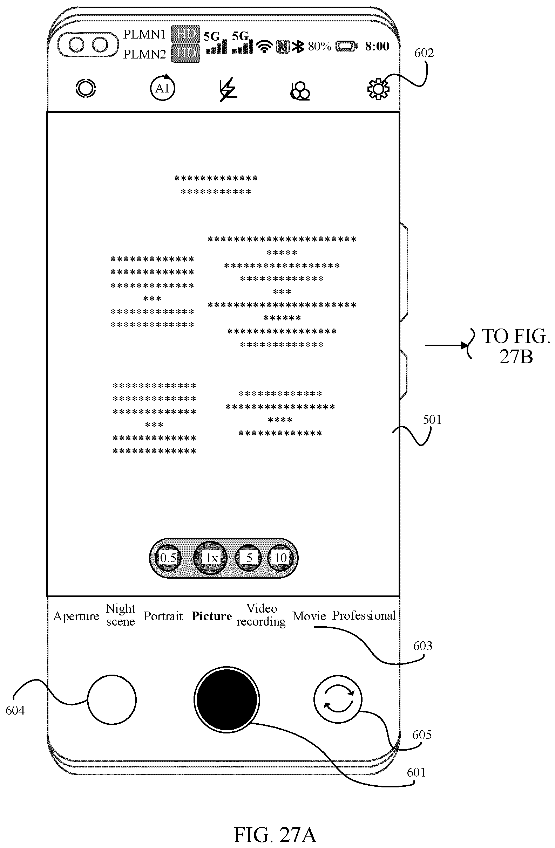

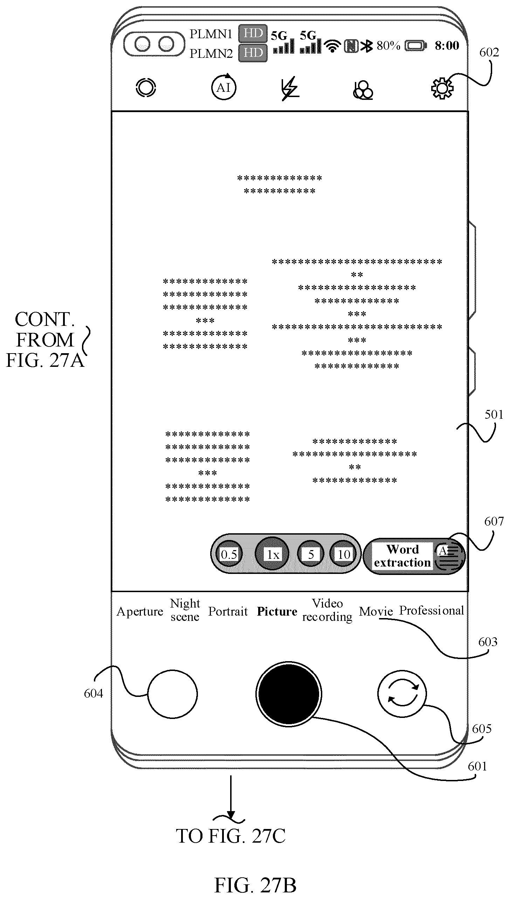

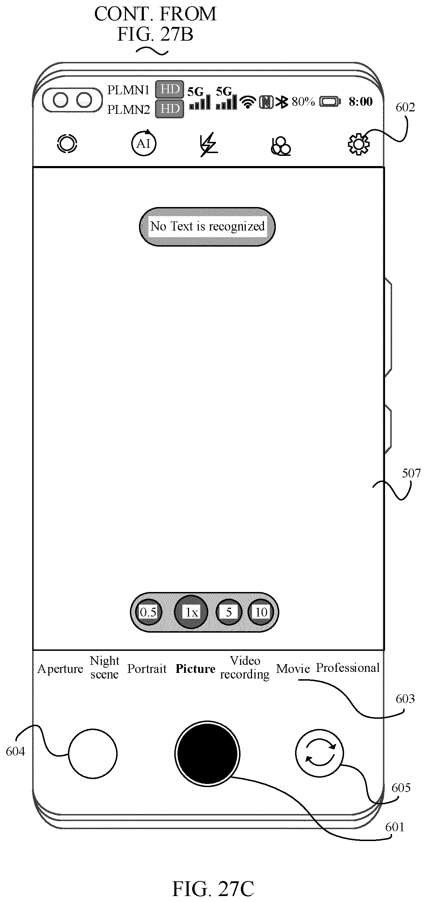

FIG. 27A, FIG. 27B, and FIG. 27C are a schematic diagram 22 of an interface according to an embodiment of this application. As shown in FIG. 27A, a terminal device opens a camera application and displays a first interface. For FIG. 27A, refer to FIG. 22A.

As shown in FIG. 27B, when determining that a current frame image (that is, a first image) in the preview stream is a text object, the terminal device displays a third button 607 on the first interface. For FIG. 27B, refer to FIG. 22B.

A user triggers the third button 607 on the first interface in FIG. 27B. As shown in FIG. 27C, the terminal device displays a seventh interface. As shown in FIG. 27C, the seventh interface includes a seventh window 507, the seventh window 507 displays a preview stream, and the seventh window 507 displays second prompt information "no text is recognized". The seventh interface does not display the third button. The seventh interface further includes a first button 601, at least one photographing-related setting button 602, at least one photographing mode button 603, a preview button 604, and a switching button 605.

In an example, the sixth button corresponds to at least one function, the function has a priority, and the priority of the function is determined in real time based on a user portrait or a user intention; and the method further includes: invoking, by the terminal device in response to that the sixth button is triggered, a function with a highest priority that corresponds to the sixth button.

Exemplarily, the third interface displayed in step S304 includes a fourth window and a fifth window, the third interface displays the third button, the fourth window displays a second image in the preview stream, the fifth window displays the fifth button and at least one sixth button when the target text in the fourth window includes an entity, and the sixth button is in a one-to-one correspondence with the entity in the target text in the fourth window.

The third interface displayed in step S310 includes a fourth window and a fifth window, the third interface displays the third button, the fourth window displays a second image in the preview stream, the fifth window displays the fifth button and at least one sixth button when the target text in the fourth window includes an entity, and the sixth button is in a one-to-one correspondence with the entity in the target text in the fourth window.

Therefore, the step of this example may be performed for the fifth window of the third interface displayed in step S304, or the fifth window of the third interface displayed in step S310.

An entity has a plurality of functions, and the functions of the entity have priorities. The priority of the function of the entity may be determined in real time based on a user portrait or a user intention. For example, a user portrait or a user intention is generated according to user personal information and/or an entity usage case of a user.

The sixth button is in a one-to-one correspondence with an entity in the second image in the fourth window. Therefore, the sixth button has a plurality of functions, and the functions of the sixth button have priorities. The priority of the function of the sixth button may be determined in real time based on a user portrait or a user intention.

After step S304 or step S310, a user may touch the sixth button in the fifth window on the third interface. Then, the terminal device directly responds to a function with a highest priority corresponding to the sixth button.

For example, the entity is a phone entity, and the second image in the fourth window includes a phone number of the phone entity. Functions corresponding to the phone entity include: a copy function, a selection function, a dial function, a storage function, and the like. The function corresponding to the phone entity has a priority. An order is the dial function, the storage function, the copy function, and the selection function according to levels of the priorities.

The user touches the sixth button corresponding to the phone entity in the fifth window on the third interface, where the corresponding phone number of the phone entity is displayed on the sixth button. Then, the terminal device directly invokes the "dial function"; therefore, the terminal device directly dials the phone number on the sixth button.

For example, the entity is an address entity, and the second image in the fourth window includes an address information code of the address entity. Functions corresponding to the address entity include: a copy function, a selection function, a going function, a storage function, and the like. The function corresponding to the address entity has a priority. An order is the going function, the copy function, the storage function, and the selection function according to levels of the priorities.

The user touches the sixth button corresponding to the address entity in the fifth window on the third interface, where corresponding address information of the address entity is displayed on the sixth button. Then, the terminal device directly invokes the "going function"; therefore, the terminal device directly invokes a map application and displays how to go to a location represented by the address information.

In an example, an entity displayed in the fourth window on the third interface corresponds to at least one first option, the first option has a priority, and the priority of the first option is determined in real time based on a user portrait or a user intention; and the priority of the first option of the entity is in a one-to-one correspondence with a priority of a function of the sixth button corresponding to the entity; and
the method further includes: displaying, by the terminal device in the fourth window in response to that an entity in the fourth window is triggered, a first service menu corresponding to the entity; where the first service menu includes at least one first option, and first options in the first service menu are sorted according to priorities of the first options.

Exemplarily, the step of this example may be performed for the fourth window of the third interface displayed in step S304, or the fourth window of the third interface displayed in step S310.

An entity has a plurality of functions, and the functions of the entity have priorities. The priority of the function of the entity may be determined in real time based on a user portrait or a user intention. For example, a user portrait or a user intention is generated according to user personal information and/or an entity usage case of a user.

The sixth button is in a one-to-one correspondence with an entity in the second image in the fourth window. Therefore, the sixth button has a plurality of functions, and the functions of the sixth button have priorities. The priority of the function of the sixth button may be determined in real time based on a user portrait or a user intention.

After step S304 or step S310, the user touches a text of an entity in the fourth window on the third interface, and the terminal device displays a first service menu corresponding to the entity. The first service menu includes at least one first option, each first option of the entity is in a one-to-one correspondence with each function of the entity, and each first option of the entity is in a one-to-one correspondence with each sixth button of the entity. That is, the first option, the function, and the sixth button are in a one-to-one correspondence.

Therefore, the first option of the first service menu has a priority, and the priority is a priority of a function corresponding to the first option.

The first options in the first service menu are sorted according to priorities of the first options.

For example, the entity is a phone entity, and the second image in the fourth window includes a phone number of the phone entity. Functions corresponding to the phone entity include: a copy function, a selection function, a dial function, a storage function, a sharing function, and the like. The function corresponding to the phone entity has a priority. An order is the dial function, the storage function, the copy function, the selection function, and the sharing function according to levels of the priorities.

Therefore, the first options corresponding to the phone entity are sorted as: the dial function, the storage function, the copy function, and the selection function.

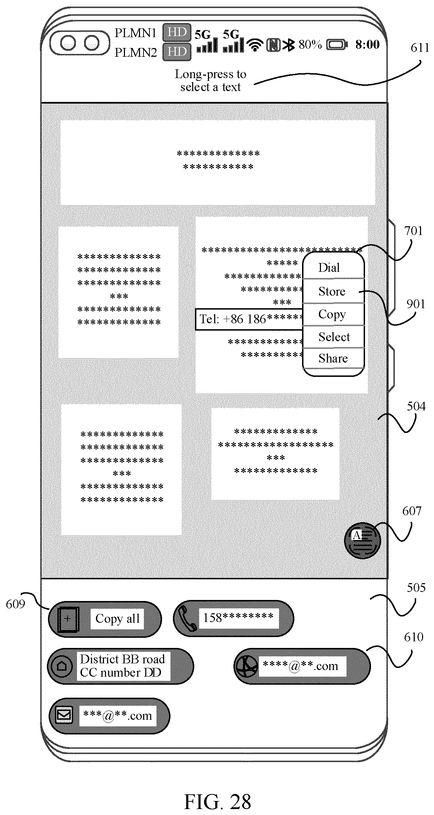

FIG. 28 is a schematic diagram 23 of an interface according to an embodiment of this application. As shown in FIG. 28, a user touches a text of a phone entity in a fourth window 504 on a third interface, and a terminal device displays a first service menu 901 corresponding to the phone entity. The first service menu 901 corresponding to the phone entity includes a plurality of first options, and the plurality of first options are sequentially a "dial" option, a "storage" option, a "copy" option, a "selection" option, and a "sharing" option.

For example, the entity is an address entity, and the second image in the fourth window includes an address information code of the address entity. Functions corresponding to the address entity include: a copy function, a selection function, a going function, a storage function, a sharing function, and the like. The function corresponding to the address entity has a priority. An order is the going function, the copy function, the storage function, the selection function, and the sharing function according to levels of the priorities.

Therefore, the first options corresponding to the address entity are sorted as: the going function, the copy function, the storage function, the selection function, and the sharing function.

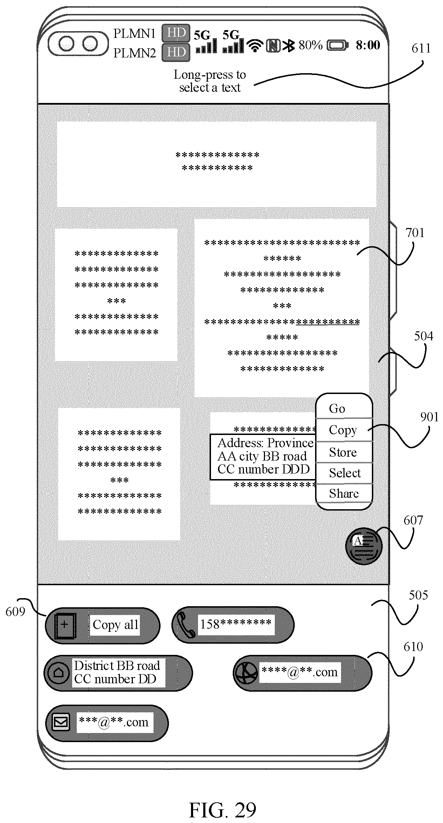

FIG. 29 is a schematic diagram 24 of an interface according to an embodiment of this application. As shown in FIG. 29, a user touches a text of an address entity in a fourth window 504 on a third interface, and a terminal device displays a first service menu 901 corresponding to the address entity. The first service menu 901 corresponding to the address entity includes a plurality of first options, and the plurality of first options are sequentially a "going" option, a "copy" option, a "storage" option, a "selection" option, and a "sharing" option.

In an example, the method further includes: displaying, by the terminal device in the fourth window in response to that a non-entity in the fourth window is triggered, a second service menu corresponding to the non-entity; where the second service menu includes at least one second option.

Exemplarily, the step of this example may be performed for the fourth window of the third interface displayed in step S304, or the fourth window of the third interface displayed in step S310.

If the second image in the fourth window includes a non-entity text, an image displayed in the fourth window includes the non-entity text.

After step S304 or step S310, the user touches a non-entity text in the fourth window on the third interface, and the terminal device displays a second service menu. Content in the second service menu is the same for different non-entity texts.

The second service menu includes at least one second option. The second option, for example, is: a select all option, a copy option, a translation option, a search option, and a sharing option.

An order of the second options of the second service menu may be fixed. Alternatively, the second options of the second service menu are sorted according to priorities of the second options. The priority of the second option may be determined in real time based on a user portrait or a user intention. For example, a user portrait or a user intention is generated according to user personal information and/or a second option usage case of a user.

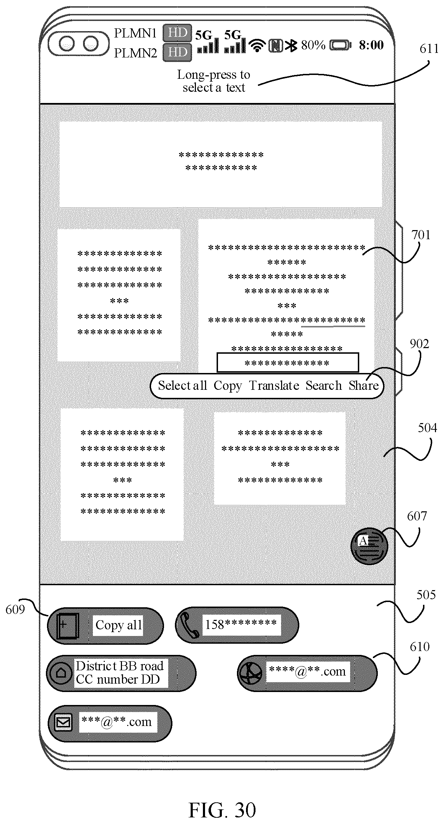

FIG. 30 is a schematic diagram 25 of an interface according to an embodiment of this application. As shown in FIG. 30, a user touches a text of a non-entity in a fourth window 504 on a third interface, and a terminal device displays a second service menu 902. The second service menu 902 includes a plurality of second options, and the plurality of second options are sequentially a "select all" option, a "copy" option, a "translate" option, a "search" option, and a "share" option. As shown in FIG. 20A and FIG. 20B, when the second image in the fourth window 504 includes an entity, the fifth window 505 displays a fifth button 509 and a sixth button 610 that corresponds to the entity.

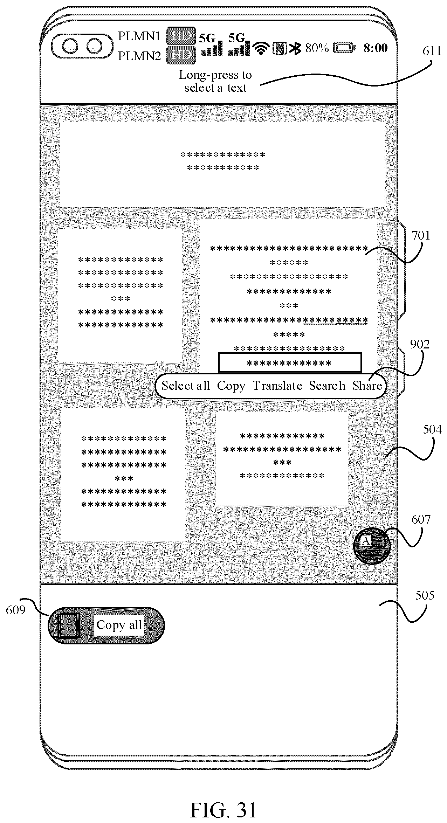

FIG. 31 is a schematic diagram 26 of an interface according to an embodiment of this application. As shown in FIG. 31, a user touches a text of a non-entity in a fourth window 504 on a third interface, and a terminal device displays a second service menu 902. The second service menu 902 includes a plurality of second options, and the plurality of second options are sequentially a "select all" option, a "copy" option, a "translate" option, a "search" option, and a "share" option. As shown in FIG. 20A and FIG. 20B, when the second image in the fourth window 504 does not include any entity, the fifth window 505 displays a fifth button 509.

In an example, the method further includes: copying, by the terminal device, the target text in the fourth window in response to that the fifth button in the fifth window is triggered.

Exemplarily, the step of this example may be performed for the fifth window of the third interface displayed in step S304, or the fifth window of the third interface displayed in step S310.

A user triggers the fifth button (a copy all button) in the fifth window, and the terminal device copies the entire target text in the fourth window.

In this embodiment, in the process in which the terminal device displays the first interface in step S301, the terminal device captures a physical object by using a camera, to obtain a preview stream. In this process, if determining that a distance between the camera for capturing a physical object and the physical object is less than a preset threshold (for example, 17 centimeters), the terminal device needs to turn on a super-macro mode. In a process in which the terminal device uses the super-macro mode, the terminal device may display a first icon, and the first icon is an icon of the super-macro mode, so that the first icon may prompt the user that the terminal device is currently in the super-macro mode.

The first icon may be displayed in any one of the following two manners:

In an example, before step S302, the terminal device starts a super-macro mode and displays the first icon on the first interface when determining that a distance between a camera of the terminal device and a physical object is less than a preset threshold.

Step S302 includes: displaying, by the terminal device, the second button and skipping displaying the first icon on the first interface when the object category of the first image is the document object.

Step S309 includes: displaying, by the terminal device, the third button and skipping displaying the first icon on the first interface when the object category of the first image is the text object.

The preset threshold is a first threshold.

Exemplarily, in the process in which the terminal device displays the first interface in step S301, the terminal device captures a physical object by using a camera, to obtain a preview stream. In this process, if determining that a distance between the camera for capturing a physical object and the physical object is less than a preset threshold (for example, 17 centimeters), the terminal device starts the super-macro mode and captures the preview stream in the super-macro mode. The terminal device first displays the first icon on the first interface, to prompt the user that the terminal device is currently in the super-macro mode.

Meanwhile, the terminal device detects an object category of the first image in the preview stream on the first interface.

When determining that the object category of the first image in the preview stream on the first interface is a document object, the terminal device does not display the first icon, and instead displays the second button (a dynamic document scanning button). When determining that the object category of the first image in the preview stream on the first interface is a text object, the terminal device does not display the first icon, and instead displays the third button (a dynamic word extraction button).

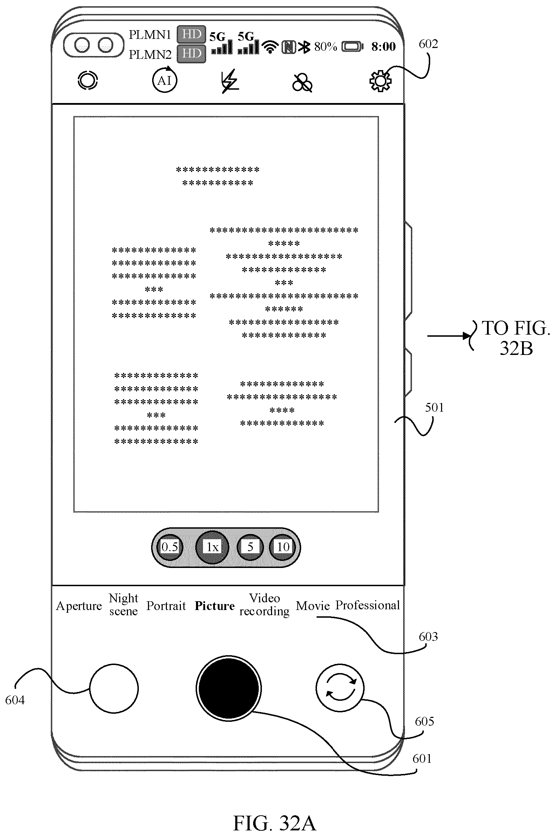

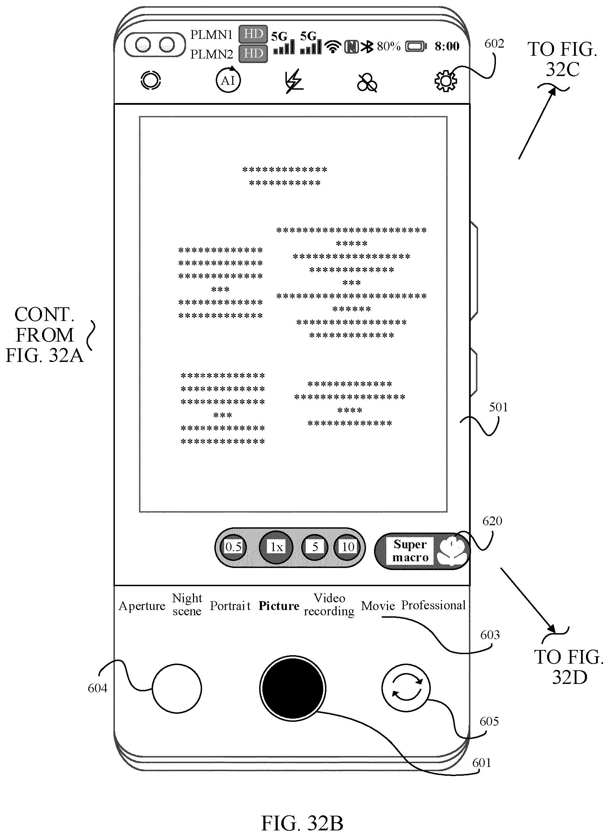

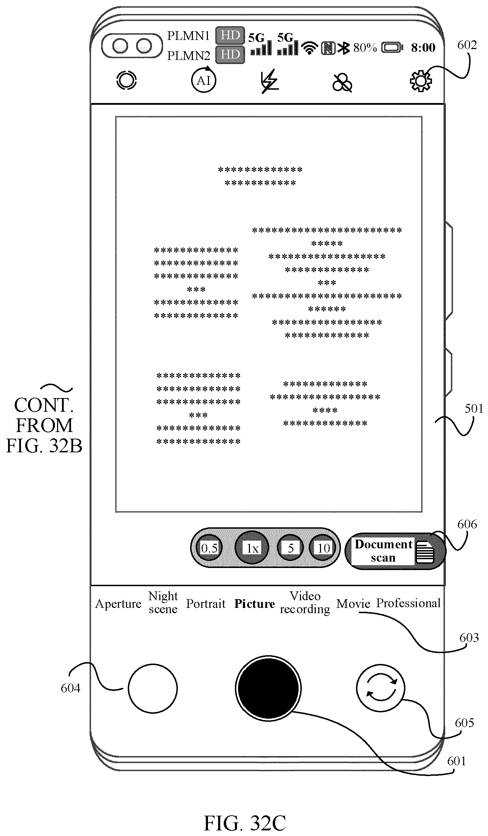

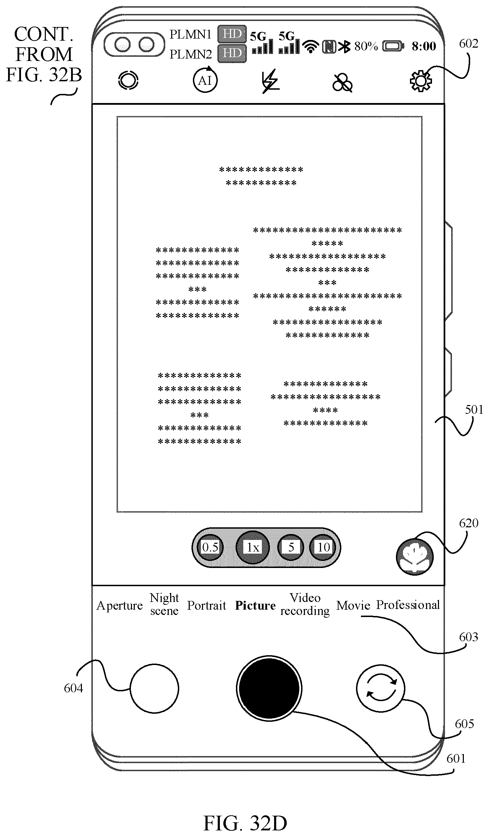

FIG. 32A, FIG. 32B, FIG. 32C, and FIG. 32D are a schematic diagram 27 of an interface according to an embodiment of this application. As shown in FIG. 32A, a terminal device opens a camera application and displays a first interface. The first interface includes a first window 501, and the first window 501 displays a preview stream collected by the terminal device. The first interface may further include a first button 601, at least one photographing-related setting button 602, at least one photographing mode button 603, a preview button 604, and a switching button 605. The first button 601 is a photographing button.

As shown in FIG. 32B, if determining that a distance between the camera for capturing a physical object and the physical object is less than a preset threshold (for example, 17 centimeters), the terminal device starts the super-macro mode and captures the preview stream in the super-macro mode. The terminal device displays a first icon 620 on the first interface. The first icon 620 is located at a lower right corner of the first window 501 of the first interface. Meanwhile, the terminal device detects an object category of the first image in the preview stream on the first interface. The first icon 620 has a collapsed state and an expanded state. As shown in FIG. 32B, the first icon 620 is in the expanded state.

As shown in FIG. 32C, when determining that the object category of the first image in the preview stream on the first interface is a document object, the terminal device does not display the first icon 620, and instead displays the second button 606. The second button 606 is located at a lower right corner of the first window 501 of the first interface.

As shown in FIG. 32D, after FIG. 32B, if the terminal device starts the super-macro mode again, the terminal device may display the first icon 620 on the first interface. The first icon 620 is located at a lower right corner of the first window 501 of the first interface. As shown in FIG. 32D, the first icon 620 is in the collapsed state.

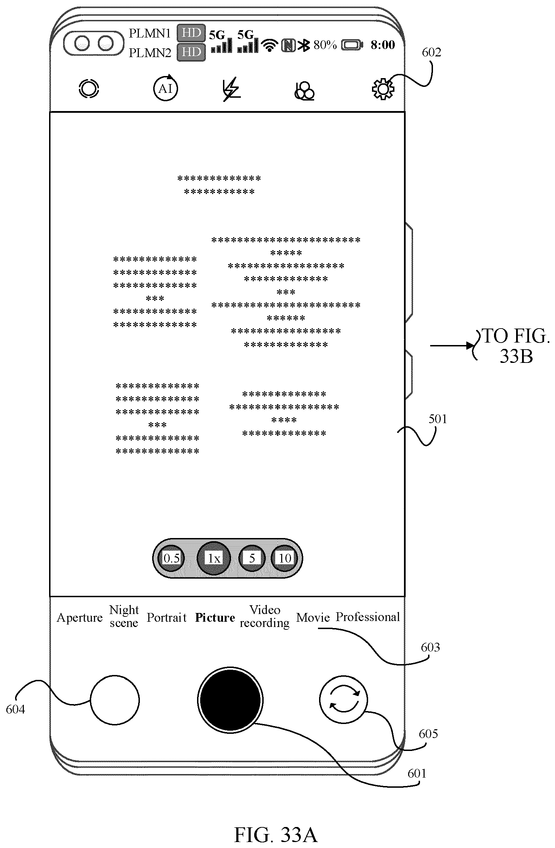

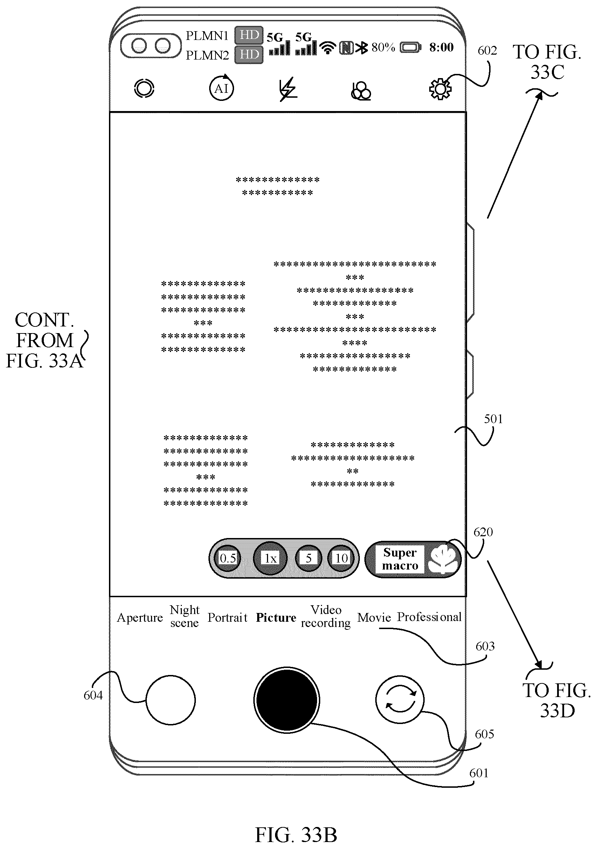

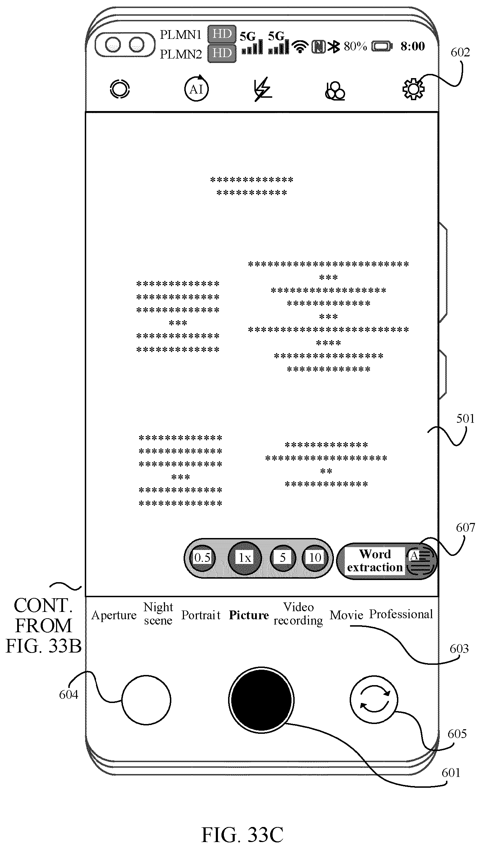

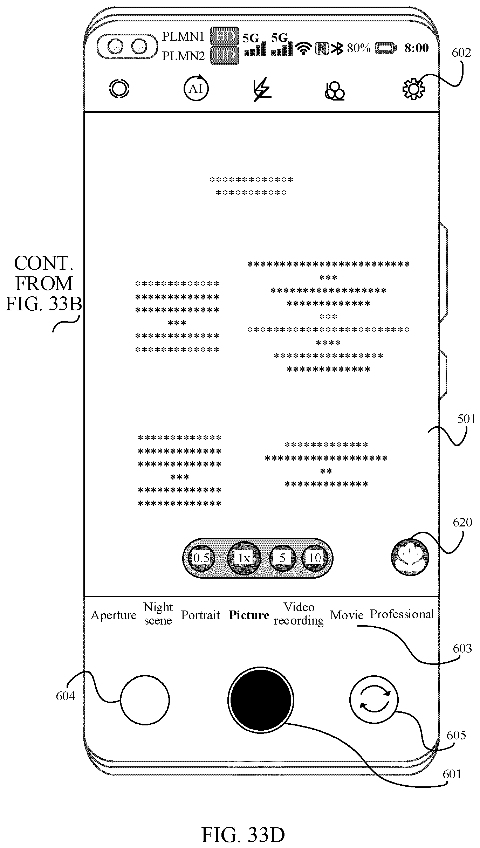

FIG. 33A, FIG. 33B, FIG. 33C, and FIG. 33D are a schematic diagram 28 of an interface according to an embodiment of this application. As shown in FIG. 33A, a terminal device opens a camera application and displays a first interface. The first interface includes a first window 501, and the first window 501 displays a preview stream collected by the terminal device. The first interface may further include a first button 601, at least one photographing-related setting button 602, at least one photographing mode button 603, a preview button 604, and a switching button 605. The first button 601 is a photographing button.

As shown in FIG. 33B, if determining that a distance between the camera for capturing a physical object and the physical object is less than a preset threshold (for example, 17 centimeters), the terminal device starts the super-macro mode and captures the preview stream in the super-macro mode. The terminal device displays a first icon 620 on the first interface. The first icon 620 is located at a lower right corner of the first window 501 of the first interface. Meanwhile, the terminal device detects an object category of the first image in the preview stream on the first interface. The first icon 620 has a collapsed state and an expanded state. As shown in FIG. 33B, the first icon 620 is in the expanded state.

As shown in FIG. 33C, when determining that the object category of the first image in the preview stream on the first interface is a text object, the terminal device does not display the first icon 620, and instead displays a third button 607. The third button 607 is located at a lower right corner of the first window 501 of the first interface.

As shown in FIG. 33D, after FIG. 33B, if the terminal device starts the super-macro mode again, the terminal device may display the first icon 620 on the first interface. The first icon 620 is located at a lower right corner of the first window 501 of the first interface. As shown in FIG. 33D, the first icon 620 is in the collapsed state.

In another example, before step S302, the terminal device starts a super-macro mode when determining that a distance between a camera of the terminal device and a physical object is less than a preset threshold.

Step S302 includes: displaying, by the terminal device, the second button on the first interface at a first moment when the object category of the first image is the document object; displaying, by the terminal device, the first icon and skipping displaying the second button on the first interface at a second moment; where the second moment is later than the first moment; and displaying, by the terminal device, the second button and skipping displaying the first icon on the first interface at a third moment; where the third moment is later than the second moment.

Step S309 includes: displaying, by the terminal device, the third button on the first interface at a first moment when the object category of the first image is the text object; where a second moment is later than the first moment; displaying, by the terminal device, a first icon and skipping displaying the third button on the first interface at the second moment; and displaying, by the terminal device, the third button and skipping displaying the first icon on the first interface at a third moment; where the third moment is later than the second moment.

The preset threshold is a first threshold.

Exemplarily, in the process in which the terminal device displays the first interface in step S301, the terminal device captures a physical object by using a camera, to obtain a preview stream. In this process, if determining that a distance between the camera for capturing a physical object and the physical object is less than a preset threshold (for example, 17 centimeters), the terminal device starts the super-macro mode and captures the preview stream in the super-macro mode.

Meanwhile, the terminal device detects an object category of the first image in the preview stream on the first interface.

When determining that the object category of the first image in the preview stream on the first interface is a document object, the terminal device first displays the second button (a dynamic document scanning button) on the first interface at the first moment. Then, at the second moment later than the first moment, the terminal device displays the first icon on the first interface and skips displaying the second button on the first interface, to prompt the user that the terminal device is currently in the super-macro mode. Then, at the third moment later than the second moment, the terminal device displays the second button on the first interface and skips displaying the first icon on the first interface.

When determining that the object category of the first image in the preview stream on the first interface is a text object, the terminal device first displays the third button (a dynamic word extraction button) on the first interface at the first moment. Then, at the second moment later than the first moment, the terminal device displays the first icon on the first interface and skips displaying the third button on the first interface, to prompt the user that the terminal device is currently in the super-macro mode. Then, at the third moment later than the second moment, the terminal device displays the third button on the first interface and skips displaying the first icon on the first interface.

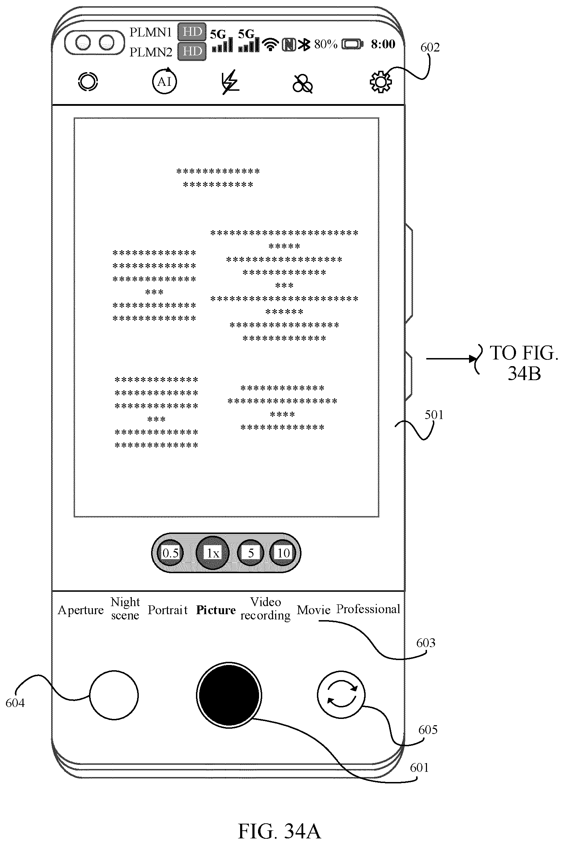

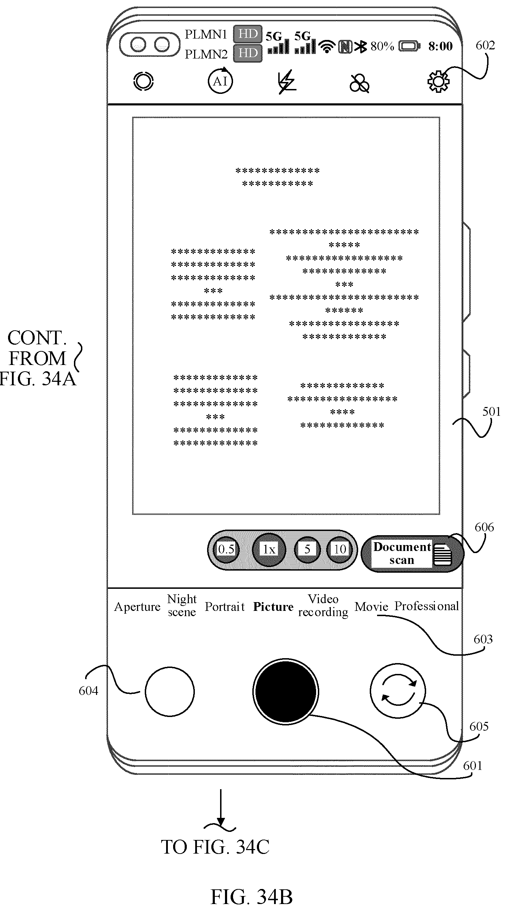

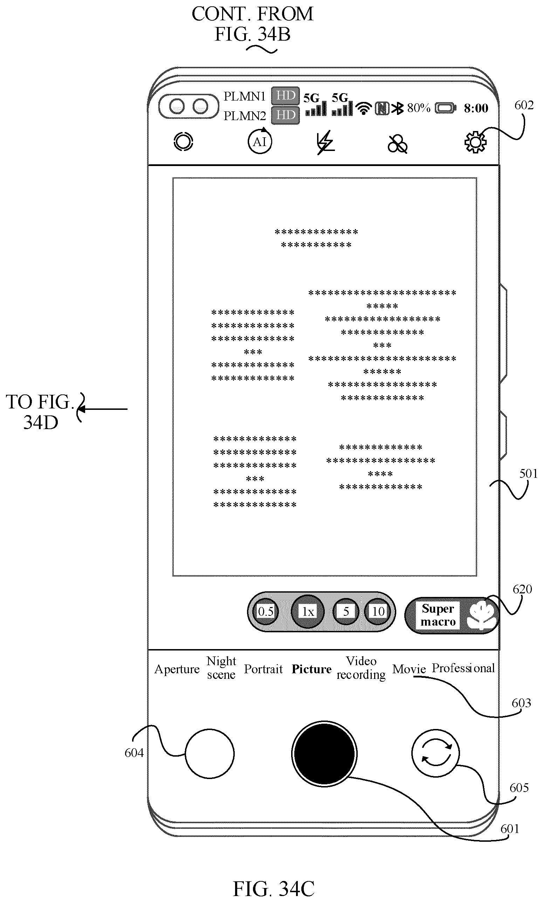

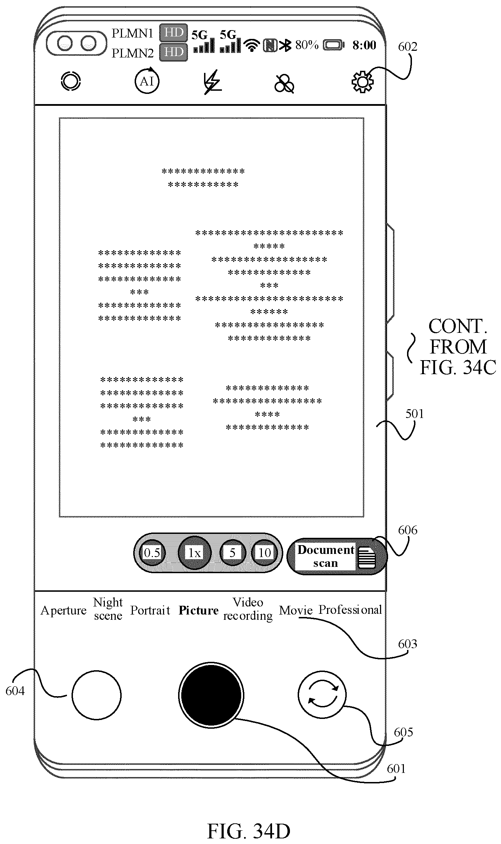

FIG. 34A, FIG. 34B, FIG. 34C, and FIG. 34D are a schematic diagram 29 of an interface according to an embodiment of this application. As shown in FIG. 34A, a terminal device opens a camera application and displays a first interface. The first interface includes a first window 501, and the first window 501 displays a preview stream collected by the terminal device. The first interface may further include a first button 601, at least one photographing-related setting button 602, at least one photographing mode button 603, a preview button 604, and a switching button 605. The first button 601 is a photographing button.

If determining that a distance between the camera for capturing a physical object and the physical object is less than a preset threshold (for example, 17 centimeters), the terminal device starts the super-macro mode and captures the preview stream in the super-macro mode. Meanwhile, the terminal device detects an object category of the first image in the preview stream on the first interface.

As shown in FIG. 34B, when determining that the object category of the first image in the preview stream on the first interface is a document object, the terminal device displays a second button 606 on the first interface at a first moment. The second button 606 is located at a lower right corner of the first window 501 of the first interface.

Then, at a second moment later than the first moment, as shown in FIG. 34C, the terminal device displays a first icon 620 and skips displaying the second button 606 on the first interface. The first icon 620 is located at a lower right corner of the first window 501 of the first interface. The first icon 620 has a collapsed state and an expanded state. As shown in FIG. 34C, the first icon 620 is in the expanded state.

Then, at a third moment later than the second moment, as shown in FIG. 34D, the terminal device displays the second button 606 and skips displaying the first icon 620 on the first interface. The second button 606 is located at a lower right corner of the first window 501 of the first interface.

In the diagram of the interface shown in FIG. 34A, FIG. 34B, FIG. 34C, and FIG. 34D, the first icon 620 is located at a lower right corner of the first window 501 of the first interface. The first icon 620 may have an expanded state or a collapsed state.

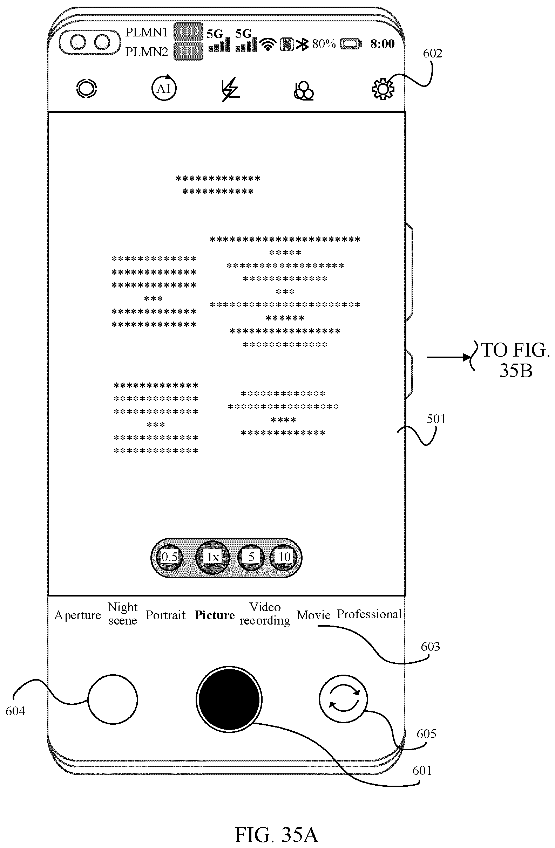

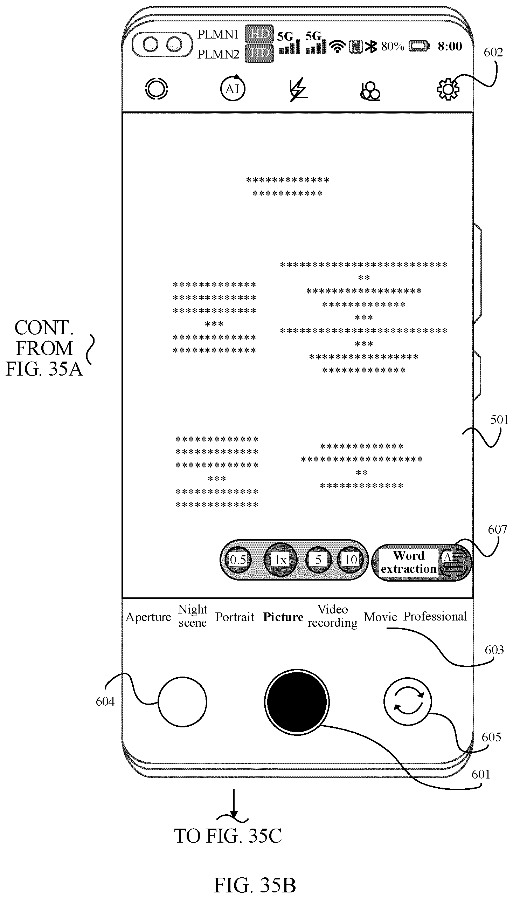

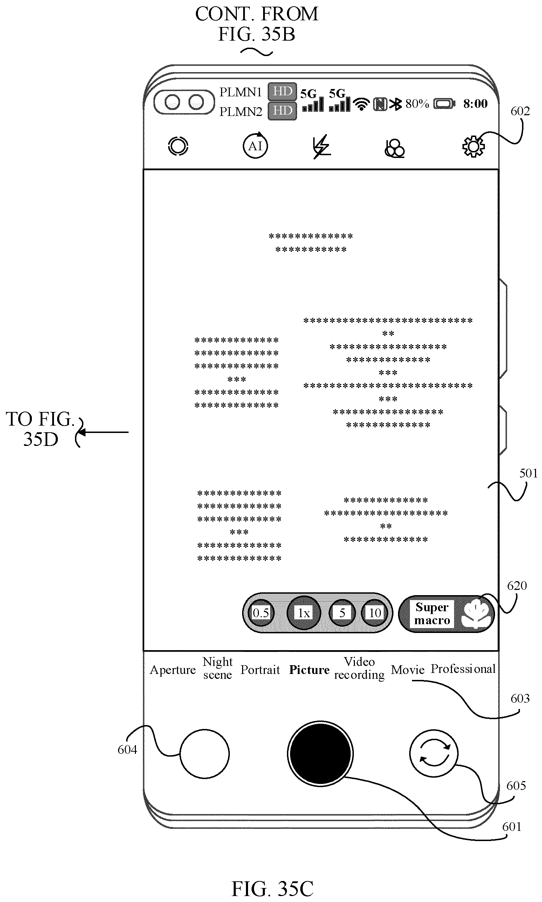

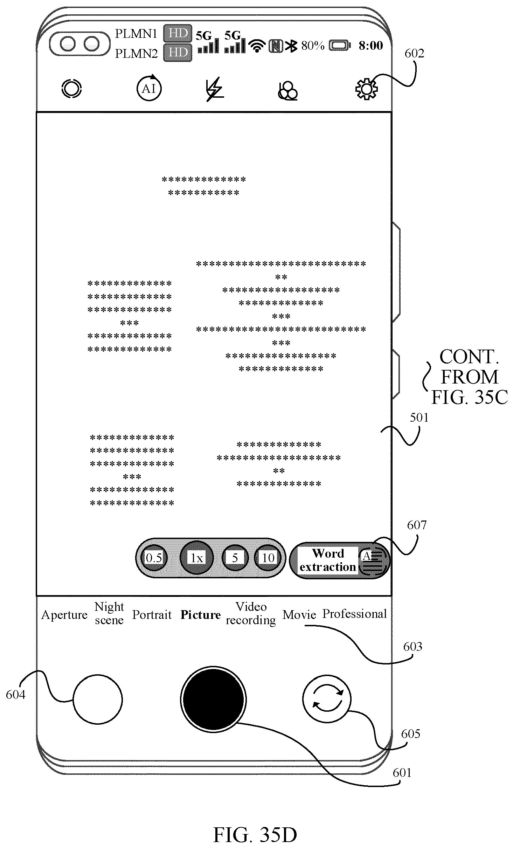

FIG. 35A, FIG. 35B, FIG. 35C, and FIG. 35D are a schematic diagram 30 of an interface according to an embodiment of this application. As shown in FIG. 35A, a terminal device opens a camera application and displays a first interface. The first interface includes a first window 501, and the first window 501 displays a preview stream collected by the terminal device. The first interface may further include a first button 601, at least one photographing-related setting button 602, at least one photographing mode button 603, a preview button 604, and a switching button 605. The first button 601 is a photographing button.

If determining that a distance between the camera for capturing a physical object and the physical object is less than a preset threshold (for example, 17 centimeters), the terminal device starts the super-macro mode and captures the preview stream in the super-macro mode. Meanwhile, the terminal device detects an object category of the first image in the preview stream on the first interface.

As shown in FIG. 35B, when determining that the object category of the first image in the preview stream on the first interface is a text object, the terminal device displays a third button 607 on the first interface at a first moment. The third button 607 is located at a lower right corner of the first window 501 of the first interface.

Then, at a second moment later than the first moment, as shown in FIG. 35C, the terminal device displays a first icon 620 and skips displaying the third button 607 on the first interface. The first icon 620 is located at a lower right corner of the first window 501 of the first interface. The first icon 620 has a collapsed state and an expanded state. As shown in FIG. 35C, the first icon 620 is in the expanded state.

Then, at a third moment later than the second moment, as shown in FIG. 35D, the terminal device displays the third button 607 and skips displaying the first icon 620 on the first interface. The third button 607 is located at a lower right corner of the first window 501 of the first interface.

In the diagram of the interface shown in FIG. 35A, FIG. 35B, FIG. 35C, and FIG. 35D, the first icon 620 is located at a lower right corner of the first window 501 of the first interface. The first icon 620 may have an expanded state or a collapsed state.

In an example, in step S304, when displaying the second image in the fourth window of the third interface, the terminal device may cut the second image in the preview stream (that is, may cut the second image in the preview stream on the second interface). In step S310, when displaying the second image in the fourth window of the third interface, the terminal device may cut the second image in the preview stream (that is, may cut the second image in the preview stream on the first interface).

Cutting may be performed in any one of the following manners:

First cutting manner: The second image in the preview stream includes a first region and a second region, the first region is a region formed by text blocks of the target text, and the second region is a peripheral region of the first region.

The second image displayed on the third interface includes the first region and does not include the second region; the text block of the target text in the first region of the second image displayed on the third interface is highlighted; and a background color of the text block of the target text in the second image in the preview stream is different from a background color of the text block of the target text in the second image displayed on the third interface.

Exemplarily, refer to descriptions of step S304 and step S310.

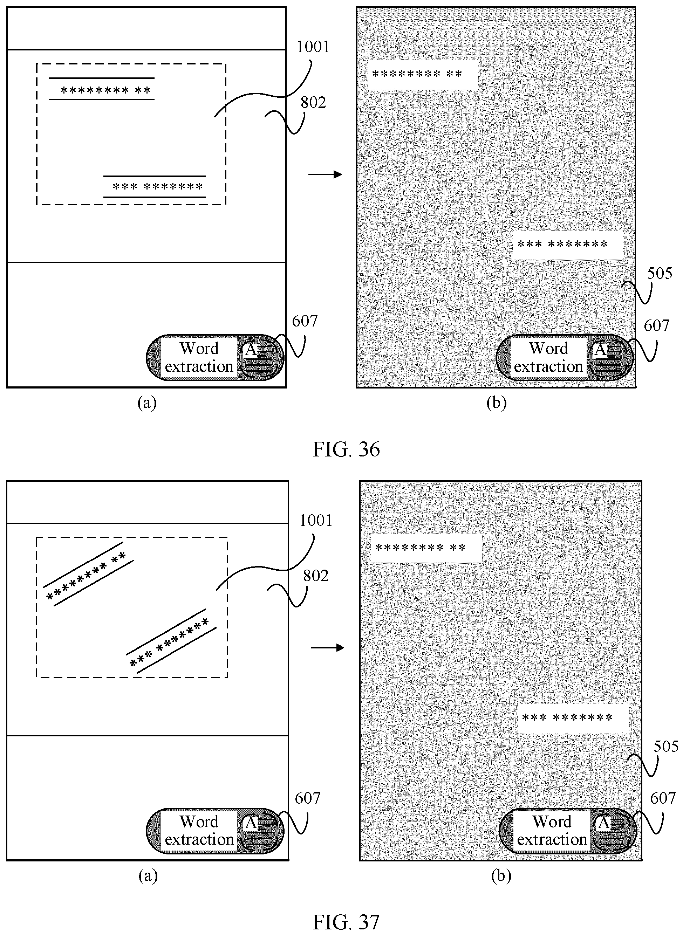

FIG. 36 is a schematic diagram 31 of an interface according to an embodiment of this application. As shown in (a) of FIG. 36, when an image on a first interface is a document object, a terminal device displays a preview stream in a second window, the preview stream includes a second image 802, and (a) of FIG. 36 is the second window 502. When the image on the first interface is a text object, the terminal device displays the preview stream in a first window, the preview stream includes the second image 802, and (a) of FIG. 36 is the first window 501. (a) of FIG. 36 includes a third button 607.

As shown in (a) of FIG. 36, the second image 802 includes a first region 1001 (as shown in a dashed box) and a second region. The first region 1001 is a minimum bounding matrix formed by text blocks (where the text blocks are text blocks of a target text) in the second image. The second region is a peripheral region of the first region 1001.

A user triggers a third button 607 in (a) of FIG. 36, and as shown in (b) of FIG. 36, the terminal device cuts off the second region, but the terminal device may reserve a part of a region around the first region 1001. The second image displayed in the fourth window 504 on the third interface by the terminal device includes the first region 1001. However, in this case, a box formed by text blocks in the second image has a particular distance to the edge of the second image. The distance may be set to a fixed number of pixels, and the number of pixels is an empirical value. Alternatively, the distance is a proportion of a length of a text block corresponding to the distance. In addition, the terminal device highlights each text block in the fourth window 504 on the third interface. The terminal device sets a background color of the text block to a preset color (for example, gray) in the fourth window 504 on the third interface. (b) of FIG. 36 includes the third button 607.

Optionally, the terminal device zooms in to display the second image in the fourth window 504 on the third interface. For example, the second image in the fourth window 504 on the third interface may fill up the fourth window 504.

Second cutting manner: The second image in the preview stream includes a first region and a second region, the first region is a region formed by text blocks of the target text, and the second region is a peripheral region of the first region.

The second image displayed on the third interface includes the first region and does not include the second region; the text block of the target text in the first region of the second image displayed on the third interface is highlighted; a background color of the text block of the target text in the second image in the preview stream is different from a background color of the text block of the target text in the second image displayed on the third interface; and a direction of the text block of the target text in the second image displayed on the third interface adapts to a direction of a screen of the terminal device.

For example, based on the first cutting manner, if directions of text blocks in the second image in the preview stream are the same, but the directions of the text blocks in the second image in the preview stream do not adapt to the direction of the screen of the terminal device, a direction of the text block in the second image displayed in the fourth window of the third interface by the terminal device adapts to the direction of the screen of the terminal device.

"The direction of the text block in the second image displayed in the fourth window of the third interface by the terminal device adapts to the direction of the screen of the terminal device" refers to that if the screen of the terminal device is in portrait mode, the display direction of the text block in the image displayed in the fourth window is a direction along a short side of the screen of the terminal device, and if the screen of the terminal device is in landscape mode, the display direction of the text block in the image displayed in the fourth window is a direction along a long side of the screen of the terminal device.

FIG. 37 is a schematic diagram 32 of an interface according to an embodiment of this application. As shown in (a) of FIG. 37, when an image on a first interface is a document object, a terminal device displays a preview stream in a second window, the preview stream includes a second image 802, and (a) of FIG. 37 is the second window 502. When the image on the first interface is a text object, the terminal device displays the preview stream in a first window, the preview stream includes the second image 802, and (a) of FIG. 37 is the first window 501. (a) of FIG. 37 includes a third button 607.

As shown in (a) of FIG. 37, the second image 802 includes a first region 1001 (as shown in a dashed box) and a second region. The first region 1001 is a minimum bounding matrix formed by text blocks (where the text blocks are text blocks of a target text) in the second image. The second region is a peripheral region of the first region 1001. A direction of the first region 1001 is a direction of each text block in the second image, and does not adapt to the direction of the screen of the terminal device.

A user triggers a third button 607 in (a) of FIG. 37, and as shown in (b) of FIG. 37, the terminal device cuts off the second region, but the terminal device may reserve a part of a region around the first region 1001. The second image displayed in the fourth window 504 on the third interface by the terminal device includes the first region 1001. However, in this case, a box formed by text blocks in the second image has a particular distance to the edge of the second image. The distance may be set to a fixed number of pixels, and the number of pixels is an empirical value. Alternatively, the distance is a proportion of a length of a text block corresponding to the distance. In addition, the terminal device highlights each text block in the fourth window 504 on the third interface. The terminal device sets a background color of the text block to a preset color (for example, gray) in the fourth window 504 on the third interface. In the fourth window 504 on the third interface, the terminal device adapts the direction of the text block to the direction of the screen of the terminal device. (b) of FIG. 37 includes the third button 607.

Optionally, the terminal device zooms in to display the second image in the fourth window 504 on the third interface. For example, the second image in the fourth window 504 on the third interface may fill up the fourth window 504.

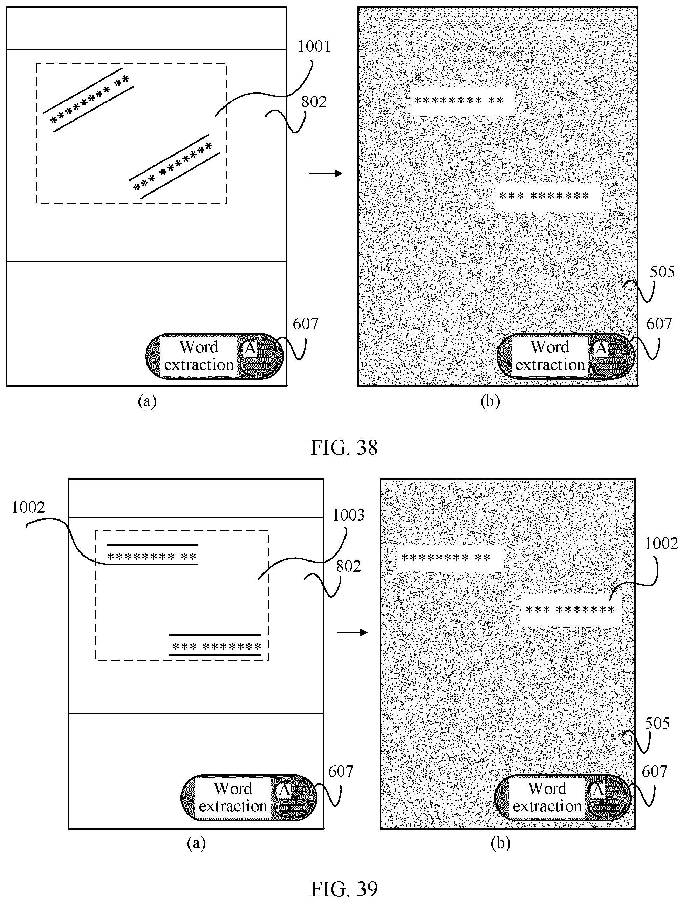

FIG. 38 is a schematic diagram 33 of an interface according to an embodiment of this application. As shown in (a) of FIG. 38, when an image on a first interface is a document object, a terminal device displays a preview stream in a second window, the preview stream includes a second image 802, and (a) of FIG. 38 is the second window 502. When the image on the first interface is a text object, the terminal device displays the preview stream in a first window, the preview stream includes the second image 802, and (a) of FIG. 38 is the first window 501. (a) of FIG. 38 includes a third button 607.

As shown in (a) of FIG. 38, the second image 802 includes a first region 1001 (as shown in a dashed box) and a second region. The first region 1001 is a minimum bounding matrix formed by text blocks (where the text blocks are text blocks of a target text) in the second image. The second region is a peripheral region of the first region 1001. A direction of the first region 1001 is a direction of each text block in the second image, and does not adapt to the direction of the screen of the terminal device.

A user triggers the third button 607 in (a) of FIG. 38, and as shown in (b) of FIG. 38, the terminal device does not cut the second image. The terminal device highlights each text block in the fourth window 504 on the third interface. The terminal device sets a background color of the text block to a preset color (for example, gray) in the fourth window 504 on the third interface. In the fourth window 504 on the third interface, the terminal device adapts the direction of the text block to the direction of the screen of the terminal device. (b) of FIG. 38 includes the third button 607.

Third cutting manner: The second image in the preview stream includes at least one third region and a fourth region, and the third region is a region formed by text blocks of the target text; a distance between two third regions in at least one pair of adjacent third regions is greater than a preset distance; and the fourth region is a peripheral region of a region formed by the at least one third region.

The second image displayed on the third interface includes the at least one third region and does not include the fourth region, and the text block of the target text in the second image displayed on the third interface is highlighted; each distance between adjacent third regions in the second image displayed on the third interface is less than the preset distance; and a background color of the text block of the target text in the second image in the preview stream is different from a background color of the text block of the target text in the second image displayed on the third interface.

Optionally, a direction of the text block of the target text in the second image displayed on the third interface adapts to a direction of a screen of the terminal device.

Exemplarily, the second image in the preview stream includes at least one third region and a fourth region. For each third region, the third region is a region formed by each text block (where the text block is a text block of the target text). In the second image in the preview stream, there are two adjacent third regions between which a distance is greater than a preset distance. A region formed by the at least one third region is a minimum bounding rectangle formed by the text blocks in the second image. The fourth region is a peripheral region of the region formed by the at least one third region, that is, the fourth region is a peripheral region of the minimum bounding rectangle formed by the text blocks in the second image.

When displaying the third interface in response to that the third button is triggered, the terminal device determines the minimum bounding matrix formed by the text blocks in the second image. The terminal device cuts the second image according to a size of the minimum bounding matrix, to cut off a peripheral region located before the minimum bounding matrix in the second image. The terminal device may reserve a part of a region around the periphery of the minimum bounding matrix.

In addition, the terminal device determines whether a distance between adjacent third regions (that is, adjacent text blocks) in the second image is greater than a preset distance. The "distance between adjacent third regions (that is, adjacent text blocks) in the second image" includes the following distances: a top-down distance and a left-right distance of the text block. The "preset distance" is an empirical value, and the preset distance may be a height of the text block or a width of the text block. If determining that the distance between adjacent third regions in the second image is greater than the preset distance, the terminal device cuts to a region between the adjacent third regions, so that the distance between the adjacent third regions is less than or equal to the preset distance.

In addition, the terminal device highlights each text block of the target text in the fourth window on the third interface. In addition, the terminal device sets a background color of the text block of the target text to a preset color (for example, gray or black) in the fourth window on the third interface. Therefore, a background color of the text block of the target text in the second image in the preview stream is different from a background color of the text block of the target text in the second image displayed on the third interface.

Optionally, because the second image displayed on the third interface of the terminal device is an image obtained after cutting, when displaying the second image in the fourth window of the third interface, the terminal device may fill up the fourth window with the second image obtained after cutting. For example, a width of the second image obtained after cutting is used as a reference, and the fourth window is filled up with the second image obtained after cutting, so that the second image obtained after cutting reaches the edge of the fourth window in a width direction. For another example, a height of the second image obtained after cutting is used as a reference, and the fourth window is filled up with the second image obtained after cutting, so that the second image obtained after cutting reaches the edge of the fourth window in a height direction.

If directions of text blocks in the second image in the preview stream are the same, but the directions of the text blocks in the second image in the preview stream do not adapt to the direction of the screen of the terminal device, a direction of the text block in the second image displayed in the fourth window of the third interface by the terminal device adapts to the direction of the screen of the terminal device. Alternatively, if directions of text blocks in the second image in the preview stream are the same, but the directions of the text blocks in the second image in the preview stream do not adapt to the direction of the screen of the terminal device, the terminal device does not adjust the direction of the text block in the second image in the fourth window on the third interface.

FIG. 39 is a schematic diagram 34 of an interface according to an embodiment of this application. As shown in (a) of FIG. 39, when an image on a first interface is a document object, a terminal device displays a preview stream in a second window, the preview stream includes a second image 802, and (a) of FIG. 39 is the second window 502. When the image on the first interface is a text object, the terminal device displays the preview stream in a first window, the preview stream includes the second image 802, and (a) of FIG. 39 is the first window 501. (a) of FIG. 39 includes a third button 607.

As shown in (a) of FIG. 39, the second image 802 includes at least one third region 1002 and a fourth region. Each third region 1002 is a region formed by each text block. The region formed by the third region 1002 has a minimum bounding rectangle. As shown by a dashed box in (a) of FIG. 39, the minimum bounding rectangle is a region 1003. A distance between two adjacent third regions 1002 is greater than a preset distance. The fourth region is a peripheral region of the region 1003. Directions of the text blocks in the second image in the preview stream are the same.

A user triggers the third button 607 in (a) of FIG. 39, and as shown in (b) of FIG. 39, the terminal device cuts off the fourth region, but the terminal device may reserve a part of a region around the region 1003. The second image displayed in the fourth window 504 on the third interface by the terminal device does not include the fourth region. However, in this case, a box formed by text blocks in the second image has a particular distance to the edge of the second image. The distance may be set to a fixed number of pixels, and the number of pixels is an empirical value. Alternatively, the distance is a proportion of a length of a text block corresponding to the distance. In addition, the terminal device cuts off a region between adjacent third regions 1003 between which a distance is relatively large. In addition, the terminal device highlights each text block in the fourth window 504 on the third interface. The terminal device sets a background color of the text block to a preset color (for example, gray) in the fourth window 504 on the third interface. (b) of FIG. 39 includes the third button 607.

Optionally, the terminal device zooms in to display the second image in the fourth window 504 on the third interface. For example, the second image in the fourth window 504 on the third interface may fill up the fourth window 504.

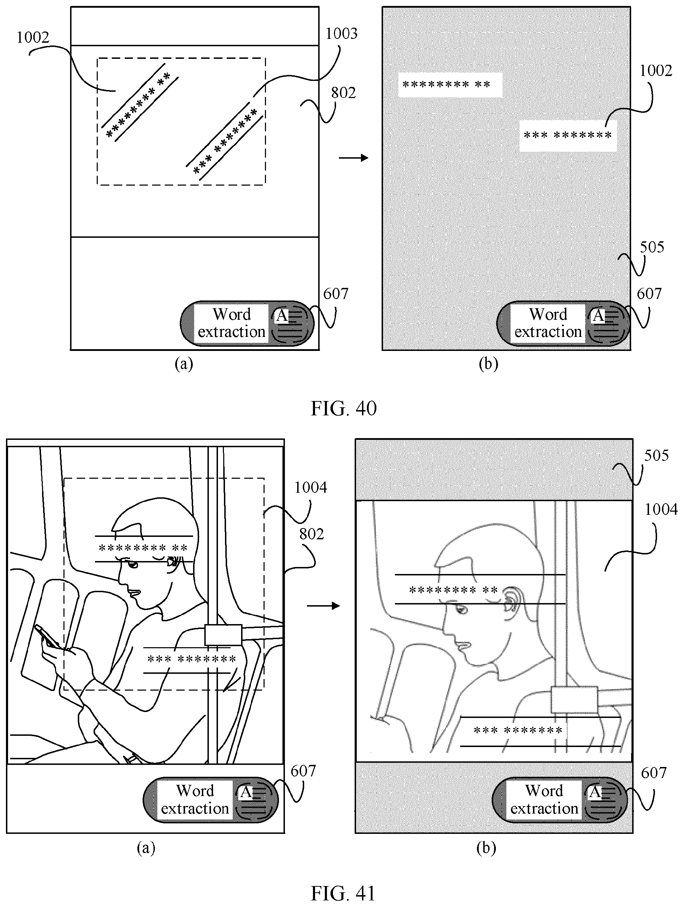

FIG. 40 is a schematic diagram 35 of an interface according to an embodiment of this application. As shown in (a) of FIG. 40, when an image on a first interface is a document object, a terminal device displays a preview stream in a second window, the preview stream includes a second image 802, and (a) of FIG. 40 is the second window 502. When the image on the first interface is a text object, the terminal device displays the preview stream in a first window, the preview stream includes the second image 802, and (a) of FIG. 40 is the first window 501. (a) of FIG. 40 includes a third button 607.

As shown in (a) of FIG. 40, the second image 802 includes at least one third region 1002 and a fourth region. Each third region 1002 is a region formed by each text block. The region formed by the third region 1002 has a minimum bounding rectangle. As shown by a dashed box in (a) of FIG. 40, the minimum bounding rectangle is a region 1003. A distance between two adjacent third regions 1002 is greater than a preset distance. The fourth region is a peripheral region of the region 1003. Directions of text blocks in the second image in the preview stream are the same, but the directions of the text blocks in the second image in the preview stream do not adapt to the direction of the screen of the terminal device.

A user triggers the third button 607 in (a) of FIG. 40, and as shown in (b) of FIG. 40, the terminal device cuts off the fourth region, but the terminal device may reserve a part of a region around the region 1003. The second image displayed in the fourth window 504 on the third interface by the terminal device does not include the fourth region. However, in this case, a box formed by text blocks in the second image has a particular distance to the edge of the second image. The distance may be set to a fixed number of pixels, and the number of pixels is an empirical value. Alternatively, the distance is a proportion of a length of a text block corresponding to the distance. In addition, the terminal device cuts off a region between adjacent third regions 1003 between which a distance is relatively large. In addition, the terminal device highlights each text block in the fourth window 504 on the third interface. The terminal device sets a background color of the text block to a preset color (for example, gray) in the fourth window 504 on the third interface. In the fourth window 504 on the third interface, the terminal device adapts the direction of the text block to the direction of the screen of the terminal device. (b) of FIG. 40 includes the third button 607.

Optionally, the terminal device zooms in to display the second image in the fourth window 504 on the third interface. For example, the second image in the fourth window 504 on the third interface may fill up the fourth window 504.

Fourth cutting manner: The second image in the preview stream includes a fifth region and a sixth region, the fifth region is a region formed by text blocks of the target text and includes a background image, and the sixth region is a peripheral region of the fifth region.

The second image displayed on the third interface includes the fifth region and does not include the sixth region, and the text block of the target text in the second image displayed on the third interface is highlighted.

Optionally, a direction of the text block of the target text in the second image displayed on the third interface adapts to a direction of a screen of the terminal device.

For example, the second image in the preview stream includes the fifth region and the sixth region. The text blocks in the second image in the preview stream include a background image. The background image is a person background, a scenery background, or the like. The fifth region is a region formed by the text blocks of the second image in the preview stream, and the fifth region includes a background image. The sixth region is a peripheral region of the fifth region.

When displaying the third interface in response to that the third button is triggered, the terminal device reserves the text blocks in the second image and the background image of the text blocks. Therefore, the terminal device reserves the fifth region and cuts off the sixth region. The terminal device highlights each text block of the target text in the fourth window on the third interface.

FIG. 41 is a schematic diagram 36 of an interface according to an embodiment of this application. As shown in (a) of FIG. 41, when an image on a first interface is a document object, a terminal device displays a preview stream in a second window, the preview stream includes a second image 802, and (a) of FIG. 41 is the second window 502. When the image on the first interface is a text object, the terminal device displays the preview stream in a first window, the preview stream includes the second image 802, and (a) of FIG. 41 is the first window 501. (a) of FIG. 41 includes a third button 607.

As shown in (a) of FIG. 41, the second image 802 includes a fifth region 1004 and a sixth region. The fifth region 1004 is a region formed by text blocks of the second image in the preview stream, and the fifth region 1004 includes a background image. The sixth region is a peripheral region of the fifth region. Directions of the text blocks in the second image in the preview stream are the same.

A user triggers the third button 607 in (a) of FIG. 41, and as shown in (b) of FIG. 41, the terminal device cuts off the sixth region. The second image displayed by the terminal device in a fourth window 504 of a third interface does not include the sixth region and includes the fifth region 1004. (b) of FIG. 41 includes the third button 607.

Optionally, the terminal device zooms in to display the second image in the fourth window 504 on the third interface. For example, the second image in the fourth window 504 on the third interface may fill up the fourth window 504.

Fifth cutting manner: The second image in the preview stream includes a first region and a second region, the first region is a region formed by text blocks of the target text, and the second region is a peripheral region of the first region; and directions of the text blocks of the target text in the second image in the preview stream include at least two different directions.

The second image displayed on the third interface includes the first region and does not include the second region; the text block of the target text in the second image displayed on the third interface is highlighted; a background color of the text block of the target text in the second image in the preview stream is different from a background color of the text block of the target text in the second image displayed on the third interface; and directions of the text blocks of the target text in the second image displayed on the third interface include at least two different directions.

Exemplarily, the second image in the preview stream includes a first region and a second region, the first region is a region formed by text blocks of the target text, and the second region is a peripheral region of the first region. The first region is a minimum bounding rectangle formed by the text blocks in the second image, and the second region is a region in the second image other than the minimum bounding rectangle. The directions of the text blocks of the target text in the second image in the preview stream are different.

When displaying the third interface in response to that the third button is triggered, the terminal device determines the minimum bounding matrix formed by the text blocks in the second image. The terminal device cuts the second image according to a size of the minimum bounding matrix, to cut off a peripheral region located before the minimum bounding matrix in the second image. The terminal device may reserve a part of a region around the periphery of the minimum bounding matrix. In addition, the terminal device cuts off a peripheral region of the first region, that is, cuts off the second region, to obtain the second image for displaying on the third interface. In the second image for displaying on the third interface, a box formed by the text blocks has a particular distance to the edge of the image. The distance may be set to a fixed number of pixels, and the number of pixels is an empirical value. Alternatively, the distance is a proportion of a length of a text block corresponding to the distance.

Therefore, the second image displayed by the terminal device on the third interface includes the first region and does not include the second region. In addition, the terminal device highlights each text block of the target text in the first region. In addition, the terminal device sets a background color of the text block of the target text in the first region to a preset color (for example, gray or black). Therefore, a background color of the text block of the target text in the second image in the preview stream is different from a background color of the text block of the target text in the second image displayed on the third interface.

The terminal device does not perform direction correction on the text block.

Optionally, because the second image displayed on the third interface of the terminal device is an image obtained after cutting, when displaying the second image in the fourth window of the third interface, the terminal device may fill up the fourth window with the second image obtained after cutting.

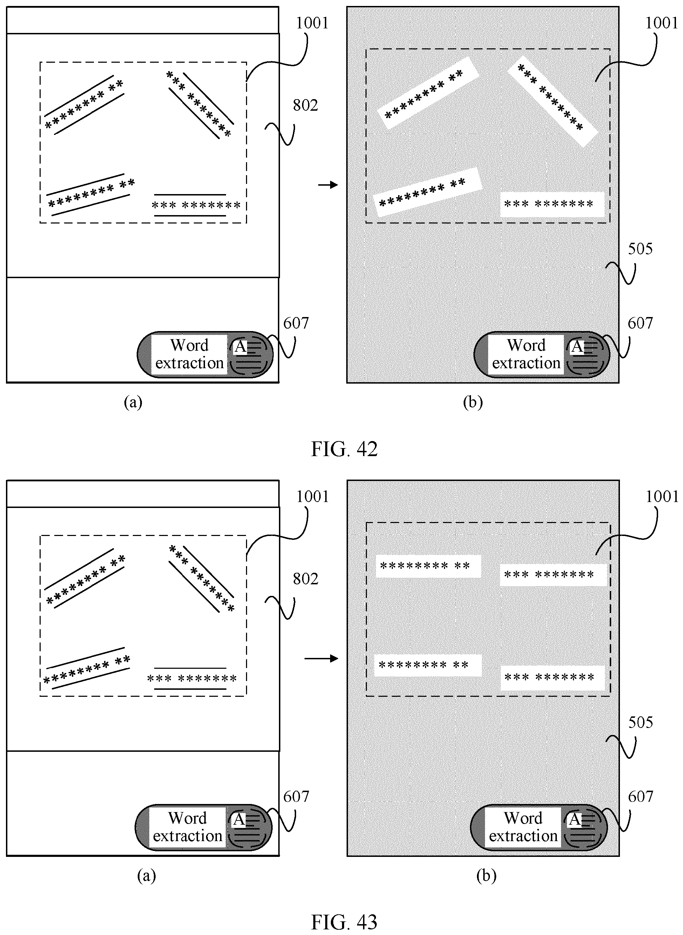

FIG. 42 is a schematic diagram 37 of an interface according to an embodiment of this application. As shown in (a) of FIG. 42, when an image on a first interface is a document object, a terminal device displays a preview stream in a second window, the preview stream includes a second image 802, and (a) of FIG. 42 is the second window 502. When the image on the first interface is a text object, the terminal device displays the preview stream in a first window, the preview stream includes the second image 802, and (a) of FIG. 42 is the first window 501. (a) of FIG. 42 includes a third button 607.

As shown in (a) of FIG. 42, the second image 802 includes a first region 1001 (as shown in a dashed box) and a second region. The first region 1001 is a minimum bounding matrix formed by text blocks (where the text blocks are text blocks of a target text) in the second image. The second region is a peripheral region of the first region 1001. Directions of text blocks in the first region 1001 are different.

A user triggers the third button 607 in (a) of FIG. 42, and as shown in (b) of FIG. 42, the terminal device cuts off the second region, but the terminal device may reserve a part of a region around the first region 1001. Directions of text blocks in the first region 1001 are different.

Optionally, the terminal device zooms in to display the second image in the fourth window 504 on the third interface. For example, the second image in the fourth window 504 on the third interface may fill up the fourth window 504.

Sixth cutting manner: The second image in the preview stream includes a first region and a second region, the first region is a region formed by text blocks of the target text, and the second region is a peripheral region of the first region; and directions of the text blocks of the target text in the second image in the preview stream include at least two different directions.

The second image displayed on the third interface includes the first region and does not include the second region; the text block of the target text in the second image displayed on the third interface is highlighted; a background color of the text block of the target text in the second image in the preview stream is different from a background color of the text block of the target text in the second image displayed on the third interface; and directions of the text blocks of the target text in the second image displayed on the third interface are the same.

Optionally, the directions of the text blocks of the target text in the second image displayed on the third interface are based on a direction of the first text block in the second image in the preview stream. Alternatively, the directions of the text blocks of the target text in the second image displayed on the third interface are based on a direction of a text block with the largest area in the second image in the preview stream. Alternatively, the directions of the text blocks of the target text in the second image displayed on the third interface are based on a direction of a text block with the largest word count in the second image in the preview stream.

For example, based on the sixth cutting manner, the terminal device corrects, in the fourth window of the third interface, the directions of the text blocks to be the same.

For example, during correction of the directions of the text blocks, a correction angle of the first text block is used as a reference, and other text blocks follow the first text block, or a correction angle of the text block with the largest area is used as a reference, and other text blocks follow this text block, or a correction angle of the text block with the largest word count is used as a reference, and other text blocks follow this text block.

FIG. 43 is a schematic diagram 38 of an interface according to an embodiment of this application. As shown in (a) of FIG. 43, when an image on a first interface is a document object, a terminal device displays a preview stream in a second window, the preview stream includes a second image 802, and (a) of FIG. 43 is the second window 502. When the image on the first interface is a text object, the terminal device displays the preview stream in a first window, the preview stream includes the second image 802, and (a) of FIG. 43 is the first window 501. (a) of FIG. 43 includes a third button 607.

As shown in (a) of FIG. 43, the second image 802 includes a first region 1001 (as shown in a dashed box) and a second region. The first region 1001 is a minimum bounding matrix formed by text blocks (where the text blocks are text blocks of a target text) in the second image. The second region is a peripheral region of the first region 1001. Directions of text blocks in the first region 1001 are different.

A user triggers the third button 607 in (a) of FIG. 43, and as shown in (b) of FIG. 43, the terminal device cuts off the second region, but the terminal device may reserve a part of a region around the first region 1001. Directions of text blocks in the first region 1001 are the same.

Optionally, the terminal device zooms in to display the second image in the fourth window 504 on the third interface. For example, the second image in the fourth window 504 on the third interface may fill up the fourth window 504.

Seventh cutting manner: The second image in the preview stream includes at least one third region and a fourth region, and the third region is a region formed by text blocks of the target text; a distance between two third regions in at least one pair of adjacent third regions is greater than a preset distance; the fourth region is a peripheral region of a region formed by the at least one third region; and directions of the text blocks of the target text in the second image in the preview stream include at least two different directions.

The second image displayed on the third interface includes the at least one third region and does not include the fourth region, and the text block of the target text in the second image displayed on the third interface is highlighted; each distance between adjacent third regions in the second image displayed on the third interface is less than the preset distance; and a background color of the text block of the target text in the second image in the preview stream is different from a background color of the text block of the target text in the second image displayed on the third interface; and directions of the text blocks of the target text in the second image displayed on the third interface are the same.

Optionally, the directions of the text blocks of the target text in the second image displayed on the third interface are based on a direction of the first text block in the second image in the preview stream. Alternatively, the directions of the text blocks of the target text in the second image displayed on the third interface are based on a direction of a text block with the largest area in the second image in the preview stream. Alternatively, the directions of the text blocks of the target text in the second image displayed on the third interface are based on a direction of a text block with the largest word count in the second image in the preview stream.

For example, refer to the description of the third cutting manner. A difference from the third cutting manner is: The directions of the text blocks of the target text in the second image in the preview stream are different. When displaying the third interface in response to that the third button is triggered, the terminal device corrects the directions of the text blocks of the target text in the second image displayed on the third interface, to correct the directions to be the same, and the directions of the text blocks adapt to the direction of the screen of the terminal device.

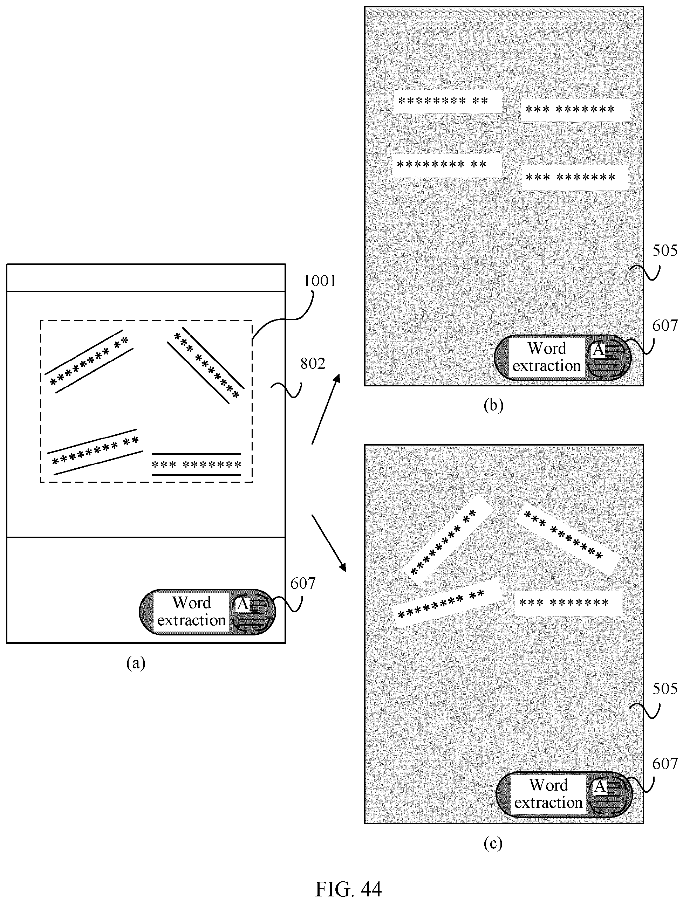

FIG. 44 is a schematic diagram 39 of an interface according to an embodiment of this application. As shown in (a) of FIG. 44, when an image on a first interface is a document object, a terminal device displays a preview stream in a second window, the preview stream includes a second image 802, and (a) of FIG. 44 is the second window 502. When the image on the first interface is a text object, the terminal device displays the preview stream in a first window, the preview stream includes the second image 802, and (a) of FIG. 44 is the first window 501. (a) of FIG. 44 includes a third button 607.

As shown in (a) of FIG. 44, the second image 802 includes at least one third region 1002 and a fourth region. Each third region 1002 is a region formed by each text block. The region formed by the third region 1002 has a minimum bounding rectangle. As shown by a dashed box in (a) of FIG. 44, the minimum bounding rectangle is a region 1003. A distance between two adjacent third regions 1002 is greater than a preset distance. The fourth region is a peripheral region of the region 1003. Directions of the text blocks in the second image in the preview stream are different.

A user triggers the third button 607 in (a) of FIG. 44, and as shown in (b) of FIG. 44, the terminal device cuts off the fourth region, but the terminal device may reserve a part of a region around the region 1003. The second image displayed in the fourth window 504 on the third interface by the terminal device does not include the fourth region. However, in this case, a box formed by text blocks in the second image has a particular distance to the edge of the second image. In addition, the terminal device cuts off a region between adjacent third regions 1003 between which a distance is relatively large. In addition, the terminal device highlights each text block in the fourth window 504 on the third interface. The terminal device sets a background color of the text block to a preset color (for example, gray) in the fourth window 504 on the third interface. The terminal device corrects, in the fourth window 504 of the third interface, the directions of the text blocks to be the same. (b) of FIG. 44 includes the third button 607. Optionally, the terminal device zooms in to display the second image in the fourth window 504 on the third interface. For example, the second image in the fourth window 504 on the third interface may fill up the fourth window 504.

Alternatively, the user triggers the third button 607 in (a) of FIG. 44, and as shown in (c) of FIG. 44, (c) of FIG. 44 includes a processing process of (b) of FIG. 44, but the terminal device does not correct the directions of the text blocks in the fourth window 504 of the third interface.

Eighth cutting manner: The second image in the preview stream includes a fifth region and a sixth region, the fifth region is a region formed by text blocks of the target text and includes a background image, and the sixth region is a peripheral region of the fifth region; and directions of the text blocks of the target text in the second image in the preview stream include at least two different directions.

The second image displayed on the third interface includes the fifth region and does not include the sixth region, and the text block of the target text in the second image displayed on the third interface is highlighted; and a background color of the text block of the target text in the second image in the preview stream is different from a background color of the text block of the target text in the second image displayed on the third interface.

Optionally, directions of the text blocks of the target text in the second image displayed on the third interface are the same.

Exemplarily, refer to the fourth cutting manner. A difference from the third cutting manner is: The directions of the text blocks of the target text in the second image in the preview stream are different. When displaying the third interface in response to that the third button is triggered, the terminal device corrects the directions of the text blocks of the target text in the second image displayed on the third interface to be the same, or does not correct the directions.

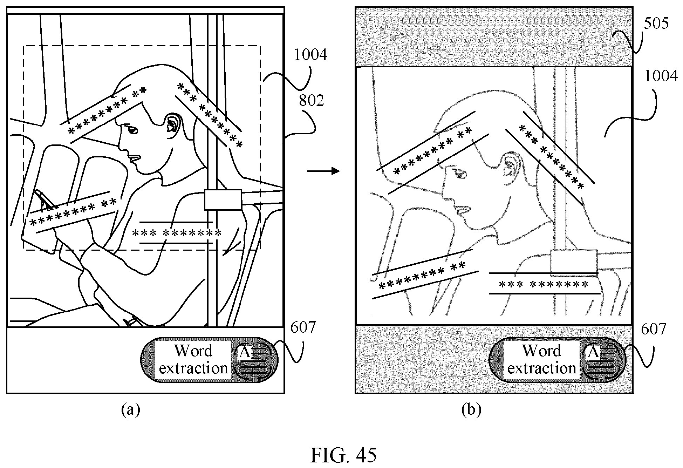

FIG. 45 is a schematic diagram 40 of an interface according to an embodiment of this application. As shown in (a) of FIG. 45, when an image on a first interface is a document object, a terminal device displays a preview stream in a second window, the preview stream includes a second image 802, and (a) of FIG. 45 is the second window 502. When the image on the first interface is a text object, the terminal device displays the preview stream in a first window, the preview stream includes the second image 802, and (a) of FIG. 45 is the first window 501. (a) of FIG. 45 includes a third button 607.

As shown in (a) of FIG. 45, the second image 802 includes a fifth region 1004 and a sixth region. The fifth region 1004 is a region formed by text blocks of the second image in the preview stream, and the fifth region 1004 includes a background image. The sixth region is a peripheral region of the fifth region. Directions of the text blocks in the second image in the preview stream are different.

A user triggers the third button 607 in (a) of FIG. 45, and as shown in (b) of FIG. 45, the terminal device cuts off the sixth region. The second image displayed by the terminal device in a fourth window 504 of a third interface does not include the sixth region and includes the fifth region 1004. The terminal device does not correct the direction of the text block in the fourth window 504 on the third interface. (b) of FIG. 45 includes the third button 607.

Optionally, the terminal device zooms in to display the second image in the fourth window 504 on the third interface. For example, the second image in the fourth window 504 on the third interface may fill up the fourth window 504.

In the foregoing example, the "direction of the text block" may be determined according to a language type, a font, a word size, a glyph, or the like.

In an example, in step S304, after displaying the second image in the fourth window on the third interface, the terminal device may zoom in the second image in the fourth window when triggered by the user. In step S310, after displaying the second image in the fourth window on the third interface, the terminal device may zoom in the second image in the fourth window when triggered by the user.

Zoom-in may be performed in any one of the following manners: In the following zoom-in manners (except a gesture operation), when triggering a location, a text block, or a region in the fourth window, the user may trigger through double click or single click.

### First zoom-in manner.

In response to that a first location in the fourth window is triggered, the terminal device zooms in an image in the fourth window with the first location as a center point at a first ratio at a fourth moment, where the first location is any location in the second image in the fourth window.

In response to that a second location in the fourth window is triggered, the terminal device zooms in an image in the fourth window with the second location as a center point at a second ratio at a fifth moment, where the second location is any location in the second image in the fourth window, and the fifth moment is later than the fourth moment.

In response to that a third location in the fourth window is triggered, the terminal device zooms out an image in the fourth window to a size that is before the fourth moment at a sixth moment, where the third location is any location in the second image in the fourth window, and the sixth moment is later than the fifth moment.

An image in the fourth window after the fifth moment is 1.75 times to 3 times of an image in the fourth window before the fourth moment.

For example, after the terminal device displays the image in the fourth window on the third interface, the user may trigger in the fourth window to zoom in or zoom out the image in the fourth window.

The user triggers a first location in the fourth window at the fourth moment, where the first location is any location of the second image in the fourth window. The terminal device zooms in to display the image in the fourth window with the first location as a center point at a first ratio. The first ratio is a preset multiple (for example, 1.75 times to 3 times) of an original image size. The original image size is an original image size of the second image displayed in the fourth window.

The user triggers a second location in the fourth window at the fifth moment later than the fourth moment, where the second location is any location of the second image in the fourth window. The terminal device zooms in to display the image in the fourth window with the second location as a center point at a second ratio. The second ratio is a preset multiple (for example, 1.75 times to 3 times) of an original image size. The original image size is an original image size of the second image displayed in the fourth window.

The user triggers a third location in the fourth window at a sixth moment later than the fifth moment, where the third location is any location of the second image in the fourth window. The terminal device zooms out the image in the fourth window to recover the image to the size before the fourth moment, that is, to the original image size.

A maximum value obtained after the image is zoomed in is 3 times of the original image size of the image.

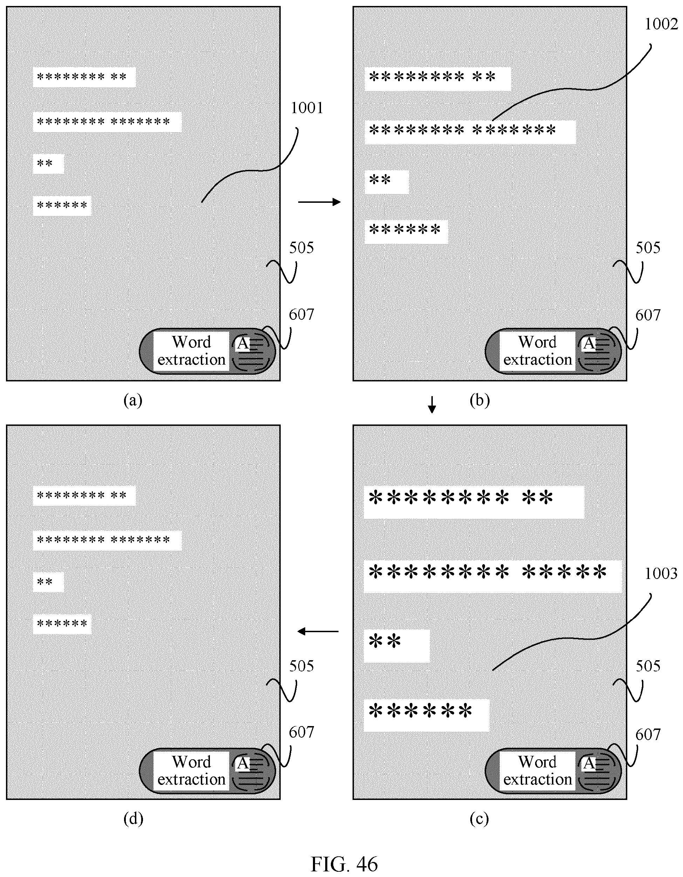

FIG. 46 is a schematic diagram 41 of an interface according to an embodiment of this application. As shown in (a) of FIG. 46, a terminal device displays a third interface, and displays a second image 802 in a fourth window 504 on the third interface.

As shown in (a) of FIG. 46, a user triggers a first location 1101 in the fourth window 504 at a fourth moment, where the first location 1001 is any location of the second image in the fourth window 504. As shown in (b) of FIG. 46, the terminal device zooms in the image in the fourth window 504 with the first location 1101 as a center point at a first ratio (1.75 times to 3 times of an original image size).

As shown in (b) of FIG. 46, the user triggers a second location 1102 in the fourth window 504 at a fifth moment later than the fourth moment, where the second location 1102 is any location of the second image in the fourth window 504. As shown in (c) of FIG. 46, the terminal device zooms in the image in the fourth window 504 with the second location 1102 as a center point at a second ratio (1.75 times to 3 times of the original image size).

A maximum value obtained after the image is zoomed in is 3 times of the original image size of the image.

As shown in (c) of FIG. 46, the user triggers a third location 1103 in the fourth window 504 at a sixth moment later than the fifth moment, where the third location 1003 is any location of the second image in the fourth window 504. As shown in (d) of FIG. 46, the terminal device zooms out the image in the fourth window to the size before the fourth moment, to recover the image in the fourth window to the original image size.

### Second zoom-in manner.

In response to that a fourth location in the fourth window is triggered, the terminal device zooms in an image in the fourth window with the fourth location as a center point at a third ratio at a seventh moment, where the fourth location is any location in the second image in the fourth window.

In response to that a fifth location in the fourth window is triggered, the terminal device recovers a size of the image in the fourth window at an eighth moment, where the fifth location is any location in the second image in the fourth window; where the eighth moment is later than the seventh moment.

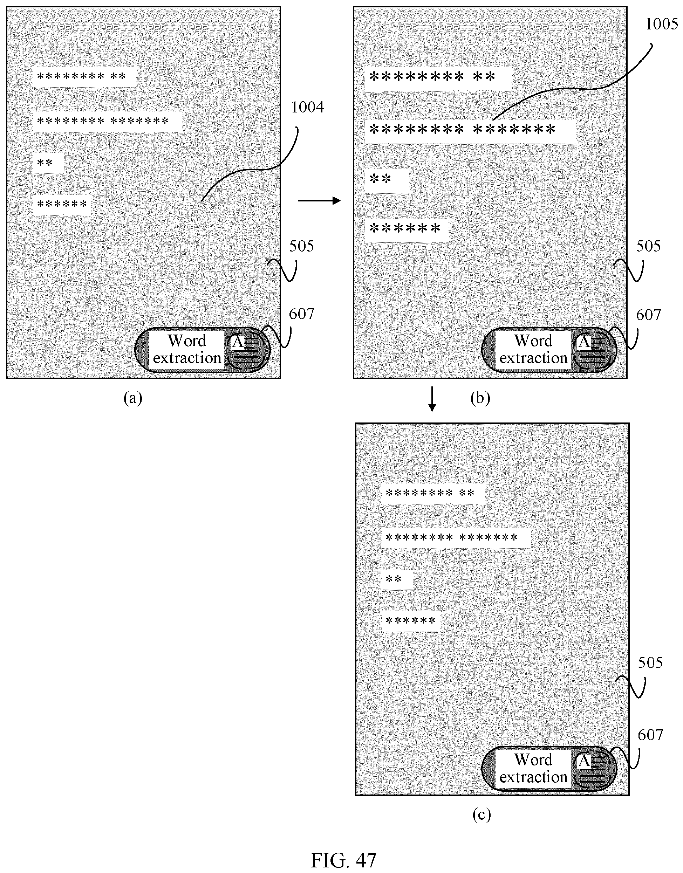

Exemplarily, FIG. 47 is a schematic diagram 42 of an interface according to an embodiment of this application. As shown in (a) of FIG. 47, a terminal device displays a third interface, and displays a second image 802 in a fourth window 504 on the third interface.

As shown in (a) of FIG. 47, a user triggers a fourth location 1104 in the fourth window 504 at a seventh moment, where the fourth location 1104 is any location of the second image in the fourth window 504. As shown in (b) of FIG. 47, the terminal device zooms in an image in the fourth window 504 with the fourth location 1104 as a center point at a first ratio (1.75 times to 3 times of an original image size).

As shown in (b) of FIG. 47, the user triggers a fifth location 1105 in the fourth window 504 at an eighth moment later than the seventh moment, where the fifth location 1105 is any location of the second image in the fourth window 504. As shown in (c) of FIG. 47, the terminal device zooms out the image in the fourth window 504 to the size before the fourth moment, that is, recovers the image in the fourth window 504 to the original image size.

### Third zoom-in manner.

In response to that a first text block in the fourth window is triggered, the terminal device zooms in an image in the fourth window at a ninth moment; where the longest text block in the zoomed-in image after the ninth moment reaches the edge of the screen of the terminal device.

In response to that a sixth location in the fourth window is triggered, the terminal device recovers the image in the fourth window to an original image size of the image at a tenth moment, and the sixth location is any location in the second image in the fourth window; where the tenth moment is later than the ninth moment.

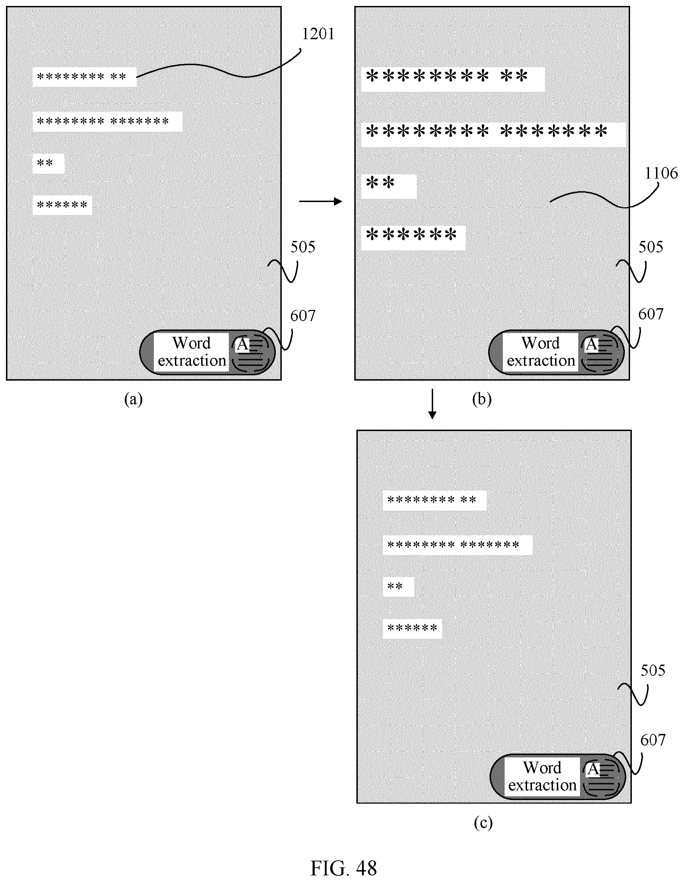

Exemplarily, FIG. 48 is a schematic diagram 43 of an interface according to an embodiment of this application. As shown in (a) of FIG. 48, a terminal device displays a third interface, and displays a second image 802 in a fourth window 504 on the third interface.

As shown in (a) of FIG. 48, a user triggers a first text block 1201 in the fourth window 504 at a ninth moment. The terminal device first determines a longest text block in the fourth window 504.

Then, the terminal device calculates a zoomed-in length of the longest text block. The zoomed-in length of the largest text block is z'= z/(y/(y-x)). z is a length of the longest text block, x is a distance between the longest text block and the edge of the screen, and y is a total length of the screen (that is, a total width of the screen).

As shown in (b) of FIG. 48, the terminal device zooms in the image in the fourth window 504 according to the zoomed-in length of the largest text block, so that the longest text block may reach the edge of the screen of the terminal device.

As shown in (b) of FIG. 48, the user triggers a sixth location 1106 in the fourth window 504 at a tenth moment later than the ninth moment, where the sixth location 1106 is any location of the second image in the fourth window 504. As shown in (c) of FIG. 48, the terminal device zooms out the image in the fourth window 504 to the size before the fourth moment, that is, recovers the image in the fourth window 504 to the original image size.

### Fourth zoom-in manner.

In response to that a second text block in the fourth window is triggered, the terminal device zooms in an image in the fourth window at an eleventh moment; where the second text block in the zoomed-in image after the eleventh moment reaches the edge of the screen of the terminal device.

In response to that a third text block in the fourth window is triggered, the terminal device zooms in the image in the fourth window at a twelfth moment; where a length of the third text block is less than a length of second text block, the third text block in the zoomed-in image after the twelfth moment reaches the edge of the screen of the terminal device, and the twelfth moment is later than the eleventh moment.

In response to that the third text block in the fourth window is triggered, the terminal device recovers the image in the fourth window to an image size that is before the twelfth moment at a thirteenth moment; where the second text block in the zoomed-out image after the thirteenth moment reaches the edge of the screen of the terminal device, and the thirteenth moment is later than the twelfth moment.

In response to that a seventh location in the fourth window is triggered, the terminal device recovers the image in the fourth window to an original image size of the image at a fourteenth moment, where the seventh location has no target text, and the fourteenth moment is later than the eleventh moment.

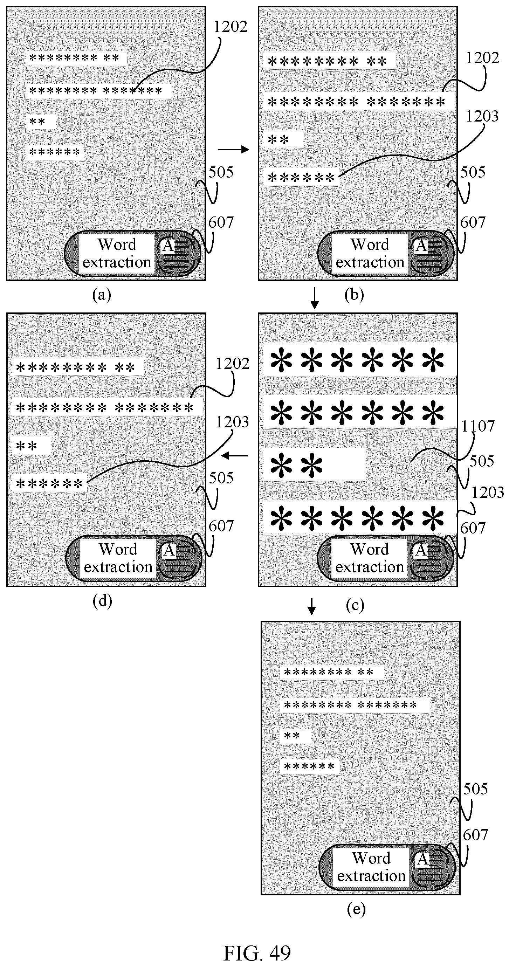

Exemplarily, FIG. 49 is a schematic diagram 44 of an interface according to an embodiment of this application. As shown in (a) of FIG. 49, a terminal device displays a third interface, and displays a second image 802 in a fourth window 504 on the third interface.

As shown in (a) of FIG. 49, a user triggers a second text block 1202 in the fourth window 504 at an eleventh moment.

The terminal device first calculates a zoomed-in length of the second text block 1102. The zoomed-in length of the second text block 102 is z2'=z2/(y/(y-x2)). z2 is a length of the second text block 1102 before the eleventh moment, x2 is a distance between the second text block 1102 and the edge of the screen before the eleventh moment, and y is a total length of the screen (that is, a total width of the screen).

As shown in (b) of FIG. 49, the terminal device zooms in the image in the fourth window 504 according to the zoomed-in length of the second text block 1102, so that the second text block 1102 may reach the edge of the screen of the terminal device.

As shown in (b) of FIG. 49, the user triggers a third text block 1203 in the fourth window 504 at a twelfth moment later than the eleventh moment. A length of the third text block 1203 is less than the length of the second text block 1202. The terminal device first calculates a zoomed-in length of the third text block 1203. The zoomed-in length of the third text block 1203 is z3'=z3/(y/(y-x3)). z3 is a length of the third text block 1203 before the twelfth moment, x3 is a distance between the third text block 1203 and the edge of the screen before the twelfth moment, and y is a total length of the screen (that is, a total width of the screen).

As shown in (c) of FIG. 49, the terminal device zooms in the image in the fourth window 504 according to the zoomed-in length of the third text block 1203, so that the third text block 1203 may reach the edge of the screen of the terminal device.

As shown in (c) of FIG. 49, the user triggers the third text block 1203 in the fourth window 504 at a thirteenth moment later than the twelfth moment. As shown in (d) of FIG. 49, the terminal device recovers the image in the fourth window 504 to an image size before the twelfth moment. The third text block 1202 is shown in (b) of FIG. 49, and (d) of FIG. 49 is (b) of FIG. 49.

In addition, the user triggers a seventh location in the fourth window at a fourteenth moment later than the eleventh moment, where the seventh location does not have a target text. The terminal device recovers the image in the fourth window to an original image size of the image.

For example, as shown in (c) of FIG. 49, the user triggers the seventh location 1107 in the fourth window 504 at the fourteenth moment later than the eleventh moment. The seventh location 1107 does not have target text. As shown in (e) of FIG. 49, the terminal device recovers the image in the fourth window 504 to the original image size of the image, that is, (e) of FIG. 49 is (a) of FIG. 49.

### Fifth zoom-in manner.

In response to a first gesture operation, where the first gesture operation is a two-finger zoom-in operation, the terminal device zooms in the displayed image in the fourth window.

In response to a second gesture operation, where the second gesture operation is a two-finger zoom-out operation, the terminal device zooms out the displayed image in the fourth window.

Exemplarily, the terminal device may infinitely zoom in the image in the fourth window or infinitely zoom out the image in the fourth window based on a gesture operation of the user.

For example, the user touches the fourth window to input the first gesture operation. The first gesture operation is a two-finger zoom-in operation. The terminal device zooms in the displayed image in the fourth window based on a size indicated by the first gesture operation.

The user touches the fourth window to input the second gesture operation. The second gesture operation is a two-finger zoom-out operation. The terminal device zooms out the displayed image in the fourth window based on a size indicated by the second gesture operation.

FIG. 50 is a schematic diagram 45 of an interface according to an embodiment of this application. As shown in (a) of FIG. 50, a user touches a fourth window 504 to input a two-finger zoom-in operation. As shown in (b) of FIG. 50, the terminal device zooms in a displayed image in the fourth window 504 based on a size indicated by the two-finger zoom-in operation.

As shown in (b) of FIG. 50, the user touches the fourth window 504 to input a two-finger zoom-out operation. As shown in (c) of FIG. 50, the terminal device zooms out the displayed image in the fourth window 504 based on a size indicated by the two-finger zoom-out operation.

In the schematic diagram of the interface in this application, "***" is a text.

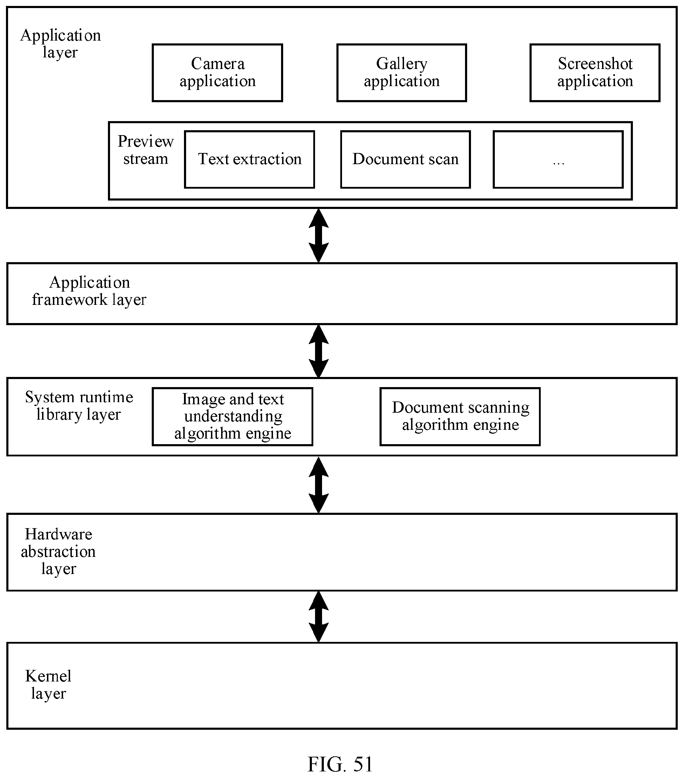

FIG. 51 is a schematic diagram of a software layer of a terminal device according to an embodiment of this application. As shown in FIG. 51, an application layer (app), an application framework layer (Framwork, FW), a system runtime library layer (Native), a hardware abstraction layer (Hardware Abstraction Layer, HAL), and a Linux kernel layer (Kenrel) are deployed in the terminal device.

A camera application, a gallery application, a screenshot application, and the like are deployed at the application layer. A preview stream is obtained at the application layer. Document scan and text extraction are performed on the preview stream at the application layer.

An image and text understanding algorithm engine and a document scan algorithm engine are deployed at the system runtime library layer. The system runtime library layer may also be referred to as an algorithm engine layer.

Therefore, the application layer may invoke the document scan algorithm engine in the system runtime library layer, to scan a document. The application layer may invoke the image and text understanding algorithm engine in the system runtime library layer, to perform text recognition and text extraction.

In this embodiment, the terminal device displays a second button (a "dynamic document scanning button") on a first interface when an object category of a first image in the preview stream is a document object. The terminal device displays a second interface in response to that a second button on the first interface is triggered, where the second interface includes a second window and a third window, the second window displays the preview stream collected by the terminal device, an outer frame of a document in the current frame image in the preview stream is highlighted, and the second interface displays a third button (a "word extraction button") when the current frame image of the preview stream includes a target text. The terminal device displays a third interface in response to that the third button on the second interface is triggered, where the third interface displays the third button, the fourth window displays the second image in the preview stream, and the second image includes the highlighted target text. In this way, a word extraction function is provided. The terminal device displays a fourth interface in response to that the first button on the second interface is triggered. In this way, a document scanning function and an image processing function are provided.

The terminal device displays the third button (the "word extraction button") on the first interface when the object category of the first image in the preview stream is a text object. The terminal device displays a third interface in response to that the third button on the first interface is triggered, where the third interface displays the third button, the fourth window displays the second image in the preview stream, and the second image includes the highlighted target text. In this way, a word extraction function is provided.

Further, a document and text recognition function is provided, and a document scanning function and a word extraction function may be provided.

In this embodiment, a user does not need to manually select a to-be-recognized text, so as to avoid that the text may instantly disappear and the user may not promptly select the target text and consequently misses the text. For example, in a PPT speech scenario of a conference, a speaker turns a page excessively quickly, and a viewfinder box of a mobile phone may not promptly select a target text. In this case, the text in the image can be promptly recognized. In addition, the user does not need to manually select the target text on the screen. This avoids that conflict with interaction of the camera occurs and consequently text recognition or image photographing is affected. In addition, learning costs of the user are reduced.

The solution provided in this embodiment may enable the terminal device to recognize a text in the image in time. In addition, it is convenient for the user to trigger functions of various entities.

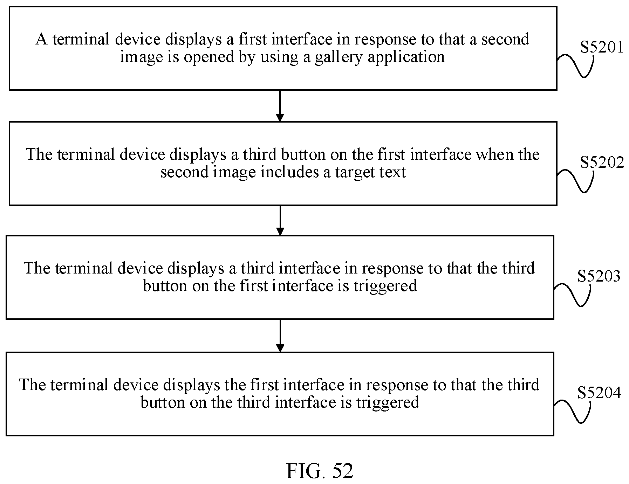

FIG. 52 is a schematic flowchart 2 of a text recognition method based on a terminal device according to an embodiment of this application. As shown in FIG. 52, the method includes:

S5201: A terminal device displays a first interface in response to that a second image is opened by using a gallery application.

Exemplarily, the user triggers the terminal device to open the second image in the gallery application. The terminal device opens the second image based on the gallery application. Therefore, the terminal device displays the first interface, and the first interface displays the second image. The first interface includes an icon of the gallery application: a share icon, a favorite icon, an edit icon, a delete icon, a "more" icon, and the like.

S5202: The terminal device displays a third button on the first interface when the second image includes a target text.

Exemplarily, the terminal device detects whether the second image includes the target text. For the "target text", refer to the foregoing description. When determining that the second image includes the target text, the terminal device displays a third button (a "dynamic text extraction button") on the first interface.

S5203: The terminal device displays a third interface in response to that the third button on the first interface is triggered, where the third interface includes a fourth window and a fifth window, the third interface displays the third button, the fourth window displays the second image, the second image includes the highlighted target text, the fifth window displays the fifth button when the target text in the fourth window does not include an entity, the fifth window displays the fifth button and at least one sixth button when the target text in the fourth window includes an entity, and the sixth button is in a one-to-one correspondence with the entity in the target text in the fourth window.

Exemplarily, refer to step S310. The second image opened based on the gallery application is processed in this step.

S5204: The terminal device displays the first interface in response to that the third button on the third interface is triggered.

Exemplarily, the user triggers the third button (the "dynamic text extraction button") on the third interface. The terminal device returns to the first interface of step S5202.

This embodiment shows a process of opening "the first image that is a text object" in the foregoing embodiment in the gallery application.

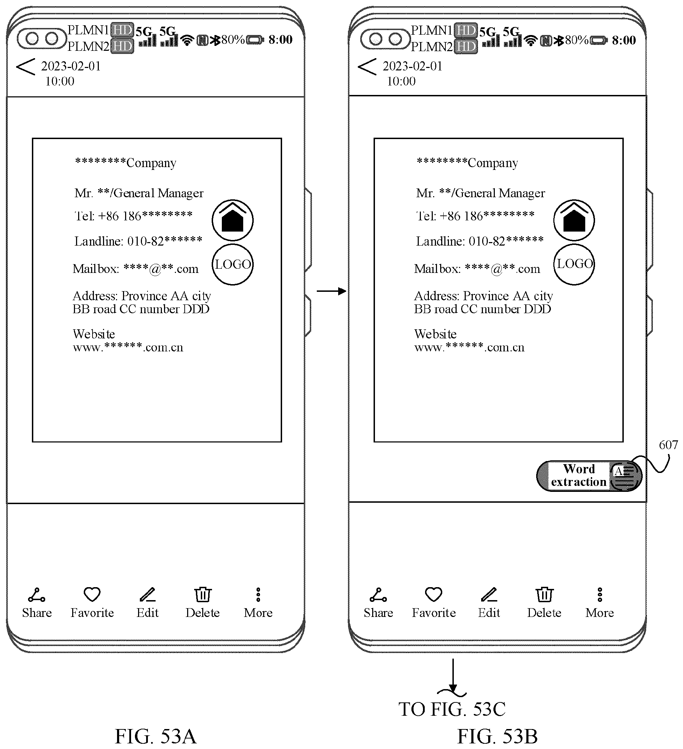

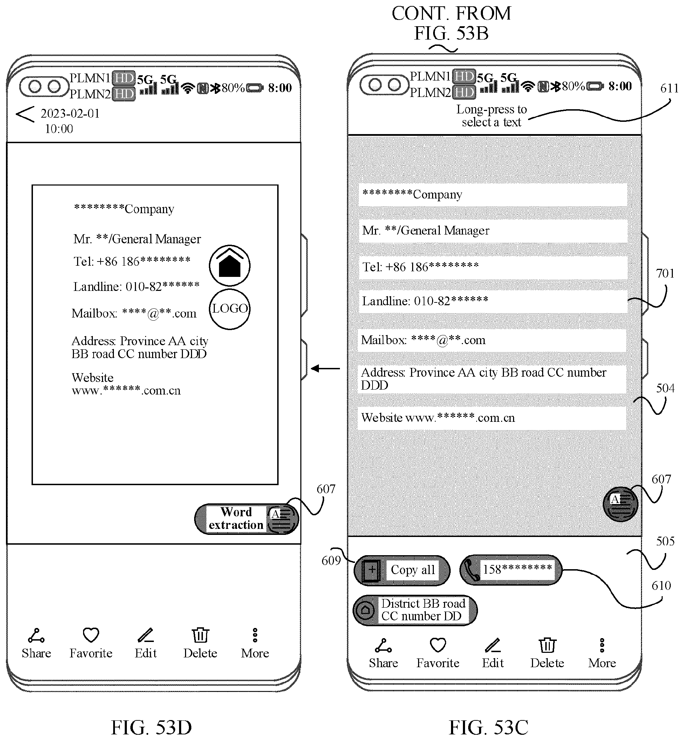

FIG. 53A, FIG. 53B, FIG. 53C, and FIG. 53D are a schematic diagram 46 of an interface according to an embodiment of this application. As shown in FIG. 53A, a user triggers a terminal device to open a second image in a gallery application. The terminal device opens the second image based on the gallery application. Therefore, the terminal device displays a first interface, and the first interface displays the second image. The first interface includes an icon of the gallery application: a share icon, a favorite icon, an edit icon, a delete icon, a "more" icon, and the like. As shown in FIG. 53B, when determining that the second image includes a target text, the terminal device displays a third button 507 (a "dynamic text extraction button") on the first interface.

A user triggers the third button 507 on the first interface. As shown in FIG. 53C, the terminal device displays a third interface. The third interface includes a fourth window and a fifth window. The third interface may include an icon of the gallery application: a share icon, a favorite icon, an edit icon, a delete icon, a "more" icon, and the like.

The user triggers the third button 507 on the third interface, and as shown in FIG. 53D, the terminal device returns to the first interface. FIG. 53D is FIG. 53B.

In the schematic diagram of the interface in this application, "***" is a text.

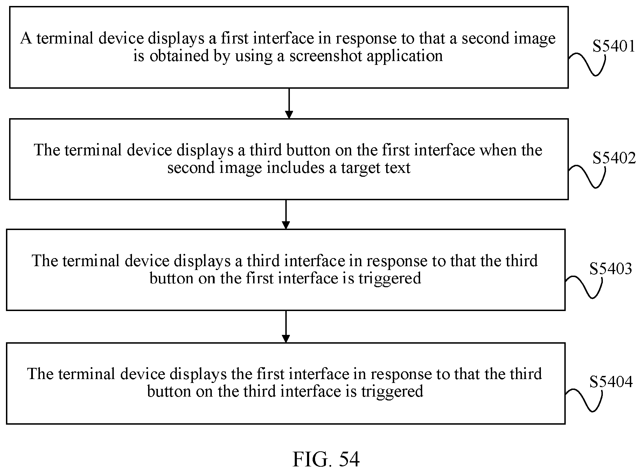

FIG. 54 is a schematic flowchart 3 of a text recognition method based on a terminal device according to an embodiment of this application. As shown in FIG. 54, the method includes:

S5401: A terminal device displays a first interface in response to that a second image is obtained by using a screenshot application.

Exemplarily, the user triggers the terminal device to take a screenshot. The terminal device obtains the second image by using the screenshot application. Therefore, the terminal device displays the first interface, and the first interface displays the second image. The first interface includes an icon of the screenshot application.

S5402: The terminal device displays a third button on the first interface when the second image includes a target text.

Exemplarily, the terminal device detects whether the second image includes the target text. For the "target text", refer to the foregoing description. When determining that the second image includes the target text, the terminal device displays a third button (a "dynamic text extraction button") on the first interface.

S5403: The terminal device displays a third interface in response to that the third button on the first interface is triggered, where the third interface includes a fourth window and a fifth window, the third interface displays the third button, the fourth window displays the second image, the second image includes the highlighted target text, the fifth window displays the fifth button when the target text in the fourth window does not include an entity, the fifth window displays the fifth button and at least one sixth button when the target text in the fourth window includes an entity, and the sixth button is in a one-to-one correspondence with the entity in the target text in the fourth window.

Exemplarily, refer to step S310. The second image obtained based on the screenshot application is processed in this step.

S5404: The terminal device displays the first interface in response to that the third button on the third interface is triggered.

Exemplarily, the user triggers the third button (the "dynamic text extraction button") on the third interface. The terminal device returns to the first interface of step S5402.

This embodiment shows a process of opening "the first image that is a text object" in the foregoing embodiment in the screenshot application.

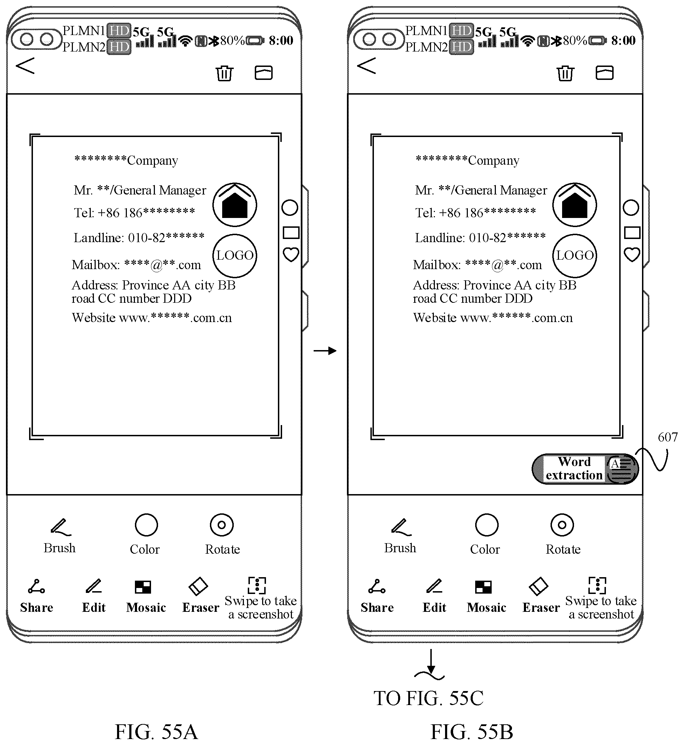

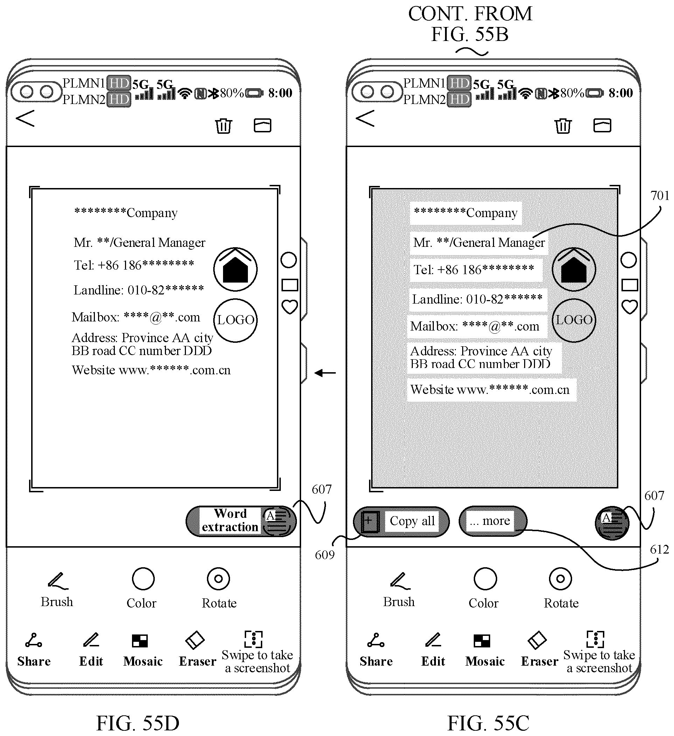

FIG. 55A, FIG. 55B, FIG. 55C, and FIG. 55D are a schematic diagram 47 of an interface according to an embodiment of this application. As shown in FIG. 55A, a user triggers a terminal device to take a screenshot, so that the terminal device obtains a second image. Therefore, the terminal device displays the first interface, and the first interface displays the second image. The first interface includes an icon of the screenshot application: a share icon, an edit icon, a mosaic icon, an eraser icon, a delete icon, a save icon, an icon for drawing a figure (for example, a free figure, a rectangle, a circle, or a heart shape), and the like. As shown in FIG. 55B, when determining that the second image includes a target text, the terminal device displays a third button 507 (a "dynamic text extraction button") on the first interface.

A user triggers the third button 507 on the first interface. As shown in FIG. 55C, the terminal device displays a third interface. The third interface includes a fourth window and a fifth window. The third interface may include an icon of the screenshot application.

The user triggers the third button 507 on the third interface, and as shown in FIG. 55D, the terminal device returns to the first interface. FIG. 55D is FIG. 55B.

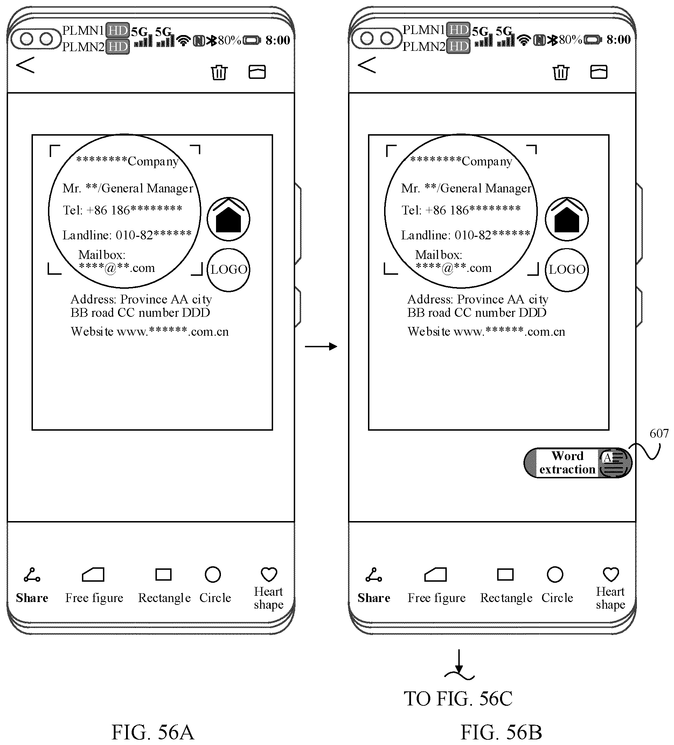

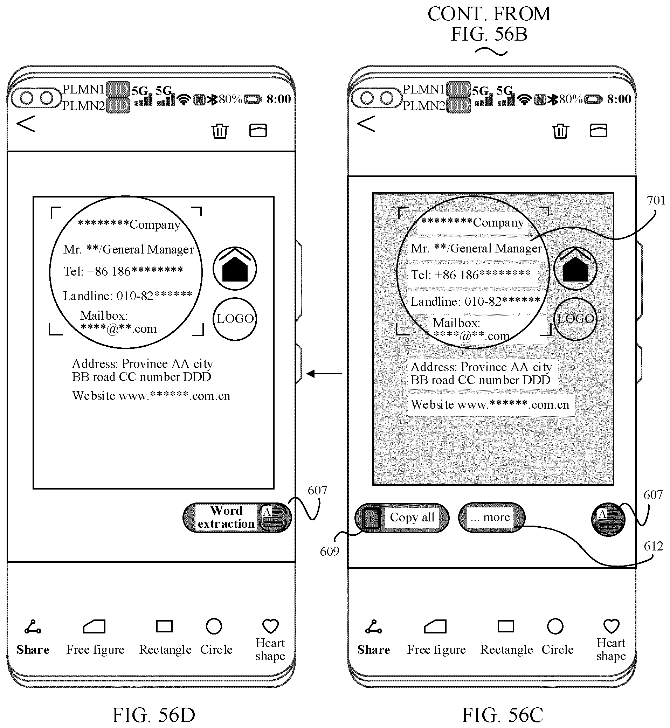

FIG. 56A, FIG. 56B, FIG. 56C, and FIG. 56D are a schematic diagram 48 of an interface according to an embodiment of this application. As shown in FIG. 56A, a user triggers a terminal device to take a screenshot, and the user draws a figure on an obtained screenshot image, so that the terminal device obtains a second image. Therefore, the terminal device displays the first interface, and the first interface displays the second image. The first interface includes an icon of the screenshot application: a share icon, an icon for drawing a figure (for example, a free figure, a rectangle, a circle, or a heart shape), and the like. As shown in FIG. 56B, when determining that the second image includes a target text (a target text in a region in the figure drawn by the user on the screenshot image is recognized), the terminal device displays a third button 507 (a "dynamic text extraction button") on the first interface.

A user triggers the third button 507 on the first interface. As shown in FIG. 56C, the terminal device displays a third interface. The third interface includes a fourth window and a fifth window. The third interface may include an icon of the screenshot application. In this case, the terminal device recognizes only the target text in the region in the figure drawn by the user on the screenshot image.

The user triggers the third button 507 on the third interface, and as shown in FIG. 56D, the terminal device returns to the first interface. FIG. 56D is FIG. 56B.

In the schematic diagram of the interface in this application, "***" is a text.

The device list sorting method in the embodiments of this application has been described above. An apparatus for performing the list sorting method provided in the embodiments of this application is described below. A person skilled in the art may understand that, the method and the apparatus may be combined and serve as reference for each other, and a related apparatus provided in the embodiments of this application may perform the steps in the foregoing list sorting method.

In the embodiments of this application, the apparatus for implementing the method may be divided into functional modules based on the foregoing examples, for example, each functional module may be obtained through division for each corresponding function, or two or more functions may be integrated into one processing module. The integrated module may be implemented in the form of hardware, or may be implemented in a form of a software functional module. It should be noted that, in the embodiments of this application, the module division is an example, and is merely logical function division, and there may be other division manners during actual implementation.

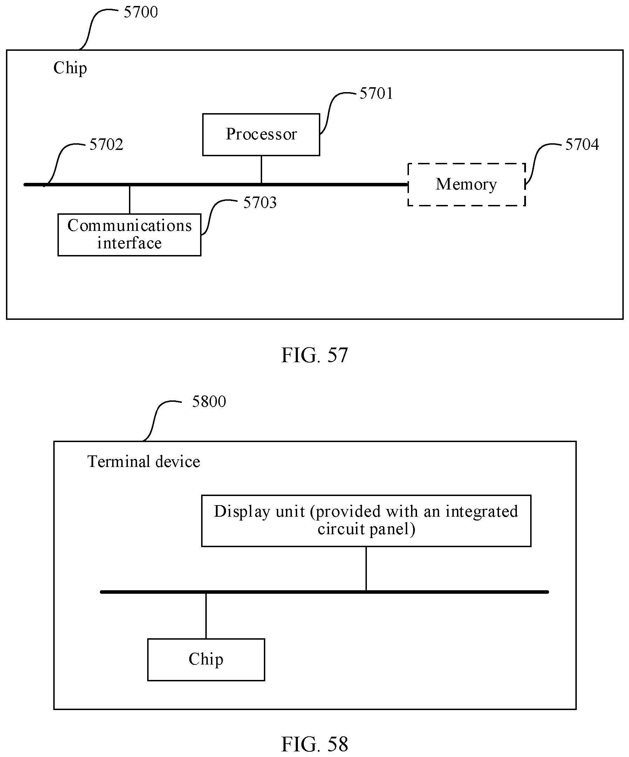

FIG. 57 is a schematic structural diagram of a chip according to an embodiment of this application. A chip 5700 includes one or more than two (including two) processors 5701, a communications line 5702, a communications interface 5703, and a memory 5704.

In some implementations, the memory 5704 stores the following element: an executable module, a data structure, a subset thereof, or an extended set thereof.

The method described in the embodiments of this application may be applied to the processor 5701 or implemented by the processor 5701. The processor 5701 may be an integrated circuit chip having a capability of processing a signal. In an implementation process, steps in the foregoing method performed by the terminal device may be implemented by using a hardware integrated logical circuit in the processor 5701, or by using instructions in a form of software. The processor 5701 may be a general-purpose processor (for example, a microprocessor or a conventional processor), a digital signal processor (digital signal processing, DSP), an application specific integrated circuit (application specific integrated circuit, ASIC), a field-programmable gate array (field-programmable gate array, FPGA) or another programmable logic device, a discrete gate, a transistor logic device, or a discrete hardware component. The processor 5701 may implement or perform various methods, steps, and logical block diagrams disclosed in the embodiments of this application.

The steps of the methods disclosed with reference to the embodiments of this application may be directly performed and completed by using a hardware decoding processor, or may be performed and completed by using a combination of hardware and software modules in the decoding processor. The software module may be located in a mature storage medium in the art, such as a random access memory, a read-only memory, a programmable read-only memory, or an electrically erasable programmable read only memory (electrically erasable programmable read only memory, EEPROM). The storage medium is located in the memory 5704. The processor 5701 reads information in the memory 5704, and completes steps of the foregoing method in combination with hardware of the processor.

The processor 5701, the memory 5704, and the communications interface 5703 may communicate with each other via the communications line 5702.

FIG. 58 is a schematic structural diagram of a terminal device according to an embodiment of this application. As shown in FIG. 58, a terminal device 5800 includes the foregoing chip and a display unit. The display unit is provided with an integrated circuit board, and the integrated circuit board is configured to send a periodic interrupt event. An integrated circuit unit for calculating coordinate information corresponding to a touch operation is removed from the integrated circuit board.

The text recognition method based on a terminal device provided in the embodiments of this application may be applied to an electronic device having a communication function. The electronic device includes a terminal device. For a specific device form and the like of the terminal device, refer to the foregoing related descriptions. Details are not described herein again.

An embodiment of this application provides a terminal device. The terminal device includes: a processor and a memory, where the memory stores computer-executable instructions; and the processor executes the computer-executable instructions stored in the memory, so that the terminal device performs the foregoing method.

An embodiment of this application provides a chip. The chip includes a processor, and the processor is configured to invoke a computer program in a memory to perform the technical solutions in the foregoing embodiments. Implementation principles and technical effects thereof are similar to those in the related embodiments, and details are not described herein again.

An embodiment of this application further provides a computer-readable storage medium. The computer-readable storage medium stores a computer program. When the computer program is executed by a processor, the foregoing method is implemented. The method described in the foregoing embodiments may be fully or partially implemented by software, hardware, firmware, or any combination thereof. If implemented in software, a function may be stored on or transmitted on a computer-readable medium as one or more instructions or code. The computer-readable medium may include a computer storage medium and a communications medium, and may further include any medium that can transfer a computer program from one place to another. The storage medium may be any target medium accessible by a computer.

In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in a form of an instruction or a data structure, and may be accessed by a computer. Furthermore, any connection is appropriately referred to as a computer-readable medium. For example, if software is transmitted from a website, a server or another remote source by using a coaxial cable, an optical fiber cable, a twisted pair, a digital subscriber line (Digital Subscriber Line, DSL) or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc, a laser disc, an optical disc, a digital versatile disc (Digital Versatile Disc, DVD), a floppy disk, and a blue ray disc, where the magnetic disk generally reproduces data in a magnetic manner, and the optical disc reproduces data optically by using laser. The foregoing combination should also be included in the scope of the computer-readable medium.

An embodiment of this application provides a computer program product. The computer program product includes a computer program. The computer program, when run, causes a computer to perform the foregoing method.

The embodiments of this application are described with reference to flowcharts and/or block diagrams of the method, the device (system), and the computer program product according to the embodiments of this application. It should be understood that computer program instructions can implement each procedure and/or block in the flowcharts and/or block diagrams and a combination of procedures and/or blocks in the flowcharts and/or block diagrams. These computer program instructions may be provided for a general-purpose computer, a dedicated computer, an embedded processor, or a processing unit of another programmable device to generate a machine, so that the instructions executed by a computer or a processing unit of another programmable data processing device generate an apparatus for implementing a specific function in one or more procedures in the flowcharts and/or in one or more blocks in the block diagrams.

The foregoing specific implementations further describe the objectives, technical solutions, and beneficial effects of the present invention. It should be appreciated that the foregoing descriptions are merely specific implementations of the present invention, but are not intended to limit the protection scope of the present invention. Any modification, equivalent replacement, or improvement made based on the technical solutions of the present invention should fall within the protection scope of the present invention.

## Claims

1. A text recognition method based on a terminal device, applied to a terminal device, comprising:
displaying a first interface, wherein the first interface comprises a first window, the first window displays a preview stream collected by the terminal device, and the first interface comprises a first button;
displaying a second button on the first interface when an object category of a first image in the preview stream is a document object;
displaying a second interface in response to that the second button on the first interface is triggered, wherein the second interface comprises a second window and a third window, the second window displays the preview stream collected by the terminal device, an outer frame of a document in a current frame image in the preview stream is highlighted, the second interface displays a third button when the current frame image of the preview stream comprises a target text, the second interface does not display the third button when the current frame image of the preview stream does not comprise the target text, and the third window displays the first button and a fourth button;
displaying a third interface in response to that the third button on the second interface is triggered, wherein the third interface comprises a fourth window and a fifth window, the third interface displays the third button, the fourth window displays a second image in the preview stream, the second image comprises the highlighted target text, the fifth window displays a fifth button when the target text in the fourth window does not comprise an entity, the fifth window displays the fifth button and at least one sixth button when the target text in the fourth window comprises an entity, and the sixth button is in a one-to-one correspondence with the entity in the target text in the fourth window; and
displaying a fourth interface in response to that the first button on the second interface is triggered, wherein the fourth interface displays a third image in the preview stream, an outer frame of a document in the third image on the fourth interface is highlighted, and the fourth interface comprises a seventh button, an eighth button, and a ninth button.

2. The method according to claim 1, after the displaying a third interface, further comprising:
displaying the second interface in response to that the third button on the third interface is triggered.

3. The method according to claim 1 or 2, after the displaying a fourth interface, further comprising:
displaying a fifth interface in response to that the ninth button on the fourth interface is triggered, wherein the fifth interface displays the third image in the preview stream, and the fifth interface comprises at least one image processing button.

4. The method according to any one of claims 1 to 3, further comprising:
displaying the third button on the first interface when the object category of the first image is a text object;
displaying the third interface in response to that the third button on the first interface is triggered, wherein the third interface comprises the fourth window and the fifth window, the third interface displays the third button, the fourth window displays the second image in the preview stream, the second image comprises the highlighted target text, the fifth window displays the fifth button when the target text in the fourth window does not comprise an entity, the fifth window displays the fifth button and at least one sixth button when the target text in the fourth window comprises an entity, and the sixth button is in a one-to-one correspondence with the entity in the target text in the fourth window; and
displaying the first interface in response to that the third button on the third interface is triggered.

5. The method according to claim 4, further comprising:
displaying a seventh interface in response to that the third button on the first interface is triggered, wherein the seventh interface comprises a seventh window, the seventh window displays the preview stream, the seventh window displays second prompt information, the seventh interface does not display the third button, and the seventh interface comprises the first button.

6. The method according to claim 4 or 5, before the displaying the third button on the first interface when the object category of the first image is a text object, further comprising: starting a super-macro mode and displaying a first icon on the first interface when determining that a distance between a camera of the terminal device and a physical object is less than a first threshold; and
the displaying the third button on the first interface when the object category of the first image is a text object comprises: displaying the third button and skipping displaying the first icon on the first interface when the object category of the first image is the text object.

7. The method according to claim 4 or 5, before the displaying the third button on the first interface when the object category of the first image is a text object, further comprising: starting a super-macro mode when determining that a distance between a camera of the terminal device and a physical object is less than a first threshold; and
the displaying the third button on the first interface when the object category of the first image is a text object comprises:
displaying the third button on the first interface at a first moment when the object category of the first image is the text object;
displaying a first icon and skipping displaying the third button on the first interface at a second moment, wherein the second moment is later than the first moment; and
displaying the third button and skipping displaying the first icon on the first interface at a third moment, wherein the third moment is later than the second moment.

8. The method according to any one of claims 1 to 7, wherein the third interface further comprises the seventh button.

9. The method according to any one of claims 1 to 8, when a number of entities in the second image is greater than a preset number, a number of sixth buttons is the preset number minus 1, and the fifth window further displays a tenth button.

10. The method according to any one of claims 1 to 9, wherein a distribution order of sixth buttons in the fifth window corresponds to a distribution order of the entities in the second image; or a distribution order of sixth buttons in the fifth window is determined in real time based on a user portrait or a user intention.

11. The method according to any one of claims 1 to 10, wherein the sixth button corresponds to at least one function, the function has a priority, and the priority of the function is determined in real time based on a user portrait or a user intention; and
the method further comprises: invoking, in response to that the sixth button is triggered, a function with a highest priority that corresponds to the sixth button.

12. The method according to any one of claims 1 to 11, wherein an entity displayed in the fourth window on the third interface corresponds to at least one first option, the first option has a priority, and the priority of the first option is determined in real time based on a user portrait or a user intention; and the priority of the first option of the entity is in a one-to-one correspondence with a priority of a function of the sixth button corresponding to the entity; and
the method further comprises: displaying, in the fourth window in response to that an entity in the fourth window is triggered, a first service menu corresponding to the entity; wherein the first service menu comprises at least one first option, and first options in the first service menu are sorted according to priorities of the first options.

13. The method according to any one of claims 1 to 12, further comprising:
displaying, in the fourth window in response to that a non-entity in the fourth window is triggered, a second service menu corresponding to the non-entity; wherein the second service menu comprises at least one second option.

14. The method according to any one of claims 1 to 13, before the displaying a second button on the first interface when an object category of a first image in the preview stream is a document object, further comprising: starting the super-macro mode and displaying the first icon on the first interface when a distance between the camera of the terminal device and a physical object is less than the first threshold; and
the displaying a second button on the first interface when an object category of a first image in the preview stream is a document object comprises: displaying the second button and skipping displaying the first icon on the first interface when the object category of the first image in the preview stream is the document object.

15. The method according to any one of claims 1 to 13, before the displaying a second button on the first interface when an object category of a first image in the preview stream is a document object, further comprising: starting the super-macro mode when a distance between the camera of the terminal device and a physical object is less than the first threshold; and
the displaying a second button on the first interface when an object category of a first image in the preview stream is a document object comprises:
displaying the second button on the first interface at a first moment when the object category of the first image in the preview stream is the document object;
displaying the first icon and skipping displaying the second button on the first interface at a second moment; wherein the second moment is later than the first moment; and
displaying the second button and skipping displaying the first icon on the first interface at a third moment; wherein the third moment is later than the second moment.

16. The method according to any one of claims 1 to 15, wherein the second image in the preview stream comprises a first region and a second region, the first region is a region formed by text blocks of the target text, and the second region is a peripheral region of the first region; and
the second image displayed on the third interface comprises the first region and does not comprise the second region; the text block of the target text in the first region of the second image displayed on the third interface is highlighted; and a background color of the text block of the target text in the second image in the preview stream is different from a background color of the text block of the target text in the second image displayed on the third interface.

17. The method according to any one of claims 1 to 15, wherein the second image in the preview stream comprises a first region and a second region, the first region is a region formed by text blocks of the target text, and the second region is a peripheral region of the first region; and
the second image displayed on the third interface comprises the first region and does not comprise the second region; the text block of the target text in the first region of the second image displayed on the third interface is highlighted; a background color of the text block of the target text in the second image in the preview stream is different from a background color of the text block of the target text in the second image displayed on the third interface; and a direction of the text block of the target text in the second image displayed on the third interface adapts to a direction of a screen of the terminal device.

18. The method according to any one of claims 1 to 15, wherein the second image in the preview stream comprises at least one third region and a fourth region, and the third region is a region formed by text blocks of the target text; a distance between two third regions in at least one pair of adjacent third regions is greater than a preset distance; and the fourth region is a peripheral region of a region formed by the at least one third region; and
the second image displayed on the third interface comprises the at least one third region and does not comprise the fourth region, and the text block of the target text in the second image displayed on the third interface is highlighted; each distance between adjacent third regions in the second image displayed on the third interface is less than the preset distance; and a background color of the text block of the target text in the second image in the preview stream is different from a background color of the text block of the target text in the second image displayed on the third interface.

19. The method according to any one of claims 1 to 15, wherein the second image in the preview stream comprises a fifth region and a sixth region, the fifth region is a region formed by text blocks of the target text and comprises a background image, and the sixth region is a peripheral region of the fifth region; and
the second image displayed on the third interface comprises the fifth region and does not comprise the sixth region, and the text block of the target text in the second image displayed on the third interface is highlighted.

20. The method according to any one of claims 1 to 15, wherein the second image in the preview stream comprises a first region and a second region, the first region is a region formed by text blocks of the target text, and the second region is a peripheral region of the first region; and directions of the text blocks of the target text in the second image in the preview stream comprise at least two different directions; and
the second image displayed on the third interface comprises the first region and does not comprise the second region; the text block of the target text in the second image displayed on the third interface is highlighted; a background color of the text block of the target text in the second image in the preview stream is different from a background color of the text block of the target text in the second image displayed on the third interface; and directions of the text blocks of the target text in the second image displayed on the third interface comprise at least two different directions, or directions of the text blocks of the target text in the second image displayed on the third interface are the same.

21. The method according to any one of claims 1 to 15, wherein the second image in the preview stream comprises at least one third region and a fourth region, and the third region is a region formed by text blocks of the target text; a distance between two third regions in at least one pair of adjacent third regions is greater than a preset distance; the fourth region is a peripheral region of a region formed by the at least one third region; and directions of the text blocks of the target text in the second image in the preview stream comprise at least two different directions; and
the second image displayed on the third interface comprises the at least one third region and does not comprise the fourth region, and the text block of the target text in the second image displayed on the third interface is highlighted; each distance between adjacent third regions in the second image displayed on the third interface is less than the preset distance; a background color of the text block of the target text in the second image in the preview stream is different from a background color of the text block of the target text in the second image displayed on the third interface; and directions of the text blocks of the target text in the second image displayed on the third interface are the same.

22. The method according to any one of claims 1 to 15, wherein the second image in the preview stream comprises a fifth region and a sixth region, the fifth region is a region formed by text blocks of the target text and comprises a background image, and the sixth region is a peripheral region of the fifth region; and directions of the text blocks of the target text in the second image in the preview stream comprise at least two different directions; and
the second image displayed on the third interface comprises the fifth region and does not comprise the sixth region, and the text block of the target text in the second image displayed on the third interface is highlighted; and a background color of the text block of the target text in the second image in the preview stream is different from a background color of the text block of the target text in the second image displayed on the third interface.

23. The method according to any one of claims 1 to 22, wherein in response to that a first location in the fourth window is triggered, an image in the fourth window is zoomed in with the first location as a center point at a first ratio at a fourth moment, and the first location is any location in the second image in the fourth window;
in response to that a second location in the fourth window is triggered, an image in the fourth window is zoomed in with the second location as a center point at a second ratio at a fifth moment, and the second location is any location in the second image in the fourth window; wherein the fifth moment is later than the fourth moment; and
in response to that a third location in the fourth window is triggered, an image in the fourth window is zoomed out to a size that is before the fourth moment at a sixth moment, and the third location is any location in the second image in the fourth window; wherein the sixth moment is later than the fifth moment.

24. The method according to any one of claims 1 to 22, wherein in response to that a fourth location in the fourth window is triggered, an image in the fourth window is zoomed in with the fourth location as a center point at a third ratio at a seventh moment, and the fourth location is any location in the second image in the fourth window; and
in response to that a fifth location in the fourth window is triggered, a size of the image in the fourth window is recovered at an eighth moment, and the fifth location is any location in the second image in the fourth window; wherein the eighth moment is later than the seventh moment.

25. The method according to any one of claims 1 to 22, wherein in response to that a first text block in the fourth window is triggered, an image in the fourth window is zoomed in at a ninth moment; wherein the longest text block in the zoomed-in image after the ninth moment reaches the edge of the screen of the terminal device; and
in response to that a sixth location in the fourth window is triggered, the image in the fourth window is recovered to an original image size of the image at a tenth moment, and the sixth location is any location in the second image in the fourth window; wherein the tenth moment is later than the ninth moment.

26. The method according to any one of claims 1 to 22, wherein in response to that a second text block in the fourth window is triggered, an image in the fourth window is zoomed in at an eleventh moment; wherein the second text block in the zoomed-in image after the eleventh moment reaches the edge of the screen of the terminal device;
in response to that a third text block in the fourth window is triggered, an image in the fourth window is zoomed in at a twelfth moment; wherein a length of the third text block is less than a length of the second text block, the third text block in the zoomed-in image after the twelfth moment reaches the edge of the screen of the terminal device, and the twelfth moment is later than the eleventh moment;
in response to that the third text block in the fourth window is triggered, the image in the fourth window is recovered to an image size that is before the twelfth moment at a thirteenth moment; wherein the second text block in the zoomed-out image after the thirteenth moment reaches the edge of the screen of the terminal device, and the thirteenth moment is later than the twelfth moment; and
in response to that a seventh location in the fourth window is triggered, the image in the fourth window is recovered to an original image size of the image at a fourteenth moment, wherein the seventh location has no target text, and the fourteenth moment is later than the eleventh moment.

27. The method according to any one of claims 1 to 26, after the displaying a fourth interface, further comprising: displaying, by the terminal device, the second interface in response to that the seventh button on the fourth interface is triggered; and
after the displaying a fourth interface, further comprising: obtaining, by the terminal device, a frame image in the preview stream again in response to that the eighth button on the fourth interface is triggered.

28. A terminal device, comprising: a processor and a memory, wherein
the memory stores computer-executable instructions; and
the processor executes the computer-executable instructions stored in the memory, to cause the terminal device to perform the method according to any one of claims 1 to 27.

29. A computer-readable storage medium, storing a computer program, wherein when the computer program is executed by a processor, the method according to any one of claims 1 to 27 is performed.

30. A computer program product, comprising a computer program, wherein the computer program, when run, causes a computer to perform the method according to any one of claims 1 to 27.
